# EUROPÄISCHE PATENTSCHRIFT

(11) **EP 1 838 492 B1**
(45) Veröffentlichungstag und Bekanntmachung des Hinweises auf die Patenterteilung: **17.02.2010**
(21) Anmeldenummer: 05815743.9
(22) Anmeldetag: 14.12.2005
(51) Int. Cl.: B23K 37/047, B23P 21/00, B23K 26/02, B23K 26/08, B23K 26/42, F16B 11/00, B23K 1/00, B23K 1/005, B23K 10/02, B23K 15/00, B65G 17/12, B65G 17/24

(54) **FERTIGUNGSANLAGE UND VERFAHREN ZUM FÜGEN VON TEILEN**
INSTALLATION FOR PRODUCING AND METHOD FOR ASSEMBLING PARTS
INSTALLATION DE PRODUCTION ET PROCEDE D'ASSEMBLAGE DE PIECES

(30) Priorität: 29.12.2004 AT 21922004
(43) Veröffentlichungstag der Anmeldung: 03.10.2007
(60) Teilanmeldung: 09015343.8
(73) Patentinhaber: STIWA Holding GmbH, 4800 Attnang-Puchheim (AT)
(72) Erfinder: HEIML, Roland, A-4870 Vöcklamarkt (AT); REBHAN, Thomas, A-4680 Haag am Hausruck (AT); PAUDITZ, Michael, A-4690 Schwanenstadt (AT); BITTENDORFER, Markus, A-4813 Altmünster (AT)
(74) Vertreter: Ofner, Clemens
(86) Internationale Anmeldenummer: PCT/AT2005/000501
(87) Internationale Veröffentlichungsnummer: WO 2006/069410

(56) Entgegenhaltungen:
- EP-A- 1 384 550
- EP-A1- 0 438 988
- WO-A-03/012833
- DE-A1- 10 018 422
- DE-A1- 10 206 887
- GB-A- 2 293 339
- GB-A- 2 320 698
- JP-A- 10 166 183
- US-A- 4 010 533
- US-A- 4 738 154
- US-A- 4 738 387
- US-A- 5 498 849
- US-B1- 6 170 732

## Beschreibung

Die Erfindung betrifft ein Verfahren zum Herstellen einer Fügeverbindung zwischen Teilen, wie im Oberbegriff des Anspruches 1 beschrieben.

Aus der EP 1 384 550 A1 ist eine Spanneinheit bekannt, die ein feststehendes und ein mittels Servoantrieb bewegliches Spannwerkzeug umfasst, zwischen denen Bleche abschnittsweise spannbar sind. Die Spanneinheit ist an einem Roboterarm angeflanscht und kann durch den Roboter im Bereich der Reichweite des Roboterarms beliebig im Raum positioniert werden. Auf der Spanneinheit, insbesondere am beweglichen Spannwerkzeug, ist eine Führung angebracht, entlang der ein Strahlschweißkopf, beispielsweise ein Laser- oder Plasmaschweißkopf, geführt und relativ zum Spannwerkzeug bewegt werden kann. Der Strahlschweißkopf wird mittels eines Schweißantriebes, insbesondere Servoantriebes, bewegt. Die aneinanderliegenden Bleche werden vorerst über die Spannwerkzeuge zumindest abschnittsweise gespannt und der Strahlschweißkopf entlang der Führung relativ zur Spanneinheit bewegt und dabei die Bleche miteinander verschweißt. Der Servoantrieb für das bewegliche Spannwerkzeug ist mit einer elektronischen Auswerteeinheit verbunden, mittels der die Spannkraft und/oder der Verfahrweg des beweglichen Spannwerkzeuges erfasst und ausgewertet wird. Damit lässt sich z.B. eine Überwachungsfunktion im Sinne einer Qualitätssicherung oder eine kontrollierte Verspannung der Bleche erreichen.

Die DE 102 06 887 A1 beschreibt ein Verfahren zum Laserschweißen von Blechformteilen, bei dem die Blechformteile eines Türholmes zwischen zwei mittels stufenlos steuerbaren Servomotoren relativ zueinander verstellbaren Spannwerkzeugen verbracht und gespannt werden. Das Spannen der Blechformteile erfolgt lage- und/oder kraftgeregelt in Abhängigkeit vom Soll-Istwert-Vergleich der Maße und/oder der Oberflächen des geschweißten Blechformteiles. Über einen Sensor wird die Istposition der Oberflächen des Türholmes erfasst und an einen Regler eingegeben, von dem die Sollwerte für die Position aus den Sollmaßen des Türholmes vorgegeben werden. Weicht der Istwert für die Position vom Sollwert für die Position ab, wird zumindest eines der Spannwerkzeuge gegen die Oberfläche des Türholmes angestellt. Durch elektronische Steuerungen der Servomotoren werden aus den ausgeübten Drehmomenten die Auflagekräfte der Spannwerkzeuge auf die Oberflächen des Türholmes ermittelt und an den Regler gemeldet. Durch Soll-Istwert-Vergleiche im Regler, werden den elektronischen Steuerungen der Servomotoren entsprechende Korrekturwerte eingegeben. Nachteilig ist, dass ausschließlich über den Sensor die Position des Türholmes bestimmt wird und infolge des rauen Betriebes in der Fertigung damit gerechnet werden muss, dass die Sensoren Fehlmessungen liefern können und deshalb das Spannen und Schweißen der Blechformteile fehlerhaft sein kann.

Der Erfindung liegt die Aufgabe zugrunde, ein Verfahren zum Herstellen einer Verbindung zwischen Teilen zu schaffen, mit der eine Produktionsüberwachung erfolgen und der Produktionsprozess verbessert werden kann.

Die Aufgabe der Erfindung wird durch die im Kennzeichenteil des Anspruches 1 angegebene Maßnahme gelöst. Von Vorteil ist, dass in der Fügestation nur jene Teile einem weiteren Arbeitsprozess zugeführt werden, deren Qualitätsmerkmal den Qualitätsanforderungen entsprechen und weitere Teile erst gar nicht gespannt werden, wenn der vorhergehend gespannte Teil von den Qualitätsanforderungen abweicht. Hierzu werden von einer Auswerteeinheit die Istwerte der Spannkraft und/oder des Verfahr- und Spannweges eines beweglichen Spannwerkzeuges einer jeden Spanneinheit erfasst und das Qualitätsmerkmal, insbesondere die Maßhaltigkeit, für jeden Teil ermittelt. Die Auswertung des Qualitätsmerkmales erfolgt alleinig anhand der während dem Positionier- und Spannvorgang eines Teiles ohnehin erfassten Istwerte der Spannkraft und/ oder des Verfahr- und Spannweges. Darüber hinaus kann von der Auswerteeinheit anhand dem erfassten Istwert für die Spannkraft auf den in die Spannposition bewegten Teil und/oder den vom Spannwerkzeug zurückgelegten Verfahr- und Spannweg die Abmessung, beispielsweise Länge, des Teiles ermittelt werden. Dadurch können Messwertprotokolle für ein Qualitätssicherungssystem automatisch erstellt werden.

Nach einer vorteilhaften Maßnahme nach Anspruch 2 sind der Sollwert für die Spannkraft und des zurückzulegenden Verfahr- und Spannweges des verstellbaren Spannwerkzeuges durch ein Toleranzfenster definiert vorgegeben, das so festgelegt ist, dass der nachfolgende Fügevorgang, beispielsweise das Strahlschweißen, noch ordnungsgemäß durchgeführt werden kann. Mit anderen Worten wird durch das gewählte Fügeverfahren eine maximale Abweichung eines Qualitätsmerkmals, insbesondere der Maßhaltigkeit, durch das Toleranzfenster vorgeben, innerhalb dem noch ein ausreichend genaues Fügeergebnis erreicht wird. Damit wird ein robuster Produktionsprozess bereitgestellt, der Ausschuss und die durchschnittlichen Produktionszeiten verringert.

Nach Anspruch 3 werden die Teile nur dann gefügt, wenn ein vorgeschriebenes Qualitätsmerkmal eines jeden Teiles eingehalten wird. Dadurch wird die Fügestation nicht durch unnotwendige Spann- und Fügevorgänge blockiert und ein als "Schlechtteil" verifizierter Teil aus der Fügestation entfernt.

Die Maßnahme nach Anspruch 4 erweist sich als Vorteil, da vor der Inbetriebnahme der Fügestation aus praktischen Versuchungen zuverlässige Werte für die Unter- und Obergrenze der Spannkraft und/oder des Verfahr- und/oder Spannweges ermittelt werden können.

Von Vorteil ist auch die Maßnahme nach Anspruch 5, wodurch die ohnehin während dem Spann- und Fügevorgang elektronisch erfassten Daten von einer Fügestation zur Ansteuerung weiterer Spann- und Fügevorgänge in derselben oder einer anderen Fügestation herangezogen werden können und deshalb auf mögliche Toleranzabweichungen reagiert werden kann, sodass Ungenauigkeiten bei Maßen und Formen der Baugruppe korrigiert werden und eine vorgeschriebene Endqualität der Baugruppe eingehalten wird. Zweckmäßig werden die Daten in einer Datenbank abgespeichert und die aus einer bestimmten Anzahl von Spann- und Fügevorgängen ermittelten Daten statistisch ausgewertet und anhand der Auswertung eine Anpassung der Unter- und/oder Obergrenze vorgenommen. In vorteilhafter Weise werden die Unter- und Obergrenze des Toleranzfensters automatisch verändert, ohne manuellen Angriff in den Verfahrensablauf der Fügestation. Eine solche Fügestation zeichnet sich durch ihre hohe Flexibilität aus. Soll der Steuerungsaufwand gering gehalten werden, wäre es aber auch genauso gut möglich, die Unter- und/oder Obergrenze des Toleranzfensters durch manuelle Eingabe in die Steuereinrichtung der Auswerteeinheit zu korrigieren.

Eine weitere vorteilhafte Maßnahme ist in Anspruch 6 beschrieben, wonach am fertig gefügten Endprodukt Abweichungen von Qualitätsmerkmalen ermittelt und die Unter- und/oder Obergrenze des Toleranzfensters von der Steuereinrichtung mit Korrekturwerten beaufschlagt werden. Zweckmäßig werden aus einer bestimmten Anzahl von Endprodukten Messwerte ermittelt und statistisch ausgewertet und anhand der Auswertung eine Anpassung der Unter- und/oder Obergrenze vorgenommen.

Von Vorteil ist auch die Maßnahme nach Anspruch 7, bei der aus dem ausgeübten Drehmoment eines Elektromotors die Spannkraft mit hoher Genauigkeit ausgewertet wird. Zusätzliche Sensoren zur Erfassung der Spannkraft und/oder des Verfahr- und Spannweges können entfallen. Die erfassten Messwerte werden für eine weitere Bearbeitung beispielsweise an eine Steuereinrichtung weitergegeben.

Nach Anspruch 8 wird von der Auswerteeinheit aus dem ausgeübten Drehmoment eines Elektromotors die zu überwindende Reibkraft an der Antriebseinheit erfasst. Somit können einerseits die systembedingte Reibung und andererseits die durch die Gewichtskraft von Teilen hervorgerufene Reibung berücksichtigt werden.

Die in den Ansprüchen 9 und 10 beschriebenen Maßnahmen ermöglichen eine besonders einfache Ansteuerung der die Spannwerkzeuge aufweisenden Spanneinheiten.

Gemäß der in Anspruch 11 beschriebenen Maßnahme werden unabhängig von Maßabweichungen der miteinander zu fügenden Teile stets dieselbe Spannposition der Teile und der zwischen diesen ausgebildeten Fügestelle zentrisch gegenüber die Fügestation eingenommen. Dadurch muss eine Fügeeinrichtung, insbesondere ein Strahlschweißkopf oder Kleberzuführkopf, ausschließlich nach einer einmalig programmierten Bewegungsbahn verfahren und werden dabei die Teile an der Fügestelle ordnungsgemäß miteinander verbunden.

Von Vorteil ist auch die Maßnahme nach Anspruch 12, da der Verfahrweg zwischen der Ausgangs- und Zwischenposition naturgemäß größer ist als der Spannweg und deshalb der Zeitaufwand für die Zustellung de(r)s Spannwerkzeuge(s) aus der Ausgangsposition in die Zwischenposition in Grenzen gehalten wird, sodass die durchschnittliche Taktzeit für den Positionier- und Spannvorgang der Teile verkürzt und eine hohe Prozesssicherheit erreicht wird.

Von Vorteil ist auch die Maßnahme nach Anspruch 13, wodurch eine lastmomentabhängige Regelung der Verfahrgeschwindigkeit des(r) verstellbaren Spannwerkzeuge(s) erfolgt. Die Verfahrgeschwindigkeit jedes Spannwerkzeuges wird stets in Abhängigkeit vom Kraftanstieg beim Positionier- und Spannvorgang geregelt. Nur mit zunehmendem Kraftanstieg wird die Verfahrgeschwindigkeit des Spannwerkzeuges zunehmend verringert. Verläuft hingegen der Kraftanstieg annähernd konstant, wird auch die Verfahrgeschwindigkeit des Spannwerkzeuges annähernd konstant gehalten. Mit abnehmender Spannkraft wird die Verfahrgeschwindigkeit des Spannwerkzeuges zunehmend erhöht. Auf diese Weise wirken die Qualitätsmerkmale, insbesondere die Maßhaltigkeit, der zu positionierenden und spannenden Teile auf die Verfahrgeschwindigkeit der Spannwerkzeuge ein und wird eine Taktzeitoptimierung des Spannsystems erreicht.

Von Vorteil ist auch die Maßnahme nach Anspruch 14, wodurch die Ansteuerung der Spanneinrichtungen wesentlich vereinfacht wird.

Ein wesentlicher Vorteil der Erfindung liegt auch in der Maßnahme nach Anspruch 15, da die miteinander zu fügenden Teile in der Fügestation stets in die jeweils durch das Toleranzfenster vorgegebenen Spannpositionen positioniert und in diesen fixiert werden. Somit kann ohne langwierige Positioniervorgänge der Fügeeinrichtung gegenüber die Fügestelle vornehmen zu müssen, das Fügen der Teile erfolgen. Die Positionierung der Fügeeinrichtung basiert auf der Kenntnis, dass die Fügestelle zwischen miteinander zu fügenden Teilen stets innerhalb zulässiger Toleranzgrenzen liegt, wenn die Teile den Qualitätsanforderungen entsprechen. Eine Überprüfung der exakten Lage der Fügestelle in zeitintensiven, sensorunterstützten Suchvorgängen kann entfallen, womit die Taktzeit für den Fügevorgang erheblich minimiert werden kann. Dies ergibt zudem noch den Vorteil, dass die Bewegungsfreiheit der Fügeeinrichtung uneingeschränkt ist und auch kleinere Baugruppen problemlos hergestellt werden können, da der Sensor für die Suche der Fügestelle entfällt.

Die Erfindung wird im nachfolgenden anhand der in den Zeichnungen dargestellten Ausführungsbeispiele näher erläutert.

Es zeigen:
- Fig. 1: die Teile einer aus diesen herzustellenden Baugruppe, in perspektivischer Ansicht und vereinfachter Darstellung;
- Fig. 2: einen Abschnitt einer aus den in Fig. 1 dargestellten Teilen zusammengefügten Baugruppe, in perspektivischer Ansicht und vereinfachter Darstellung;
- Fig. 3: eine Draufsicht auf ein erfindungsgemäße Fertigungssystem mit einer ersten und zweiten Fertigungsanlage, in vereinfachter Darstellung;
- Fig. 4: eine beispielhafte Ausführung einer Transporteinrichtung der Fertigungsanlagen nach Fig. 3, in Seitenansicht und stark vereinfachter Darstellung;
- Fig. 5: die Fertigungsanlage in Stirnansicht, geschnitten, gemäß den Linien V-V in Fig. 4;
- Fig. 6: eine vergrößerte Darstellung eines Teiletransportträgers mit Aufnahme für die Transporteinrichtung, in Seitenansicht und stark vereinfachter Darstellung;
- Fig. 7: einen Teilbereich einer durch die Teiletransportträger gebildeten Transportkette der Transporteinrichtung nach Fig. 4, in Draufsicht und stark vereinfachter Dar- stellung;
- Fig. 8: eine beispielhafte Ausführung einer Teilebereitstellung in Form einer Zuförder- einrichtung mit Hilfsteiletransportträgem, in Seitenansicht und stark vereinfachter Darstellung;
- Fig. 9: die Zufördereinrichtung nach Fig. 8 in Stirnansicht, teilweise geschnitten und stark vereinfachter Darstellung;
- Fig. 10: eine perspektivische Ansicht einer Fügestation der ersten Fertigungsanlage, stark vereinfacht dargestellt;
- Fig. 11: ein Antriebssystem für eine Schweißvorrichtung der Fügestation nach Fig. 10, in stark vereinfachter Darstellung;
- Fig. 12: einen Teilabschnitt der Transporteinrichtung ohne Teiletransportträger und zu beiden Seiten von dieser angeordnete Zustellachsen sowie die Antriebseinheiten für Spanneinrichtungen eines Spannsystems der Fügestation nach Fig. 10, in stark vereinfachter Darstellung;
- Fig. 13: ein Spannsystem der in Fig. 10 dargestellten Fügestation, in Seitenansicht und stark vereinfachter Darstellung;
- Fig. 13a: einen Teilbereich des in Fig. 13 dargestellten Spannsystems in vergrößerter und vereinfachter Darstellung;
- Fig. 14: eine Draufsicht auf das Spannsystem nach Fig. 13, in stark vereinfachter Darstel- lung;
- Fig. 14a: ein Teilabschnitt des Spannsystems nach Fig. 14 in vergrößerter und stark verein- fachter Darstellung;
- Fig. 15: eine Ausführung einer Höhenpositioniervorrichtung der Spanneinrichtung der Spanneinheit, in Seitenansicht und stark vereinfachter Darstellung;
- Fig. 16: eine andere Ausführung der Höhenpositioniervorrichtung für die Spanneinrich- tungen der Spanneinheit, in Seitenansicht und stark vereinfachter Darstellung;
- Fig. 17: eine Ansicht auf die Höhenpositioniervorrichtung nach Fig. 16, in stark verein- fachter Darstellung;
- Fig. 18a bis 18f: der Positionier- und Spannvorgang von zwei miteinander zu verbinden- den Teile in aufeinander folgenden Verfahrensschritten in der ersten Fer- tigungsanlage, in unterschiedlichen Ansichten und stark vereinfachter Darstellung;
- Fig. 19a bis 19c: der Positionier- und Spannvorgang einer Baugruppe und mit dieser zu verbindenden, weiteren Teil in aufeinander folgenden Verfahrensschrit- ten in der zweiten Fertigungsanlage, in unterschiedlichen Ansichten und stark vereinfachter Darstellung;
- Fig. 20: ein Diagramm mit dem Verlauf der Spannkraft über den Spann- und Verfahrweg eines Spannwerkzeuges und Auswertung des Spannvorganges als Gutteil;
- Fig. 21: ein Diagramm mit dem Verlauf der Spannkraft über den Spann- und Verfahrweg eines Spannwerkzeuges und Auswertung des Spannvorganges als Schlechtteil;
- Fig. 22: ein Diagramm mit dem Verlauf der Spannkraft über den Spann- und Verfahrweg eines Spannwerkzeuges und Auswertung des Spannvorganges als Schlechtteil.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

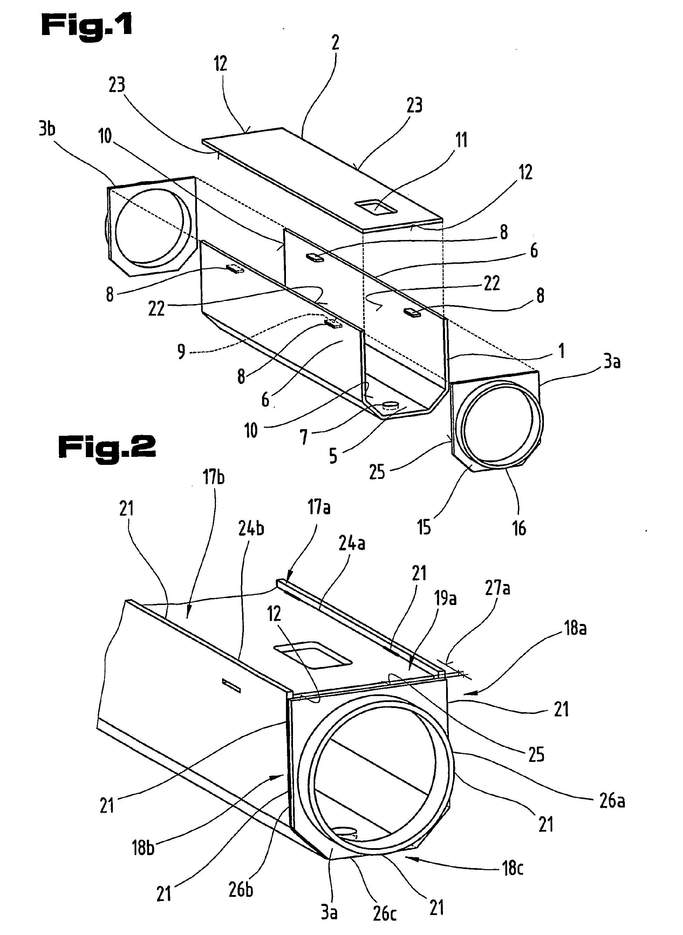

In der Fig. 1 sind die zu einer Baugruppe miteinander zu fügenden, einzelnen Teile 1, 2, 3a, 3b in perspektivischer Ansicht gezeigt. Diese Teile 1 bis 3b sind in einer bevorzugten Ausführung jeweils aus einem nach Maß zugeschnittenen, insbesondere gestanzten und anschließend umgeformten Blechstück hergestellt. Der erste Stanz- und Biegeteil 1 ist im Querschnitt etwa trapezförmig bzw. im Wesentlichen U-förmig ausgebildet und weist eine Basis 5 und zwei von ihr aufragende Schenkel 6 auf. An der Basis 5 ist eine beispielsweise kreisrunde Positionieröffnung 7 angeordnet, deren Funktion später noch erläutert wird. Die Schenkeln 6 sind jeweils im Bereich ihrer gegenüberliegenden Stirnenden mit in Richtung des gegenüberliegenden Schenkels 6 an der Innenseite des U-formigen Teiles 1 vorspringenden Auflagefortsätzen 8 versehen, deren Funktion später noch genauer beschrieben wird. Diese Auflagefortsätze 8 sind zweckmäßig durch Umformen hergestellte, sickenartige Vertiefungen und weisen auf ihrer der Basis 5 abgewandten Oberseite eine parallel zur Basis 5 verlaufende, ebene Auflagefläche 9 auf Außerdem bildet der erste Teil 1 stirnseitig, ebene Anlageflächen 10 für die Teile 3a, 3b aus.

Der zweite Teil 2 ist nach dieser Ausführung aus einem im Wesentlichen flachen Blechstück ausgeschnitten, beispielsweise mittels einer Platine ausgestanzt, und ebenflächig ausgebildet. Zusätzlich ist der zweite Teil 2 mit einer beispielsweise schlitzartigen Positionieröffnung 11 ausgestattet und bildet stirnseitig Anlageflächen 12 für die Teile 3a, 3b aus. Die Länge des ersten und zweiten Teiles 1, 2 sind, abgesehen von den möglichen Herstelltoleranzen beim Stanzen etc., mit gleicher Länge hergestellt.

Die Teile 3a, 3b weisen eine ebenflächige Tragplatte 15 und eine Hülse 16 auf. Hierzu werden die Teile 3a, 3b jeweils aus einem nach Maß zugeschnittenen, vorzugsweise gestanzten Blechstück und in diesem durch Umformen, vorzugsweise durch Tiefziehen, ausgeformte Hülse 16 hergestellt. Die Hülsen 16 bilden jeweils ein Lagerauge für ein nicht weiters dargestelltes Lager, das beispielsweise eingepresst ist.

Alle Teile 1 bis 3b sind somit durch reine, spanlose Formgebung und Verformung mit hoher Präzision hergestellt, sodass auch die aus den einzelnen Teilen 1 bis 3b gefügte Baugruppe, wie sie in Fig. 2 abschnittsweise dargestellt ist, durch Verwendung geeigneter Fügeverfahren, wie Kleben, Laserlöten, Laser-, Plasma- und Elektronenstrahlschweißen, mit hoher Maßgenauigkeit hergestellt werden kann.

Wenngleich die spanlose Herstellung der Teile 1 bis 3b nach dem Stanzverfahren als die bevorzugte Ausführung gilt, wäre es auch denkbar, dass diese aus einem mit dem Laser oder Wasserstrahl ausgeschnittenen Blechstück hergestellt sind.

Auch sei an dieser Stelle darauf hingewiesen, dass die in den Fig. 1 und 2 gezeigten einzelnen Teile 1 bis 3b und die aus diesen hergestellte Baugruppe keineswegs als Einschränkung der Erfindung gelten, sondern vielmehr je nach Verwendungsgebiet der Baugruppe unterschiedliche Geometrien annehmen und die Teile 1 bis 3b auf unterschiedliche Weise hergestellt werden können. So könnten die nach dem Verfahren des Kaltumformens hergestellten Teile 1, 3a, 3b anderenfalls auch durch einen Massivumformteil gebildet sein, beispielsweise ein Schmiedeteil, der durch Warm- oder Kaltschmieden maßgenau hergestellt ist. Die Teile 1 bis 4 sind aus Stahl oder Kunststoff gebildet. Sind die Teile aus Kunststoff, so sind diese im Spritzguss- und/oder Extrusionsverfahren hergestellt.

Wie in Fig. 2 hergestellt, werden die Teile 1 bis 3b an mehreren Fügestellen 17a, 17 b, 18a, 18b, 18c, 19a, 19b (nicht eingetragen) durch eine oder bevorzugt mehrere Fügenähte 21 zumindest abschnittsweise zusammengefügt. Die Fügenähte 21 sind durch Klebe- oder Schweißnähte, insbesondere Laser-, Plasma- oder Elektronenstrahlschweißnähte gebildet und weisen eine Länge von einigen Millimetern bis einigen Zentimetern auf.

Der zweite Teil 2 ist zwischen den Schenkeln 6 des ersten Teiles 1 angeordnet und werden mittels noch näher zu beschreibenden Spanneinrichtungen die Schenkeln 6 des ersten Teiles 1 und Längsränder des zweiten Teiles 2 gegeneinander angepresst. Hierzu sind die Schenkeln 6 und der zweite Teil 2 auf ihren einander zugewandten Seiten mit Anlageflächen 22, 23 versehen. Die miteinander zu verschweißenden Teile 1, 2 bilden nun an den Fügestellen 17a, 17b durch die im Wesentlichen spaltfrei aneinanderstoßenden Anlageflächen 22, 23 der Teile 1, 2 je einen Fügestoß 24a, b aus. Die beiden Teile 1, 2 werden über die entlang der Fügestöße 24a, 24b anzubringenden Fügenähte 21 zusammengefügt.

Die Teile 3a, 3b werden mit der Stirnseite des ersten Teiles 1 verbunden. Hierzu ist der Teil 3a, 3b auf seiner, dem ersten Teil 1 zugewandten Seite und der erste Teil 1 an seiner Stirnseite mit aufeinander zugewandten Anlageflächen 10, 25 versehen. Die Teile 3a, 3b werden über noch näher zu beschreibende Spanneinrichtungen mit ihren Anlageflächen 25 gegen die Anlageflächen 10 des ersten Teiles 1 angepresst, sodass die nun im Wesentlichen spaltfrei aneinanderliegenden Anlageflächen 10, 25 einen Fügestoß 26a, 26b, 26c an den Fügestellen 18a, 18b, 18c ausbilden. Die Teile 1, 3a, 3b werden über die entlang der Fügestöße 26a, 22b, 26c anzubringenden Fügenähte 21 zusammengefügt.

Auch wenn das Stanzen und Umformen der Teile 1 bis 3b eine hohe Maßgenauigkeit erlauben, können geringfügig Maßungenauigkeiten auftreten. Diese Ungenauigkeiten können dazu führen, dass zwischen den einander zugewandten Anlageflächen 12, 25 der Teile 2, 3a, 3b ein Fügespalt 27a, 27b (nicht eingetragen) entsteht. In der Praxis hat sich gezeigt, dass dieser Fügespalt 27a, 27b in einem Ausmaß von bis zu 0,2 mm auch dann keine Auswirkung auf die Qualität der Schweißverbindung mit sich bringt, wenn ohne Zusatzmaterial geschweißt wird, da der Laserstrahl im Fokus ohnehin einen Durchmesser von etwa 0,3 bis 0,6 mm aufweist und an den Schweißabschnitten entlang der Verbindungsstelle 19a, 19b ausreichend Grundmaterial von den Teilen 2, 3a, 3b abgeschmolzen wird, um den Fügespalt 27a, 27b an den Schweißabschnitten zu schließen und eine tragfähige Schweißverbindung zu schaffen.

In einer bevorzugten Ausführung sind die Fügenähte 21 durch Strahlschweißen, insbesondere Laserstrahlschweißen, hergestellt und die Teile 1 bis 3b an den durch die spaltfrei aneinanderstoßenden Anlageflächen 10, 25, 22, 23 ausgebildeten Fügestößen 24a, 24b, 26a bis 26c oder Fügespalten 27a, 27b miteinander verschweißt. Hierzu wird, nachdem die Teile 1 bis 3b zueinander positioniert und fixiert wurden, ein nicht gezeigter Schweißstrahl entlang dem betreffenden Fügestoß 24a, 24b, 26a bis 26c oder Fügespalt 27a, 27b zumindest abschnittsweise geführt, sodass entlang dieser Schweißabschnitte Schweißnähte entstehen, die durch das von einem der miteinander zu verschweißenden Teile 1 bis 3b oder beiden der miteinander zu verschweißenden Teile 1 bis 3b bereichsweise aufgeschmolzene Grundmaterial (Werkstoff) besteht. Die enorme Energiedichte (etwa 10⁶ W/m²) des Schweißstrahls, insbesondere des Laserstrahls, im Fokus, bringt das Grundmaterial (Werkstoff) entlang der Schweißabschnitte zum Schmelzen. Während in Vorschubrichtung des Schweißstrahls Grundmaterial aufgeschmolzen wird, fließt dahinter die Schmelze von den zu verschweißenden Teilen ineinander. Der aufgeschmolzene und durchmischte Werkstoff kühlt ab und die Schmelze erstarrt zu einer schmalen Schweißnaht.

Das Strahlschweißen ist ein energiearmes Schweißverfahren, mit dem ein sogenanntes "Tief schweißen" möglich ist und sich dadurch auszeichnet, dass sehr schlanke Nahtgeometrien mit einem großen Tiefen-Breiten-Verhältnis erreicht werden und nur eine geringe Streckenenergie erforderlich ist, wodurch eine nur sehr kleine Wärmeeinflusszone resultiert. Dadurch wird die thermische Belastung auf die miteinander zu verschweißenden Teile 1 bis 3b sehr gering gehalten, sodass auch ein Verzug der Teile 1 bis 3b minimal ist. Die Schweißnähte 21 an den Fügestößen 24a, 24b sind durch Kehlnähte und die Schweißnähte 21 an den Fügestößen 26a bis 26c und an den Fügespalten 27a, 27b durch I-Nähte gebildet.

In der Serienfertigung der Baugruppe, wird vorwiegend das Laserschweißen, insbesondere mit einem Festkörperlaser, beispielsweise Nd: YAG-Laser eingesetzt, der vor allem eine hohe Flexibilität der noch näher zu beschreibenden Schweißstation ermöglicht. Die Teile 1 bis 3b sind vorzugsweise ausschließlich durch das Grundmaterial ohne Zusatzwerkstoff unlösbar miteinander verbunden.

Natürlich wäre es auch denkbar, dass die Teile 1 bis 3b durch die unter Beisatz von Zusatzwerkstoff und das bereichsweise aufgeschmolzene Grundmaterial zumindest eines Teiles 1 bis 3b oder beider Teile 1 bis 3b hergestellte Schweißnähte am jeweiligen Fügestoß 24a, 24b, 26a bis 26c oder Fügespalt 27 miteinander verbunden sind.

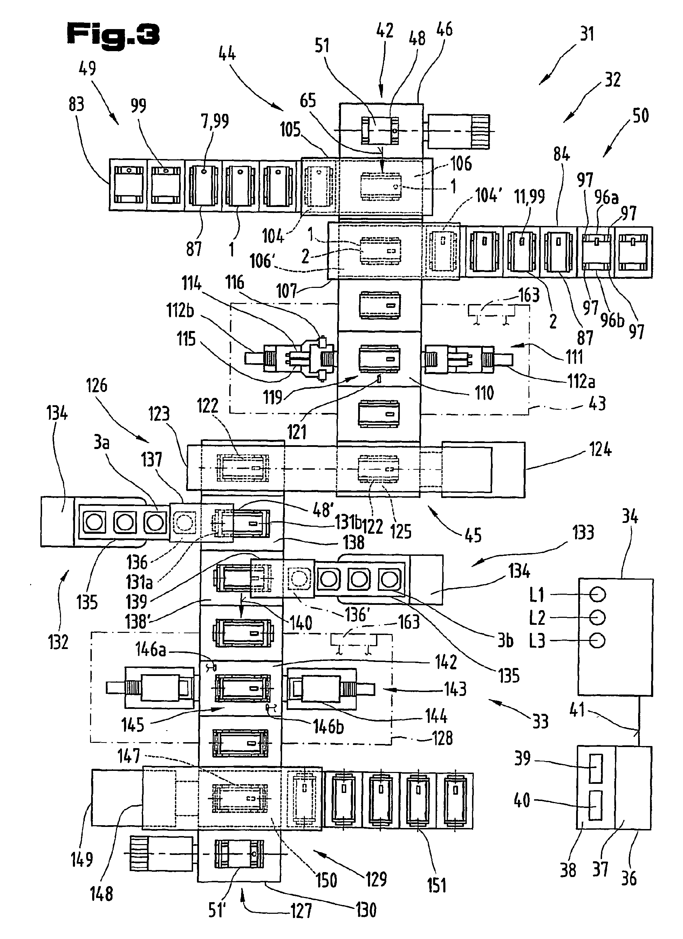

In Fig. 3 ist ein erfindungsgemäßes Fertigungssystem 31 zur Herstellung der in Fig. 2 beispielsweise, dargestellten Baugruppe in Draufsicht und stark vereinfachter Darstellung gezeigt. Dieses Fertigungssystem 31 umfasst nach dieser Ausführung zumindest zwei unmittelbar hintereinander angeordnete, zusammenwirkende Fertigungsanlagen 32, 33, eine Energiequelle 34, insbesondere Lasergenerator, sowie eine Steuereinrichtung 36. Die Steuereinrichtung 36 umfasst eine Energiequelle 37 und eine Auswerteeinheit 38 mit einem Vergleichsmodul 39 für den Soll-Istwert-Vergleich einer Spannkraft und/oder eines Verfahr- und Spannweges eines Spannwerkzeuges und einem Auswertemodul 40 für eine Qualitätsbeurteilung eines Teiles 1 bis 3b, wie dies im Nachfolgenden noch näher beschrieben wird. Die Steuereinrichtung 36 ist mit der Energiequelle 34 über eine Verbindungsleitung 41 verbunden.

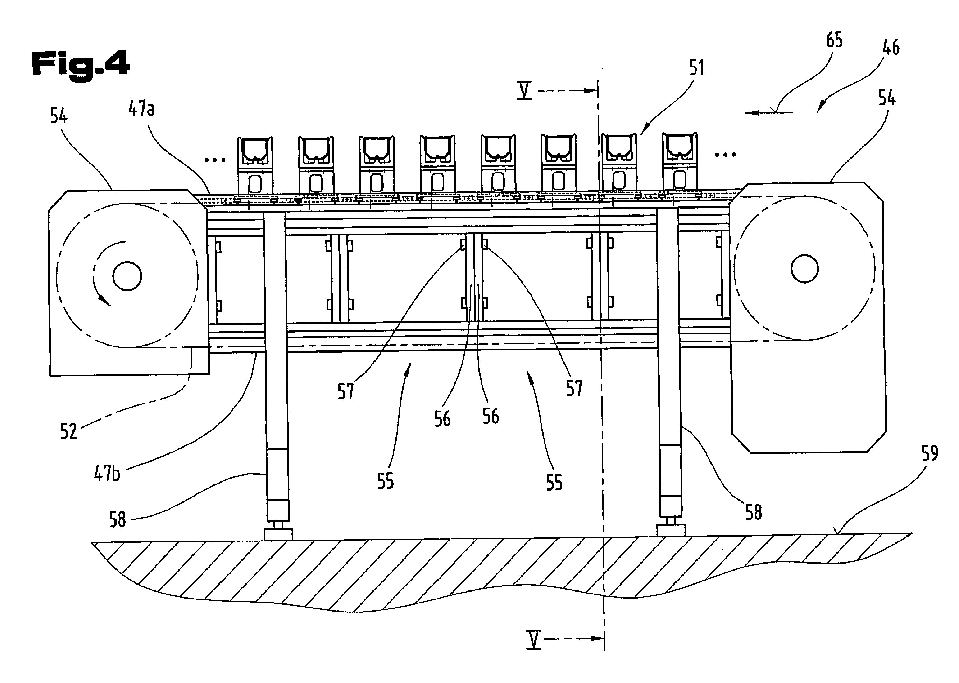

Die erste Fertigungsanlage 32 umfasst ein erstes Transportsystem 42 und zumindest eine erste Fügestation 43, die nach dieser Ausführung durch eine Schweißstation gebildet ist. Das Transportsystem 42 dient der Beförderung von Teilen 1, 2 zur Fügestation 43 und umfasst eine sich zwischen einem Übernahmebereich 44 und einem Weitergabebereich 45 vorzugsweise geradlinig erstreckende, erste Transporteinrichtung 46 mit entlang von in den Fig. 4 bis 7 eingetragenen Führungsbahnen 47a, 47b verfahrbaren und vorzugsweise gleichartig ausgebildeten Teiletransportträgern 48 sowie zumindest eine Teilebereitstellung mit zwei voneinander getrennt angeordneten Teilespeicher 49, 50. Aus Gründen der besseren Übersicht, sind in Fig. 4 nur einige Teiletransportträger 48 dargestellt.

Eine beispielhafte Ausführung einer Transporteinrichtung 46 ist in den Fig. 4 bis 7 gezeigt. Zum Transport der Teile 1, 2 auf den Teiletransportträgern 48 sind Aufnahmen 51 vorgesehen, die mit dem Teiletransportträger 48 verbunden sind. Die Teiletransportträger 48 bilden im vorliegenden Ausführungsbeispiel eine Transportkette 52. Zum getakteten Vorschub der Transportkette 52 dient ein intermittierender Vorschubantrieb, insbesondere ein Elektromotor, wie Servo- oder Schrittschaltantrieb, der im Bereich einer Umlenkstation 54 für die Transportkette 52 angeordnet ist. Zwischen den beiden Umlenkstationen 54 befinden sich mehrere Gehäuseteile 55. Diese Gehäuseteile 55 weisen einander zugewandte Stirnplatten 56 auf, die untereinander über Führungs- und/oder Kupplungsvorrichtungen 57 zu einer selbsttragenden Gehäuseeinheit verbunden werden. Senkrecht zu den Stirnplatten 56 verlaufen die Führungsbahnen 47a, 47b, wobei in der Führungsbahn 47a der gezogene Strang und der Führungsbahn 47b der rücklaufende Strang der Transportkette 52 geführt ist.

Die aus den Umlenkstationen 54 und Gehäuseteilen 55 gebildete Transporteinrichtung 46 ist über Stützvorrichtungen 58 auf einer Aufstandsfläche 59 abgestützt. Die Stützvorrichtungen 58 werden durch spiegelbildlich zu einer vertikalen Symmetrieebene 60 angeordnete, L-förmige Stützen gebildet, die über Befestigungsvorrichtungen 61 mit Seitenwänden 62 der Gehäuseteile 55 verbunden sind.

Die Transporteinrichtung 46 umfasst, die aus den Gehäuseteilen 55 zusammengesetzte, selbsttragende Gehäuseeinheit, die auf der von der Aufstandsfläche 59 abgewandten Oberseite mit der Führungsbahn 47a ausgestattet ist. Die Führungsbahn 47a umfasst an der Gehäuseeinheit befestigte und parallel zur Oberseite derselben verlaufende Höhenführungsbahnen 63 für die Höhenführung der Kettenglieder bildenden Teiletransportträger 48 der Transportkette 52. Zusätzlich umfasst die Führungsbahn 47a parallel zur Oberseite der Gehäuseeinheit verlaufende Seitenfühnmgsbalmen 64 für die Seitenführung und der die Kettenglieder bildenden Transportteileträger 48. Die Höhenführungsbahnen 63 sind durch Führungsleisten gebildet. Die Seitenführungsbahnen 64 sind durch in Vorschubrichtung - gemäß Pfeil 65 - der Teiletransportträger 48 mit im Abstand voneinander angeordneten Stützrollen 66 und Druckrollen 67 gebildet. Die Stütz- und Druckrollen 66, 67 sind beidseits der Transportkette 52 angeordnet. Die Stützrollen 66 sind dabei einer ersten Seitenfläche 68 und die Druckrollen 67 einer dieser gegenüberliegenden, zweiten Seitenfläche 69 des Teiletransportträgers 48 zugeordnet. Die Druckrollen 67 sind konisch ausgebildet und wird durch diese auf die Teiletransportträger 48 eine quer zur Vorschubrichtung - gemäß Pfeil 65 - verlaufende und in Richtung der Stützrollen 66 ausgerichtete Druckkraft ausgeübt, sodass die Teiletransportträger 48 entlang der Führungsbahn 47a im wesentlich spielfrei geführt sind. Die exakte Höhenführung der Teiletransportträger 48 entlang der Führungsbahn 47a wird durch die Führungsleisten sichergestellt.

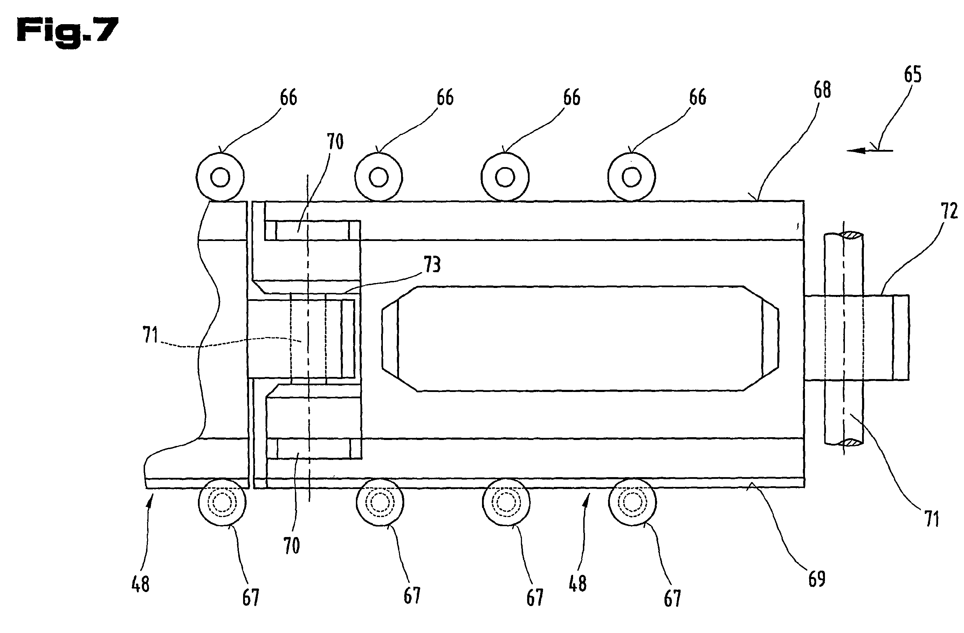

Die Teiletransportträger 48 sind über auf den Führungsleisten sich abwälzende Laufrollen 70 der Höhe nach abgestützt und geführt. Diese Laufrollen 70 sind auf einer als Kettenbolzen 71 dienenden Achse gelagert. Der Kettenbolzen 71 verbindet jeweils zwei unmittelbar aufeinander folgende Teiletransportträger 48. Jeder Teiletransportträger 48 umfasst jeweils stirnseitig einen Kupplungsfortsatz 72 sowie eine Kupplungsaufnahme 73. Der Kettenbolzen 71 ist am Kupplungsfortsatz 72 gelagert (wie in Fig. 7 dargestellt).

Es sei an dieser Stelle darauf hingewiesen, dass die beschriebene Transporteinrichtung 46 nur beispielhaft zu betrachten ist und nicht einschränkend gilt. Beispielsweise kann die Transporteinrichtung genauso gut durch die in der WO 02/072453 A2 offenbarte Transporteinrichtung gebildet sein. Diese bekannte Transporteinrichtung umfasst mehrere hintereinander angeordnete Transportabschnitte, von welchen jeden zumindest eine eigene, von den benachbarten Transportabschnitten unabhängige Vorschubvorrichtung für die Teiletransportträger und zumindest zwei quer zur Vorschubrichtung der Teiletransportträger voneinander distanzierte Führungsbahnen zugeordnet ist, entlang welcher die Teiletransportträger mit an seinen einander gegenüberliegenden Seiten angeordneten Führungsorganen geführt und über die jeweilige Vorschubvorrichtung verfahrbar ausgebildet ist. Somit können die einzelnen Teiletransportträger 48 unabhängig voneinander zwischen den einzelnen Transportabschnitten verfahren, wobei in einem der Transportabschnitte die Fügestation 43 angeordnet ist. Dieser Transportabschnitt entspricht einer geradlinigen Transporteinrichtung.

Hinsichtlich der Ausbildung der einzelnen Transportabschnitte und der Teiletransportträger wird die diesbezügliche, detaillierte Offenbarung aus der WO 02/072453 A2 zum Gegenstand dieser Offenbarung gemacht.

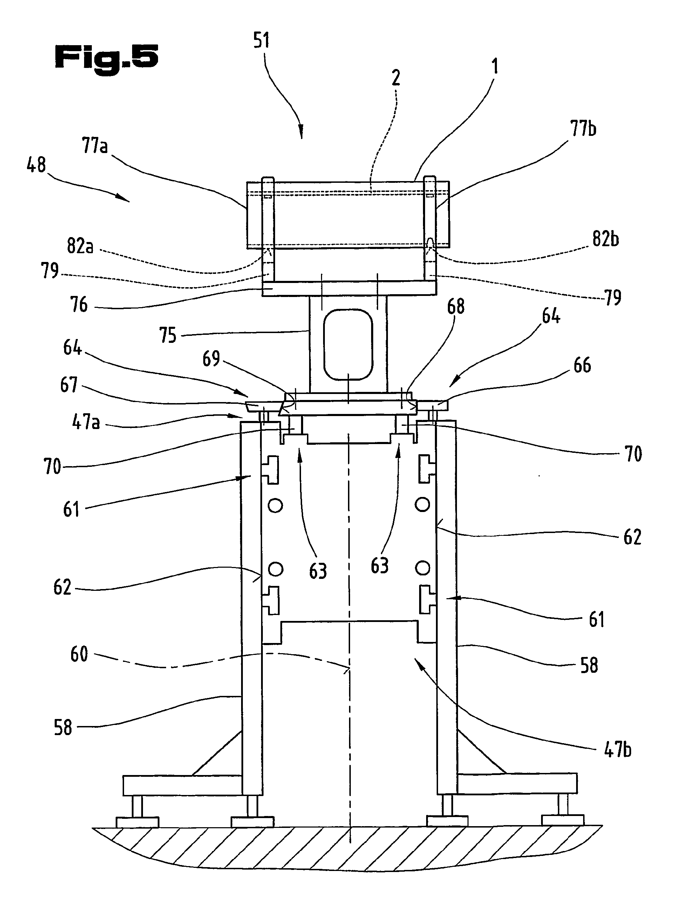

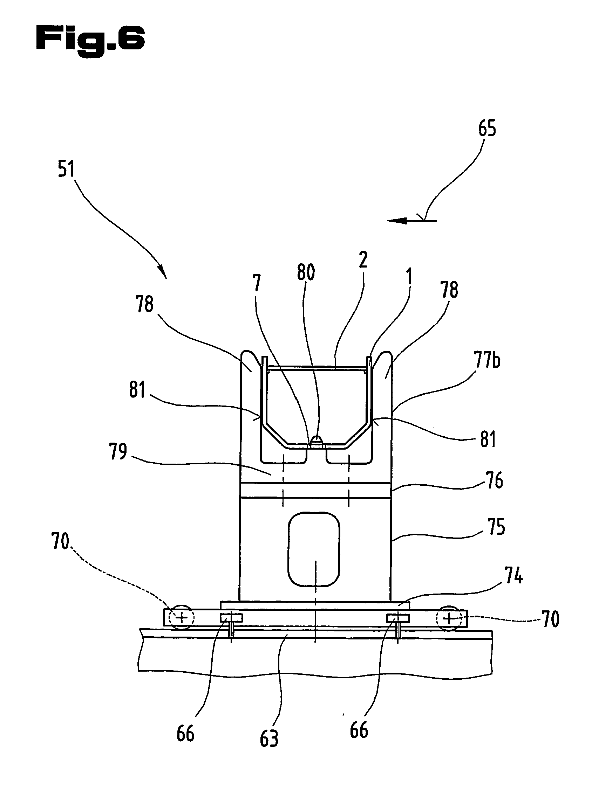

Die Teiletransportträger 48 der unterschiedlich ausgebildeten, oben beschriebenen Transporteinrichtungen sind jeweils mit der in den Fig. 5 und 6 dargestellten Aufnahme 51 ausgestattet. Die Aufnahme 51 ist über eine Montageplatte 74 mit dem Teiletransportträger 48 verbunden und weist eine an dieser befestigte Stützsäule 75, eine auf dieser befestigte Trägerplatte 76 sowie zwei im Abstand voneinander angeordnete und mit der Trägerplatte 76 verbundene, gabelartige Aufnahmebügel 77a, 77b auf. Die Aufnahmebügel 77a, 77b umfassen jeweils zwei an der Trägerplatte 76 senkrecht aufragende, fingerartige Führungsstege 78 und eine diese verbindende Basis 79. Zumindest einer der Aufnahmebügel 77b ist im Bereich seiner Basis 79 mit zumindest einem Positioniermittel 80, insbesondere einem Bolzen, versehen, das in die Positionieröffnung 7 des von der Aufnahme 51 aufgenommenen, ersten Teiles 1 vorragt und dadurch der erste Teil 1 während seinem Transport entlang der Transporteinrichtung 46 in ausreichend genauer Position gehalten wird. Wesentlich ist, dass der erste Teil 1 in der Aufnahme 51 nur in seiner Lage orientiert abgelegt und bis auf einige wenige Millimeter genau gegenüber die Aufnahme 51 positioniert ist. Demgemäß ist die Querschnittsabmessung des Positioniermittels 80 deutlich geringer bemessen als die Querschnittsabmessung der Positionieröffnung 7 im ersten Teil 1.

Wie in Fig. 6 eingetragenen, sind die fingerartigen Führungsstege 78 an ihren einander zugewandten Seiten mit ebenen Seitenführungsflächen 81 versehen. Die Basis 79 der Aufnahmebügel 78 sind jeweils mit einer ebenen Auflagefläche 82a, 82b für den an diesen abstützenden, ersten Teil 1 versehen. Der erste Teil 1 ist somit am Teiletransportträger 48 über die Aufnahme 51 grob vorpositioniert und liegt zwischen den Führungsstegen 78 der Aufnahmebügel 77a, 77b sowie an den Auflageflächen 82a, 82b frei auf.

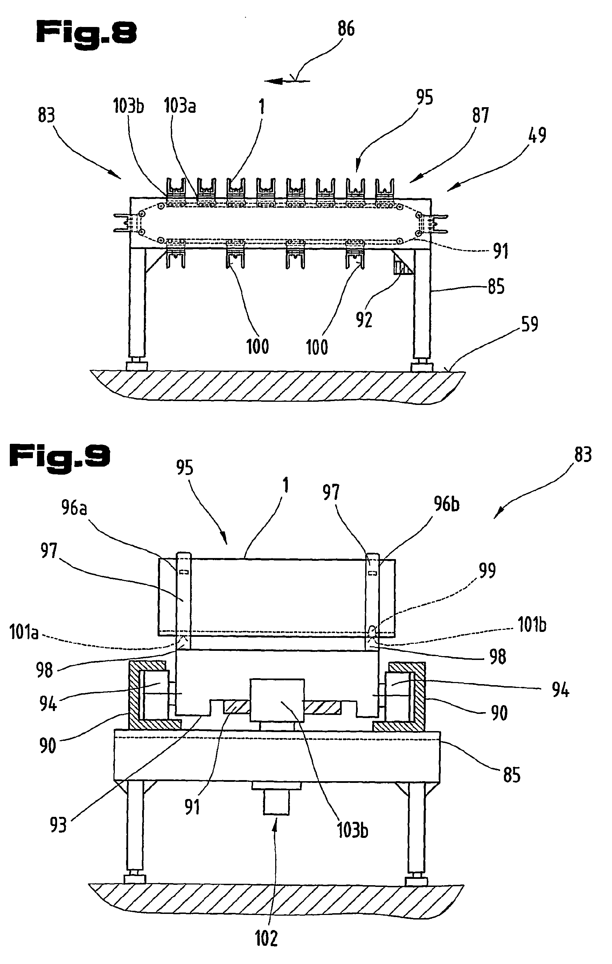

Wie in der Fig. 3 weiters eingetragen, sind im Übernahmebereich 44 zu beiden Seiten der zumindest in einem Teilabschnitt geradlinig ausgebildeten Transporteinrichtung 46 die Teilespeicher 49, 50 der Teilebereitstellung angeordnet. Diese sind nach vorliegender Ausführung jeweils durch ein Staubahnsystem für gleichartige Teile 1, 2 in Form einer Zufördereinrichtung 83, 84 ausgebildet, wie in den Fig. 8 und 9 schematisch dargestellt.

Die Zufördereinrichtungen 83, 84 sind weitestgehend identisch ausgebildet und umfassen einen Grundrahmen 85, einen Zugmitteltrieb, insbesondere einen Riementrieb, und zwei quer zur Vorschubrichtung - gemäß Pfeil 86 - von Hilfsteiletransportträgern 87 im Abstand voneinander angeordnete Fülu-ungsbahnen 90. Der Zugmitteltrieb und die Führungsbahnen 90 sind am Grundrahmen 85 gelagert. Der Zugmitteltrieb umfasst ein um ein Antriebsrad und mehrere Umlenkräder gerührtes, endloses Zugmittel 91, insbesondere einen Flachriemen, und einen an das Antriebsrad angeflanschten Antriebsmotor 92. Die gleichartig ausgebildeten Hilfsteiletransportträger 87 umfassen jeweils eine Aufnahme 95, die auf einem Fahrgestell 93 eines Fahrwerkes befestigt ist. Das Fahrgestell 93 ist in Vorschubrichtung - gemäß Pfeil 86 - betrachtet am vorderen und hinteren Ende mit je einem Paar von frei drehbaren Laufrädern 94 versehen.

Die Aufnahme 95 der Hilfsteiletransportträger 87 an den Zufördereinrichtungen 83, 84 ist an der Oberseite des Fahrgestelles 93 befestigt und weist zwei im Abstand voneinander angeordnete und mit dem Fahrgestell 93 verbundene, gabelartige Aufnahmebügel 96a, 96b auf. Die Aufnahmebügel 96a, 96b umfassen jeweils zwei am Fahrgestell 93 senkrecht aufragende, fingerartige Führungsstege 97 und eine diese verbindende Basis 98 auf. Zumindest einer der Aufnahmebügel 96b ist im Bereich seiner Basis 98 mit zumindest einem Positioniermittel 99, insbesondere einem Bolzen für den ersten Teil 1 bzw. einem quaderförmigen Fortsatz für den zweiten Teil 2, versehen, das in die Positionieröffnung 7; 11 des von der Aufnahme 95 aufgenommenen Teiles 1; 2 vorragt und dadurch der Teil 1; 2 während seinem Transport entlang der Zufördereinrichtung 83, 84 in ausreichend genauer Position gehalten wird. Wesentlich ist, dass der Teil 1; 2 in der Aufnahme 95 nur in seiner Lage orientiert abgelegt und bis auf einige wenige Millimeter genau gegenüber die Aufnahme 95 positioniert ist. Demgemäß ist die Querschnittsabmessung des Positioniermittels 99 deutlich geringer bemessen als die Querschnittsabmessung der Positionieröffnung 7; 11 im Teil 1; 2.

Wie in den Fig. 3, 8 und 9 eingetragenen, sind die fingerartigen Führungsstege 97 an ihren einander zugewandten Seiten mit ebenen Seitenführungsflächen 100 versehen. Die Basis 98 der Aufnahmebügel 96a, 96b sind jeweils mit einer ebenen Auflagefläche 101a, 101b für den an diesen abstützenden Teil 1; 2 versehen. Der Teil 1; 2 ist somit am Hilfsteiletransportträger 87 über die Aufnahme 95 grob vorpositioniert und liegt zwischen den Führungsstegen 97 der Aufnahmebügel 96a, 96b sowie an den Auflageflächen 101a, 101b frei auf.

Jede Zufördereinrichtung 83, 84 umfasst zusätzlich entlang dem Transportweg der Hilfsteiletransportträger 87 eine Anhaltevorrichtung 102. Diese umfasst zwei getrennt steuerbare und aus einer Ruhestellung in eine, zumindest einen Hilfsteiletransportträger 87 anhaltende Betätigungsstellung verstellbare, insbesondere anhebbare und absenkbare Anschlagelemente 103a, 103b, wie diese stark vereinfacht in Fig. 8 und 9 eingetragen sind. Die Anschlagelemente 103a, 103b werden über jeweils einen schematisch eingetragenen Stellantrieb, insbesondere Pneumatik- oder Hydraulikantrieb, angesteuert.

Das dem stromaufwärts gelegene Ende der Zufördereinrichtung 83, 84 zugewandte, erste Anschlagelement 103a dient zum Aufstauen der mittels Reibschluss zwischen der Oberfläche des Zugmittels 91 und der Unterseite des Fahrgestelles 93 angetriebenen Hilfsteiletransportträger 87. Die hinter dem Anschlagelement 103a aufgestauten Hilfsteiletransportträger 87 werden mit den Teilen 1 und/oder 2 beladen. Das Beladen kann über eine Bedienperson manuell oder beispielsweise mittels einem Roboter automatisch erfolgen.

Das dem stromabwärts gelegene Ende der Zufördereinrichtung 83, 84 zugewandte, zweite Anschlagelement 103b dient dazu, dass ein vereinzelter Hilfsteiletransportträger 87 in einer Übergabeposition 104; 104' angehalten wird, von der ein Teil 1; 2 an eine Übernahmeposition 106; 106' der Transporteinrichtung 46 übergeben wird. Danach fährt der leere Hilfsteiletransportträger 87 aus der Übergabeposition 104; 104' heraus und wird dieser für die neuerliche Beladung hinter dem Anschlagelement 103a gestaut. Gleichzeitig wird das erste Anschlagelement 103a angesteuert und ein mit einem Teil 1; 2 beladener Hilfsteiletransportträger 87 in die Übergabeposition 104; 104' verfahren. Die Übergabepositionen 104; 104' sind im Nahbereich der Transporteinrichtung 46 angeordnet.

Wie aus Fig. 3 weiters ersichtlich, ist im Übernahmebereich 44 ein dem stromabwärts gelegenen Ende der Zufördereinrichtung 83 zugeordnetes, erstes Handhabungssystem 105 mit einem im Raum verstellbaren Greifer (nicht dargestellt) angeordnet, mittels dem der in der Übergabeposition 104 am Hilfsteiletransportträger 87 bereitgestellte, erste Teil 1 von der Aufnahme 95 entnommen, einer Übernahmeposition 105 an der Transporteinrichtung 46 zugeführt und an der Aufnahme 51 des Teiletransportträgers 48 der Transporteinrichtung 46 in der Lage orientiert abgelegt wird. Zuvor wird ein leerer Teiletransportträger 46 in die Übernahmeposition 105 verfahren und in dieser angehalten, sodann mit dem ersten Teil 1 beladen. Nach dem Beladen eines Teiletransportträgers 46, wird dieser von der ersten Übemahmeposition 106 in die zweite Übernahmeposition 106` verfahren, dort angehalten und mit dem zweiten Teil 2 beladen.

Dazu ist, wie in der Fig. 3 weiters eingetragen, im Übernahmebereich 44 ein dem stromabwärts gelegenen Ende der Zufördereinrichtung 84 zugeordnetes, zweites Handhabungssystem 107 mit einem im Raum verstellbaren Greifer (nicht dargestellt) angeordnet. Der in der Übergabeposition 104' am Hilfsteiletransportträger 87 bereitgestellte, zweite Teil 2 wird mittels dem zweiten Handhabungssystem 107 bzw. Greifer von der Aufnahme 95 entnommen, einer Übernahmeposition 106' an der Transporteinrichtung 46 zugeführt und auf den Auflagefortsätzen 8 zwischen den Schenkeln 6 des sich bereits auf dem Teiletransportträger 48 befmdlichen, ersten Teiles 1 in der Lage orientiert abgelegt.

Wie in der Fig. eingetragenen, wird der Teil 1, 2, bevor er in die Übernahmeposition 106, 106' an der Aufnahme 51 oder den Auflagefortsätzen 8 des ersten Teiles 1 abgesetzt wird, um 90° gedreht.

Daher wird der zweite Teil 2 nicht unmittelbar an der Aufnahme 51 eines Teiletransportträgers 48 abgelegt, sondern in der Lage orientiert zwischen den Schenkeln 6 des ersten Teiles 1 an den Auflagefortsätzen 8. Dadurch können zusätzliche Aufbauten am Teiletransportträger 48 entfallen, das gesamte Gewicht der Transportkette 52 reduziert und die Vorschubgeschwindigkeit der Teiletransportträger 48 mit Aufnahmen 51 erhöht werden.

Wie aus Fig. 3 weiters ersichtlich, sind die Zufördereinrichtungen 83, 84 zu beiden Seiten der Transporteinrichtung 46 gegenüberliegend und in Vorschubrichtung - gemäß Pfeil 65 - der Teiletransportträger 48 hintereinander angeordnet. Die Übergabe- und Übernahmepositionen 104, 104', 106, 106' sind ebenso in Vorschubrichtung - gemäß Pfeil 65 - der Teiletransportträger 48 hintereinander ausgebildet. Natürlich können die Zufördereinrichtungen 83, 84 auch spiegelbildlich gegenüberliegen (nicht gezeigt). Nach dieser Ausführung genügt ein Handhabungssystem 105, das beiden Zufördereinrichtungen 83, 84 zugeordnet ist und mittels dem die Teile 1, 2 von den Übergabepositionen 104, 104' an nur eine Übernahmeposition 106 nacheinander zugeführt und am Teiletransportträger 48 abgelegt werden.

Eine andere nicht gezeigte Ausführung besteht darin, dass die Teile 1, 2 gemeinsam als Teilegruppe der Teilebereitstellung zugeführt werden. Diese Ausführung hat den Vorteil, dass nur noch ein Handhabungssystem 105 nötig ist und die Teilebereitstellung nur noch einen Teilespeicher 49 umfasst, der wie oben beschrieben ausgebildet ist.

Die mittels Hilfsteiletransportträger 87 in der Übergabeposition 104 bereitgestellte Teilegruppe wird vom Handhabungssystem 105 bzw. Greifer von der Aufnahme 95 entnommen, der Überbahmeposition 105 an der Transporteinrichtung 46 zugeführt und an der Aufnahme 51 des Teiletransportträgers 48 der Transporteinrichtung 46 in der Lage orientiert abgelegt wird.

Wie aus der obigen Erläuterung erkennbar, werden die Teiletransportträger 48 der Transporteinrichtung 46 von der Teilebereitstellung taktweise aufeinander folgend mit den Teilen 1, 2 oder Teilegruppen beladen.

Nachdem die miteinander zu fügenden Teile 1, 2 oder fügeende Teilegruppe auf einen der Teiletransportträger 48, insbesondere dessen Aufnahme 51, in der Lage orientiert abgelegt wurden, wird dieser in die zur Teilebereitstellung, insbesondere deren Übergabepositionen 104, 104', entfernt gelegene, erste Fügestation 43 transportiert und in einer Halteposition 110 angehalten.

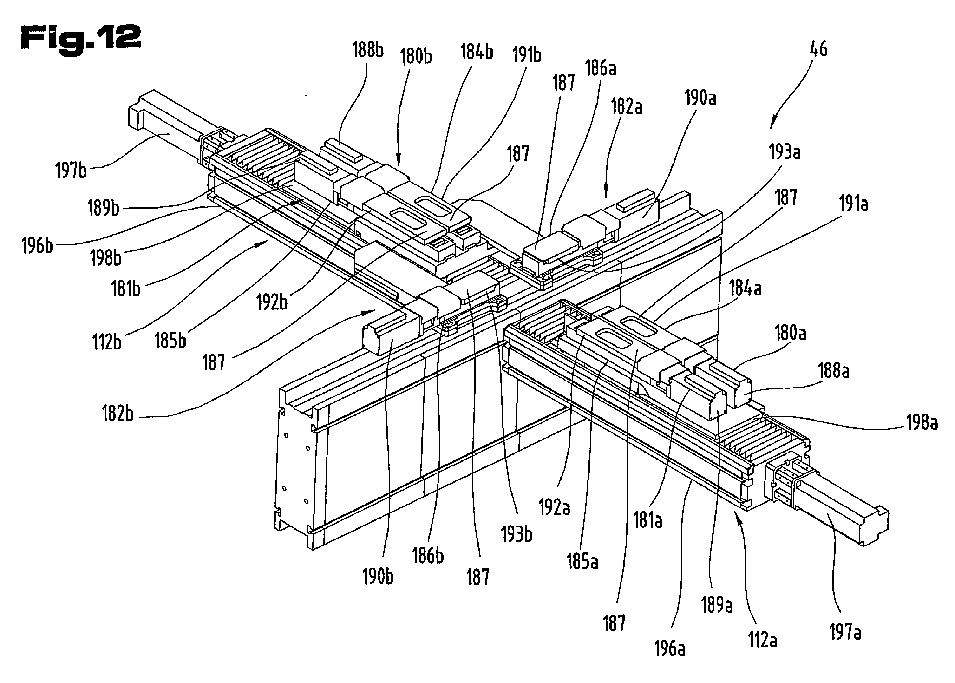

Die Fügestation 43, insbesondere Schweißstation, ist zwischen dem Übernahme- und Weitergabebereich 44, 45 angeordnet und umfasst im Nahbereich eines Transportabschnittes der Transporteinrichtung 46 ein Spannsystem 111, Zustellachsen 112a, 112b, wenigstens eine Höhenpositioniervorrichtung (nicht eingetragen) sowie wenigstens eine vereinfacht dargestellte Fügeeinrichtung zum Fügen der Teile 1, 2 zu einer Baugruppe. Das Spannsystem 111 umfasst drei noch näher zu beschreibende Spanneinheiten 114, 115, 116. Die Zustellachsen 112a, 112b sind als Linearantriebe ausgebildet, wie in Fig. 12 näher dargestellt. Die Fügeeinrichtung ist nach dieser Ausführung als Schweißvorrichtung 119 mit zumindest einem Strahlschweißkopf 121 zum Fügen der Teile 1, 2 ausgebildet.

Die über den Teiletransportträger 48 in die Schweißstation gemeinsam angelieferten Teile 1, 2 werden mittels den Spanneinheiten 114 bis 116 und/oder wenigstens einer Höhenpositioniervorrichtung gemeinsam aus einer am Teiletransportträger 48 befindlichen Transportstellung in vom Teiletransportträger 48 losgelöste Bereitstellungspositionen bewegt, insbesondere vertikal geringfügig angehoben, sodass die Positionieröffnung 7 und ein Positioniermittel 80 des Teiletransportträgers 48 außer Eingriff sind. Danach werden die Teile 1, 2 zueinander positioniert, gegeneinander gespannt und darauffolgend gefügt, insbesondere mittels dem Strahlschweißkopf 121 der Schweißvorrichtung 119 an den Fügestellen 17a, 17b zumindest in Teilabschnitten miteinander verschweißt oder geklebt. Diese vorgefertigte Baugruppe 122 aus den verschweißten Teilen 1, 2 wird wiederum auf den, vorzugsweise während der Dauer des Fügeprozesses in der Halteposition 110 verharrenden Teiletransportträger 48 abgelegt, sodann in den ersten Weitergabebereich 45 abtransportiert.

Im Weitergabebereich 45 ist ein drittes Handhabungssystem 123 mit einem im Raum frei bewegbaren Greifer (nicht dargestellt) und eine Schlechtteilebox 124 angeordnet. Der die vorgefertigte Baugruppe 122 aufnehmende Teiletransportträger 48 wird im Weitergabebereich 45 in einer Endposition 125 angehalten und in dieser mittels dem Handhabungssystem 123 bzw. Greifer die Baugruppe 122 vom Teiletransportträger 48 entnommen und der zweiten Fertigungsanlage 33 oder der Schlechtteilebox 124 zugeführt.

Wie im Nachfolgenden noch beschrieben wird, erfolgt nämlich in der Fügestation 43 anhand eines Soll-Istwert-Vergleiches der Spannkraft und/oder des Verfahr- und/oder Spannweges einer jeden einzelnen Spanneinrichtung der Spanneinheiten 114 bis 116 eine Erfassung der Qualitätsmerkmale, insbesondere der Maßhaltigkeit, der einzelnen Teile 1, 2. Diese Qualitätsmerkmale werden im Vergleichsmodul 39 mit Qualitätsanforderungen verglichen und im Auswertemodul 40 ausgewertet. Entspricht einer der Teile 1, 2 nicht den Qualitätsanforderungen, beispielsweise ist einer der Teile 1, 2 zu lang, zu kurz, zu schmal oder zu breit, wie dies während dem Spannvorgang jedes Teiles 1, 2 ermittelt wird, werden die Teile 1, 2 erst gar nicht miteinander gefügt, sondern von den Spanneinheiten 114 bis 116 bzw. der Höhenpositioniervornchtung wiederum auf einen Teiletransportträger 48 abgelegt und über die Transporteinrichtung 46 zum Handhabungssystem 123 und darauffolgend über dieses in die Schlechtteilebox 124 transportiert.

Entsprechen die Teile 1, 2 jedoch den Qualitätsanforderungen, wie diese während dem Spannvorgang erfasst werden, werden die Teile 1, 2 miteinander verschweißt und über die Transporteinrichtung 46 zum Handhabungssystem 123 und über dieses vom Weitergabebereich 45 zu einem zweiten Übernahmebereich 126 der zweiten Fertigungsanlage 33 transportiert.

Die zweite Fertigungsanlage 33 umfasst ein zweites Transportsystem 127 und zumindest eine zweite Fügestation 128, die nach dieser Ausführung durch eine Schweißstation gebildet ist. Das Transportsystem 127 dient der Beförderung der von der ersten Fertigungsanlage 32 vorgefertigten, gefügten Baugruppen 122 sowie von weiteren Teilen 3a, 3b, die ihrerseits mit der vorgefertigten Baugruppe 122 gefügt werden.

Dazu weist das zweite Transportsystem 127 eine sich zwischen dem zweiten Übernahmebereich 126 und einem zweiten Weitergabebereich 129 vorzugsweise geradlinig erstreckende, zweite Transporteinrichtung 130 mit entlang von in dieser Fig. nicht eingetragenen Führungsbahnen verfahrbaren und vorzugsweise gleichartig ausgebildeten Teiletransportträgern 48', sowie eine Teilebereitstellung auf. Die zweite Transporteinrichtung 130 weist wiederum eine Vielzahl von Teiletransportträgern 48' auf, die ihrerseits mit der bereits oben ausführlich beschriebenen Aufnahme 51' und zwei weiteren Aufnahmen 131a, 131b für die Teile 3a, 3b versehen sind.

Die Teilebereitstellung für die Teile 3a, 3b ist nach dieser Ausführung durch zwei Vorrichtungen 132, 133 zum Vereinzeln, Fördern und Ausrichten von in einem Behälter 134 als Schüttgut aufgenommenen Teile 3a, 3b gebildet. Diese Vorrichtung 133, 134 umfasst einen Teilespeicher 135 für die Teile 3a, 3b. Eine derartige Vorrichtung 133, 134 ist beispielsweise aus der DE 40 25 391 A1 oder DE 41 26 689 A1 bekannt.

Wie aus Fig. 3 weiters ersichtlich, werden die aus dem Behälter 134 entnommenen Teile 3a mittels der Vorrichtung 132 bis zu einer Übergabeposition 136 am Teilespeicher 135 gefördert. Im zweiten Übernahmebereich 126 ist ein dem stromabwärts gelegenen Ende des Teilespeichers 135 zugeordnetes, erstes Handhabungssystem 137 mit einem im Raum verstellbaren Greifer (nicht dargestellt) angeordnet, mittels dem ein in der Übergabeposition 136 des Teilespeichers 135 bereitgestellter, vereinzelter, dritter Teil 3a entnommen, einer Übernahmeposition 138 an der zweiten Transporteinrichtung 130 zugeführt und an der Aufnahme 131a des Teiletransportträgers 48' der Transporteinrichtung 130 in der Lage orientiert abgelegt wird. Zuvor wird ein bereits mit der Baugruppe 122 beladener Teiletransportträger 48' in die Übernahmeposition 138 verfahren und in dieser angehalten, sodann mit dem dritten Teil 3a beladen. Nach dem Beladen des Teiletransportträgers 48', wird dieser von der Übemahmeposition 13 8 in die weitere Übernahmeposition 138' verfahren, dort angehalten und mit dem vierten Teil 3b beladen.

Dazu ist im Übernahmebereich 126 ein dem stromabwärts gelegenen Ende der Vorrichtung 133 zugeordnetes, zweites Handhabungssystem 139 mit einem im Raum verstellbaren Greifer (nicht dargestellt) angeordnet. Mittels der Vorrichtung 133 werden die aus dem Behälter 134 entnommenen Teile 3b bis zu einer Übergabeposition 136' am Teilespeicher 135 gefördert. Der in der Übergabeposition 136' bereitgestellte, vereinzelte, vierte Teil 3b wird mittels dem zweiten Handhabungssystem 139 bzw. Greifer von dieser entnommen, einer Übernahmeposition 138' an der zweiten Transporteinrichtung 130 zugeführt und an der Aufnahme 131b des Teiletransportträgers 48' der Transporteinrichtung 130 in der Lage orientiert abgelegt.

Wie aus Fig. 3 ersichtlich, sind die Vorrichtungen 132, 133 zu beiden Seiten der Transporteinrichtung 130 gegenüberliegend und in Vorschubrichtung - gemäß Pfeil 140 - der Teiletransportträger 48' hintereinander angeordnet. Die Übergabe- und Übernahmepositionen 136, 136', 138, 138' sind ebenso in Vorschubrichtung - gemäß Pfeil 140 - der Teiletransportträger 48' hintereinander ausgebildet. Natürlich können die Vorrichtungen 132, 133 auch spiegelbildlich gegenüberliegen (nicht gezeigt). Nach dieser Ausführung genügt ein Handhäbungssystem 137, das beiden die Vorrichtungen 132, 133 zugeordnet ist und mittels dem die Teile 3a, 3b von den Übergabepositionen 136, 136' an nur eine Übernahmeposition 138 nacheinander zugeführt und am Teiletransportträger 48' abgelegt werden.

Die Transportteileträger 48' werden zwischen dem zweiten Übernahme- und Weitergabebereich 126, 129 in Vorschubrichtung - gemäß Pfeil 140 - getaktet fortbewegt. Nachdem ein Teil 3 a an der Aufnahme 131a abgelegt wurde, werden die Teiletransportträger 48' weiterbewegt, sodass der Teiletransportträger 48' von der einen Übernahmeposition 138 zur anderen Übernahmeposition 138' der Teilebereitstellung bewegt wird.

Ist nun auch ein Teil 3b an der Aufnahme 131b abgelegt worden, werden die Teiletransportträger 48' weiterbewegt, sodass der mit einer vorgefertigten Baugruppe 122 und dem dritten und vierten Teil 3a, 3b beladene Teiletransportträger 48' von der Übernahmeposition 138' der Teilebereitstellung gemeinsam zur Fügestation 128, insbesondere der Schweißstation, transportiert und in dieser in einer Halteposition 142 angehalten werden.

Die zweite Fügestation 128, insbesondere Schweißstation, ist zwischen dem zweiten Übernahme- und Weitergabebereich 126, 129 angeordnet und umfasst im Nahbereich eines Transportabschnittes der Transporteinrichtung 130 ein Spannsystem 143, zwei Höhenpositioniervorrichtungen (nicht eingetragen) sowie wenigstens eine vereinfacht dargestellte Fügeeinrichtung zum Fügen der Teile 1, 2 zu einer Baugruppe. Das Spannsystem 143 umfasst eine noch näher zu beschreibende Spanneinheit 144. Die Fügeeinrichtung ist nach dieser Ausführung als Schweißvorrichtung 145 mit zumindest zwei getrennt angesteuerten Strahlschweißköpfen 146a, 146b zum Fügen der Teile 3a, 3b ausgebildet.

In der Halteposition 142 des Transportteileträgers 48' werden die Teile 3a, 3b und die vorgefertigte 122 Baugruppe gemeinsam aus einer am Teiletransportträger 48' befindlichen Transportstellung in eine vom Teiletransportträger 48' losgelöste Bereitstellungsposition zwischen Spanneinrichtungen der Spanneinheit 144 bewegt, insbesondere angehoben, sodann die Baugruppe 122 und die Teile 3a, 3b zueinander positioniert, gegeneinander gespannt und darauffolgend gefügt, insbesondere mittels den Strahlschweißköpfen 146a, 146b der Schweißvorrichtung 145 an den Fügestellen 18a, 18b,18c; 19a, 19b zumindest in Teilabschnitten miteinander verschweißt oder geklebt und danach wiederum auf den vorzugsweise während der Dauer des Fügeprozesses in der Halteposition 142 verharrenden Teiletransportträger 48' abgelegt. Danach wird die gefügte Baugruppe 147 über die Transporteinrichtung 130 zu den zweiten Weitergabebereich 129 transportiert.

Im zweiten Weitergabebereich 129 ist ein drittes Handhabungssystem 148 mit einem im Raum frei bewegbaren Greifer (nicht dargestellt) und eine Schlechtteilebox 149 angeordnet. Der die fertigte Baugruppe 147 aufnehmende Teiletransportträger 48' wird im Weitergabebereich 129 in einer Endposition 150 angehalten und in dieser mittels dem Handhabungssystem 148 bzw. Greifer die Baugruppe 147 vom Teiletransportträger 48' entnommen und einer Abfördervorrichtung 151 oder der Schlechtteilebox 149 zugeführt.

Wie im Nachfolgenden noch beschrieben wird, erfolgt nämlich in der Fügestation 128 anhand eines Soll-Istwert-Vergleiches der Spannkraft und/oder des Verfahr- und/oder Spannweges einer jeden einzelnen Spanneinrichtung der Spanneinheit 144 eine Erfassung der Qualitätsmerkmale, insbesondere der Maßhaltigkeit, der einzelnen Teile 3a, 3b. Diese Qualitätsmerkmale werden im Vergleichsmodul 39 mit Qualitätsanforderungen verglichen und im Auswertemodul 40 ausgewertet. Entspricht einer der Teile 3a, 3b nicht den Qualitätsanforderungen, beispielsweise ist einer der Teile 3a, 3b unzulässig verbogen, wie dies während dem Spannvorgang jedes Teiles 3a, 3b ermittelt wird, werden die Teile 1, 2, 3a, 3b erst gar nicht miteinander gefügt, sondern von der Spanneinheit 144 bzw. den Höhenpositioniervorrichtungen wiederum auf einen Teiletransportträger 48' abgelegt und über die Transporteinrichtung 130 zum Handhabungssystem 148 und darauffolgend über dieses in die Schlechtteilebox 149 transportiert.

Entsprechen die Teile 3a, 3b jedoch den Qualitätsanforderungen, wie die während dem Spannvorgang ermittelt wird, werden die Teile 1, 2, 3a, 3b miteinander verschweißt und über die Transporteinrichtung 130 zum Handhabungssystem 148 und über dieses vom Weitergabebereich 29 zur Abfördervorrichtung 151 transportiert.

Gemäß dem erfindungsgemäßen Fertigungssystem 31 und Fertigungsverfahren ist es nun vorgesehen, dass dem Strahlschweißkopf 121 der ersten Schweißstation und den Strahlschweißköpfen 146a, 146b der zweiten Schweißstation die Laserstrahlung von nur einer die Energiequelle 34 bildenden Strahlquelle, beispielsweise einem Lasergenerator, abwechselnd zugeführt wird. Der Strahlschweißkopf 121 der ersten Schweißstation und die Strahlschweißköpfe 146a, 146b der zweiten Schweißstation sind mit einer gemeinsamen Laserstrahlquelle jeweils über einen Lichtwellenleiter (L1, L2, L3) und über eine Strahlweiche (nicht dargestellt) verbunden. Der Lichtwellenleiter (L1) führt zum Strahlschweißkopf 121, der Lichtwellenleiter (L2) zum Strahlschweißkopf 146a und der Lichtwellenleiter (L3) zum Strahlschweißkopf 146b. Die Laserstrahlquelle verfügt über ein nicht dargestelltes Spiegelsystem, mit dem die von der Laserstrahlquelle abgestrahlte Laserstrahlung in den entsprechenden Lichtwellenleiter (L1; L2; L3) und wahlweise in die unterschiedlichen Strahlschweißköpfe 110, 146a, 146b entweder zur ersten Schweißstation oder zur zweiten Schweißstation eingekoppelt bzw. eingespiegelt wird.

Nach dem Fertigungsverfahren werden innerhalb eines ersten Zeitintervalls zwei Teile 1, 2 zur ersten Schweißstation antransportiert und eine geschweißte Baugruppe 122 des vorangegangenen Zyklus von der ersten Schweißstation abtransportiert und währenddessen in der zweiten Schweißstation eine in der ersten Fertigungsanlage 32 vorangegangen geschweißte Baugruppe 122 und ein von der zweiten Teilebereitstellung zugeführter, dritter Teil 3a zueinander positioniert und gespannt sowie zur fertigen Baugruppe 147 geschweißt. Innerhalb eines zweiten Zeitintervalls werden in der ersten Fertigungsanlage 32 zwei von der ersten Teilebereitstellung zugeführte Teile 1, 2 zueinander positioniert, gespannt und zur Baugruppe 122 geschweißt und währenddessen in der zweiten Fertigungsanlage 33 eine in der ersten Fertigungsanlage 32 vorangegangen geschweißte Baugruppe 122 zur zweiten Schweißstation der zweiten Fertigungsanlage 33 antransportiert und eine in der zweiten Schweißstation der zweiten Fertigungsanlage 33 fertig geschweißte Baugruppe 147 des vorangegangenen Zyklus an den zweiten Weitergabebereich 129 abtransportiert.

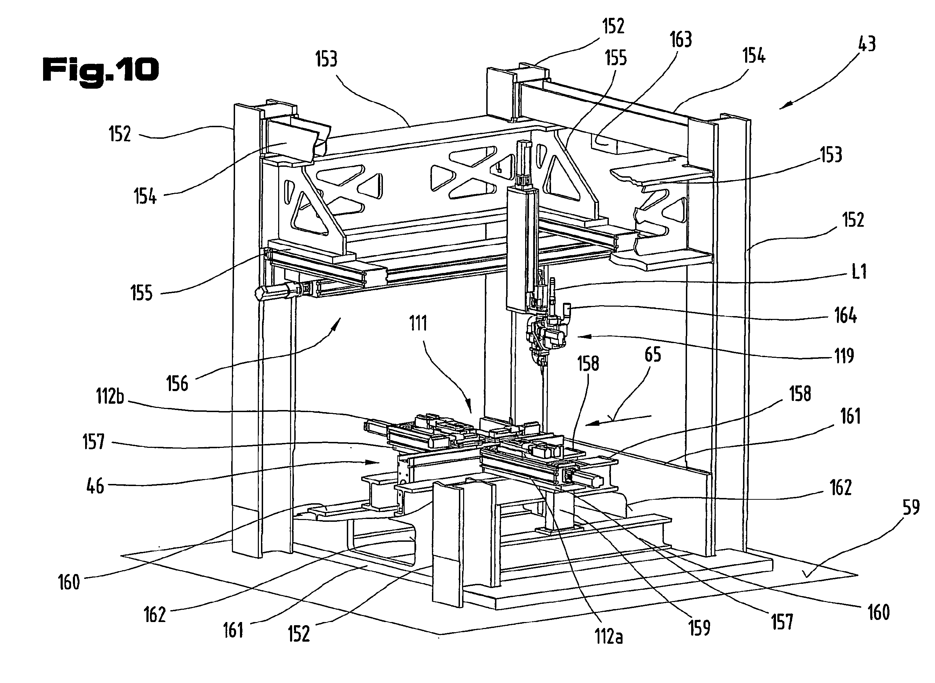

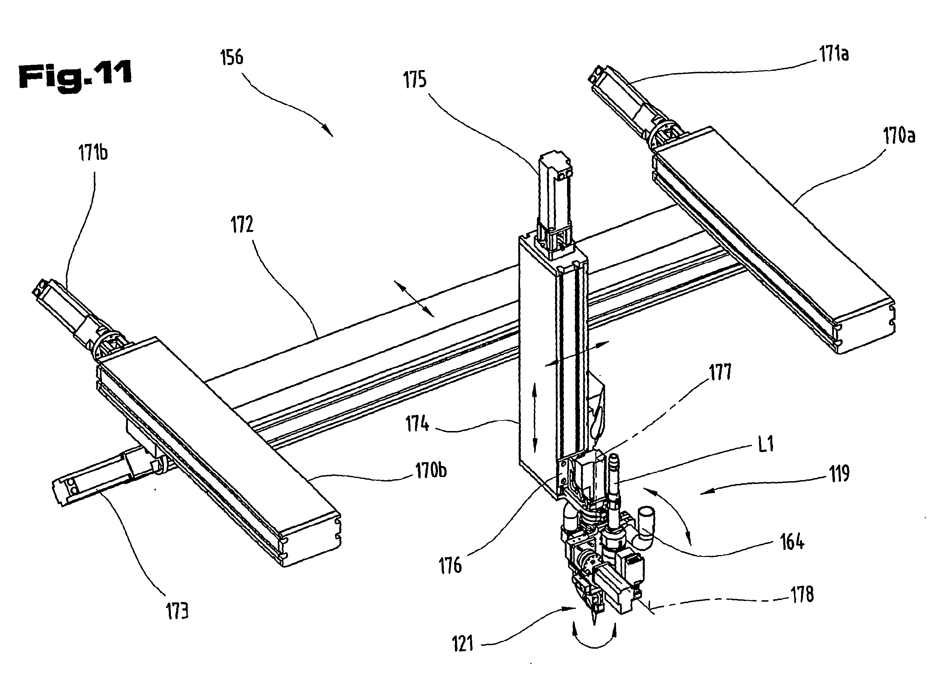

In der Fig. 10 ist die Fügestation 43 bzw. Schweißstation mit der(m) nur teilweise dargestellten Transporteinrichtung 46 und Spannsystem 111 sowie der Schweißvorrichtung 119 gezeigt, wobei die Umkleidung entfernt ist. Die Schweißstation umfasst eine aus vier vertikal auf die Aufstandsfläche 59 ausgerichtete Steher 152 und einen diese verbindenden Rahmen bestehende Tragkonstruktion. Der Rahmen umfasst zwei parallel zur Vorschubrichtung - gemäß Pfeil 65 - der Transporteinrichtung 46 verlaufende Portale 153 und zwei zu diesen quer verlaufende Portale 154 auf. Die Portable 153, 154 sind über Schrauben mit den Stehern 152 lösbar verbunden. Ein Portal 153 ist mit Konsolen 155 versehen, an dem ein in Fig. 11 näher dargestelltes Antriebssystem 156 befestigt ist, über welches die Schweißvorrichtung 119 am Rahmen verstellbar gelagert ist. Zusätzlich umfasst die Tragkonstruktionen einen Grundrahmen, der zu beiden Seiten der Transporteinrichtung 46 Montageplatten 157 umfasst, an denen die Zustellachsen 112a, 112b lösbar befestigt sind. Die Montageplatten 157 sind mit ihren aufeinander zugewandten Enden auf parallel zur Vorschubrichtung - gemäß Pfeil 65 - der Transporteinrichtung 46 und unmittelbar benachbart zu dieser verlaufenden Tragprofilen 158 und mit ihren voneinander abgewandten Enden über Stützkonsolen 159 an parallel zur Vorschubrichtung - gemäß Pfeil 65 - der Transporteinrichtung 46 verlaufenden, weiteren Tragprofilen 160 befestigt. Zur Versteifung der Tragkonstruktion sind außerdem noch zwei die Steher 152 im Fußbereich miteinander verbindende Trägerplatten 161 vorgesehen. Diese Trägerplatten 161 sind zum Durchtritt des rücklaufenden Trums der Transportkette 52 der Transporteinrichtung 46 mit einer Aussparung 162 versehen.

Wie aus der Zusammenschau der Fig. 3 und 10 ersichtlich, ist die Fügestation 43 mit einer Anschlussschnittstelle 163 versehen, die eine Datenschnittstelle, einen Anschluss für ein Absaugrohr 164, einen Anschluss für elektrische und/oder mechanische und/oder optische Energie, und/oder einen Anschluss für einen Lichtwellenleiter (L1, L2, L3) versehen ist. Das Absaugrohr 164 ist über die Anschlussschnittstelle 163 mit einem nicht dargestellten Entlüftungssystem und der Lichtwellenleiter (L1, L2, L3) über die Anschlussschnittstelle 163 mit der Energiequelle 34 verbunden. Außerdem ist die Anschlussschnittstelle 163 ihrerseits mit einer elektrischen und/oder mechanischen Energiequelle 36 und/oder Steuereinrichtung 37 verbunden. Natürlich kann der Lichtwellenleiter (L1, L2, L3) auch unmittelbar mit der optischen Energiequelle 34 verbunden sein.

In der Fig. 11 ist das Antriebssystem 156 dargestellt, mit der der Strahlschweißkopf 121 der Schweißvorrichtung 119 im Raum bewegt werden kann. Das Antriebssystem 156 umfasst zwei an den in Fig. 10 eingetragenen Konsolen 155 des Rahmens ortsfest angeordnete Linearantriebe 170a, 170b mit über jeweils einen stufenlos steuerbaren Elektromotor 171a, 171b, insbesondere Servo- oder Schrittschaltmotor, synchron verstellbaren Schlitten (nicht ersichtlich), und einen an den Schlitten befestigten, dritten Linearantrieb 172 mit über einen stufenlos steuerbaren Elektromotor 173, insbesondere Servo- oder Schrittschaltmotor, verstellbaren Schlitten (nicht ersichtlich), sowie einen an diesem Schlitten befestigten, vierten Linearantrieb 174 mit über einen stufenlos steuerbaren Elektromotor 175, insbesondere Servo- oder Schrittschaltmotor, vertikal verstellbaren Schlitten (nicht ersichtlich), der mit dem Schlitten des dritten Linearantriebes 172 verbunden ist. Die Schweißvorrichtung 119 ist über eine Befestigungsvorrichtung 176 am unteren Ende des vierten Linearantrieb 174 montiert und mittels dem ersten/zweiten Linearantrieb 170a, 170b quer zur Vorschubrichtung der Transporteinrichtung 46 (in Fig. 10 eingetragen) und mittels dem dritten Linearantrieb 172 in Vorschubrichtung der Transporteinrichtung 46 sowie mittels dem vierten Linearantrieb 174 in vertikaler Richtung verstellbar ausgebildet. Der Strahlschweißkopf 121 ist zusätzlich noch um eine vertikale Schwenkachse 177 und um eine parallel zum ersten/zweiten Linearantrieb 170a, 170b verlaufende Schwenkachse 178 verschwenkbar an der Befestigungsvorrichtung 176 gelagert, wie in den Fig. 32 und 33 im Detail beschrieben wird. Der Strahlschweißkopf 121 ist um die vertikale Achse 177 sowie um die horizontale Achse 178 jeweils um ca. 270° verschwenkbar.

In den gemeinsam beschriebenen Fig. 12 bis 17 ist ein Teilbereich der Transporteinrichtung 46 und des Spannsystems 111 der ersten Fügestation 43 stark vereinfacht und in unterschiedlichen Ansichten gezeigt. Aus Gründen der besseren Übersicht sind die Teiletransportträger 48 in den Fig. nicht dargestellt.

Die Fig. 12 zeigt dabei das Spannsystem 111 in Rüststellung, in der die noch näher zu beschreibenden Tragrahmen und Spannwerkzeuge der Spanneinheiten 114 bis 116 von Antriebseinheiten 180a bis 182b der Spanneinheiten 114 bis 116 abgebaut sind. Die Antriebseinheiten 180a bis 182b weisen jeweils einen mittels Elektromotor 188a bis 190b angesteuerten Linearantrieb 184a bis 186b und eine Rüstplattform 187 auf. Die Linearantriebe 184a bis 186b umfassen jeweils einen in einer horizontalen Ebene verstellbaren Schlitten 191a bis 193b, an dem eine Rüstplattform 187 befestigt ist. Nach gezeigter Ausführung ist die Rüstplattform 187 durch den Schlitten 191a bis 193b gebildet.

Die Zustellachsen 112a, 112b sind ebenso durch Linearantriebe 196a, 196b gebildet, die von Elektromotoren 197a bis 197b angesteuert sind und jeweils einen in einer horizontalen Ebene verstellbaren Schlitten 198a, 198b umfassen.

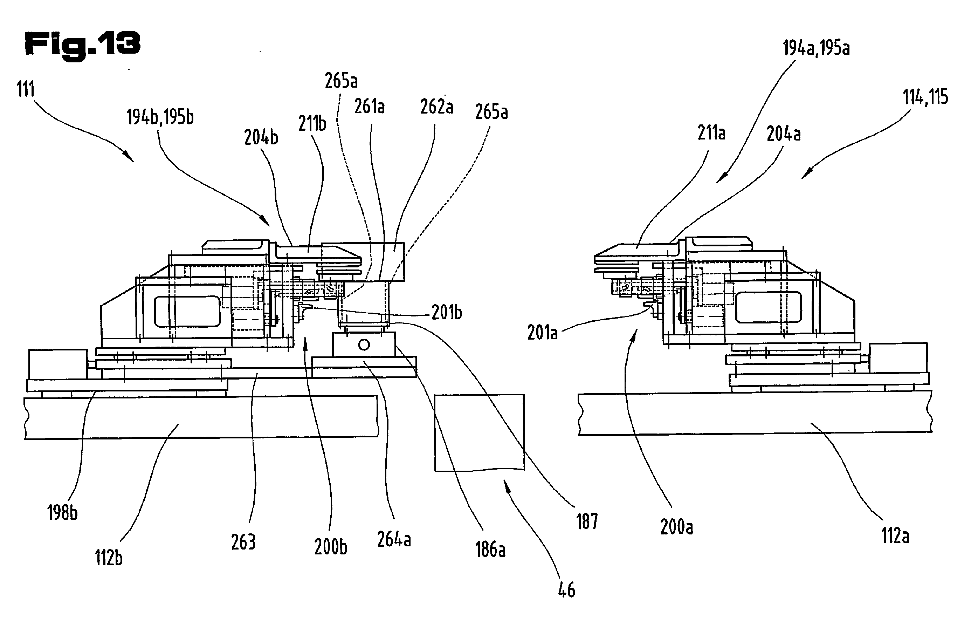

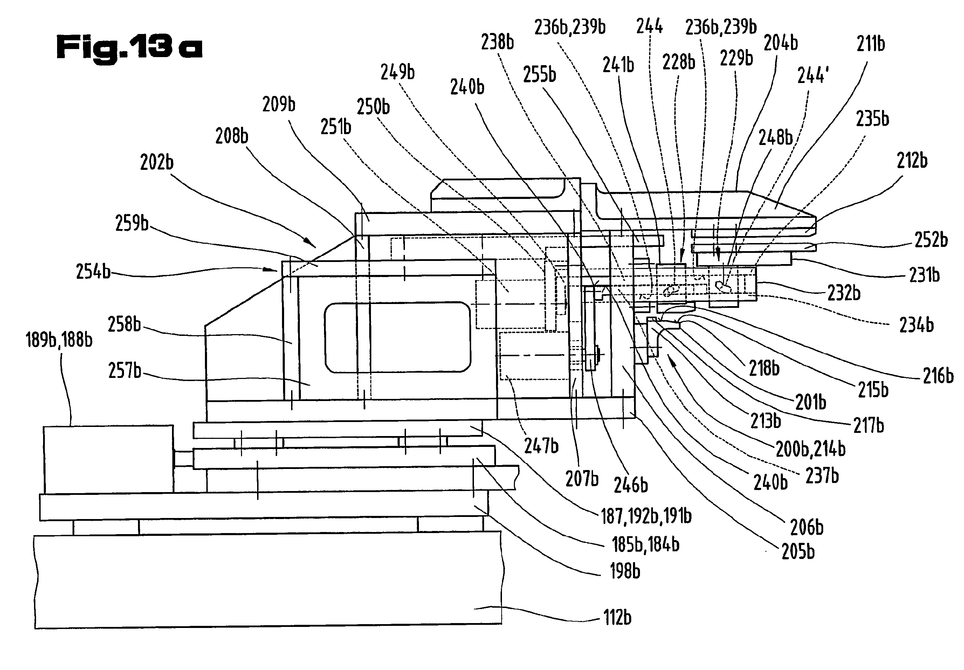

Wie nun in den Fig. 13 bis 14a dargestellt, umfassen die erste und zweite Spanneinheit 114, 115 des Spannsystems 111 zu beiden Seiten des geradlinigen Transportabschnittes der Transporteinrichtung 46 angeordnete und über die Antriebseinheiten 180a, 180b quer zur Vorschubrichtung - gemäß Pfeil 46 - der Teiletransportträger 48 gegebenenfalls synchron verstellbare, zusammenwirkende Spanneinrichtungen 194a bis 195b.

Die Spanneinrichtungen 194a, 194b der ersten Spanneinheit 114 umfassen jeweils die Antriebseinheit 180a, 180b, eine Höhenpositioniervorrichtung 200a, 200b, ein Spannwerkzeug 201a, 201b, einen Tragrahmen 202a, 202b, eine Anpressvorrichtung 203a, 203b zur Fixierung der Teile 1, 2 zwischen den Spanneinrichtungen 194a, 194b und ein Widerlager 204a, 204b. Das Spannwerkzeug 201a, 201b ist über den Tragrahmen 202a, 202b mit der Rüstplattform 187 der Antriebseinheit 180a, 180b verbunden. Die Tragrahmen 202a, 202b der Spanneinrichtungen 194a, 194b umfassen jeweils eine an der Rüstplattform 187 befestigte, untere Montageplatte 205a, 205b, an dieser befestigte Tragwände 206a bis 208b, eine mit diesen an der Oberseite verbundene, obere Montageplatte 209a, 209b sowie eine an dieser befestigte Tragplatte 210a, 210b. Das Widerlager 204a, 204b ist mit der Tragplatte 210a, 210b und der der Transporteinrichtung 46 zugewandten Tragwand 206a, 206b befestigt. Das Widerlager 204a, 204b umfasst einen Kragarm 211a, 211 b, der auf seiner der Antriebseinheit 180a, 180b zugewandten Unterseite mir einer Spannbacke 212a, 212b versehen ist.

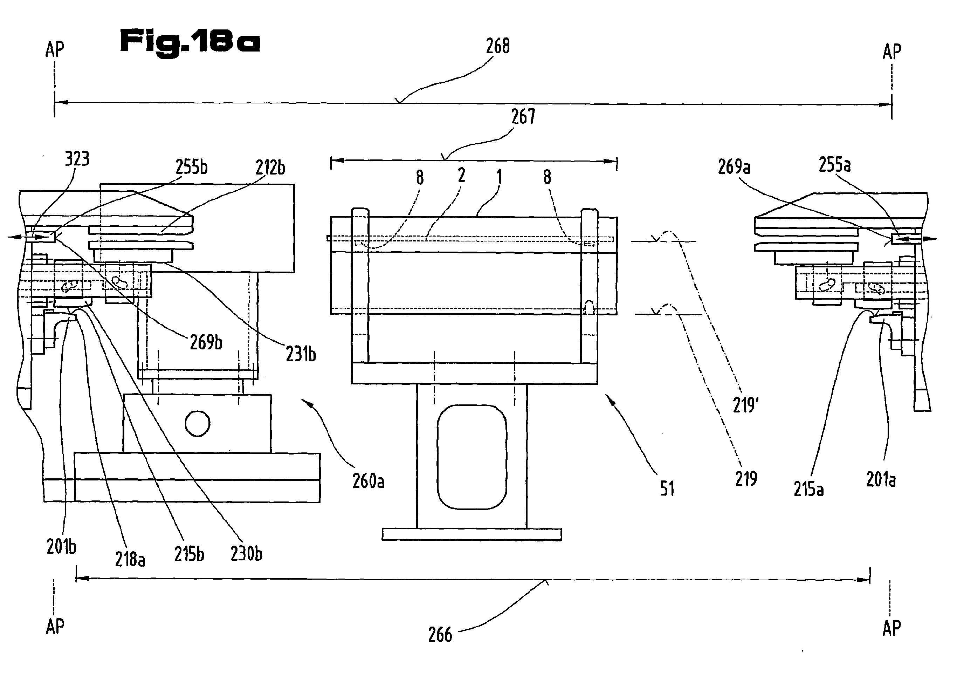

Die quer zur Vorschubrichtung - gemäß Pfeil 46 - der Teiletransportträger 48 gegebenenfalls synchron verstellbaren, zusammenwirkenden Spannwerkzeuge 201 a, 201 b der Spanneinrichtungen 194a, 194b sind aufeinander zugerichtet und am Tragrahmen 202a, 202b, insbesondere der vorderen Tragwand 206a, 206b befestigt. Jedes der Spannwerkzeuge 201a, 201b ist nach dieser Ausführung durch ein Auflagerelement 213a, 213b einer die Höhenpositioniervorrichtung 200a, 200b aufweisenden Hebevorrichtung 214a, 214b gebildet und ist als Winkelprofil ausgebildet. Der aufragende Schenkel des Winkelprofils ist mit der Tragwand 206a, 206b des Tragrahmens 202a, 202b verbunden, während der horizontale Schenkel an der Tragwand 206a, 206b senkrecht vorragt. Der horizontale Schenkel des Winkelprofils bzw. des Spannwerkzeuges 201a, 201b weist nach dieser Ausführung eine in Richtung der Transporteinrichtung 46 nach unten geneigte Auflaufschräge 215a, 215b, eine an diese anschließende, horizontale Auflagefläche 216a, 216b und ein Anschlagelement mit einer vertikalen Anschlagfläche 217a, 217b auf. Eine vordere Kante 218a, 218b der Spannwerkzeuge 201 a, 201 b ist knapp unterhalb einer Transportebene bzw. Transportstellung 219 des am Teiletransportträger 48 abgelegten, ersten Teiles 1 ausgebildet, wie in Fig. 18a dargestellt.

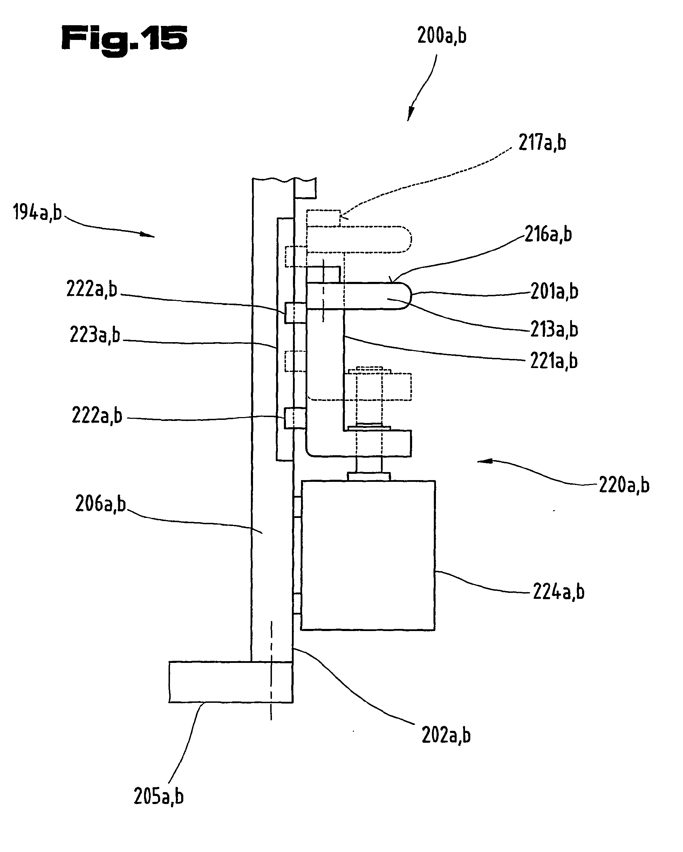

In Fig. 15 ist eine andere Ausführung der Höhenpositioniervorrichtung 200a, 200b der Spanneinrichtungen 194a, 194b und ein Teilabschnitt des Tragrahmens 202a, 202b stark vereinfacht gezeigt. Die Höhenpositioniervorrichtung 200a, 200b umfasst eine andere Ausführung einer Hebevorrichtung 220a, 220b. Diese Hebevorrichtung 220a, 220b weist einen Stellantrieb 224a, 224b und das die Teile 1, 2 zwischen einer Transportstellung und einer gegenüber dieser oberhalb oder unterhalb liegenden Bereitstellungsposition gemeinsam anhebende oder absenkende Auflagerelement 213a, 213b auf. Das Auflagerelement 213a, 213b ist durch das Spannwerkzeug 201a, 201b gebildet und ist mit diesem ein etwa L-förmiges Schieberelement 221 a, 221 b verbunden. Das Schieberelement 221 a, 221 b ist über zumindest ein Führungsorgan 222a, 222b auf zumindest einer Führungsbahn 223a, 223b am Tragrahmen 202a, 202b, insbesondere an der Tragwand 206a, 206b geführt und über den Stellantrieb 224a, 224b entlang der Führungsbahn 223a, 223b im Wesentlichen vertikal verstellbar. Das Spannwerkzeug 201a, 201b kragt an der Führungsbahn 223a, 223b senkrecht vor. Der Stellantrieb 224a, 224b ist nach gezeigter Ausführung durch einen Elektro- oder Fluidantrieb gebildet und mit dem Auflagerelement 213a, 213b bzw. dem Schieberelement 221a, 221b bewegungsmäßig gekoppelt.

Die Spannwerkzeuge 201a, 201b der Spanneinrichtung 194a, 194b sind zwischen einer Ausgangsstellung, wie in vollen Linien eingetragen, und einer ober- oder unterhalb liegenden Betätigungsstellung, wie in strichlierte Linien eingetragen, synchron verstellbar. Dabei wird über geeignete Mittel, beispielsweise eine mechanische Endlagenbegrenzung, die Ansteuerung des Stellantriebes 224a, 224b vorgenommen, sodass die Spannwerkzeuge 201a, 201b in deren Betätigungsstellung stets eine exakte Höhenposition einnehmen und ein zuverlässiger Spannvorgang des in dieser Figur nicht eingetragenen, ersten Teiles 1 erfolgen kann. Jedes Auflagerelement 213 a, 213b bzw. Spannwerkzeug 201a, 201b weist nur eine horizontale Auflagefläche 216a, 216b und ein die vertikale Anschlagfläche 217a, 217b ausbildendes Anschlagelement auf.

Eine andere, nicht gezeigte Ausführung besteht darin, dass am Tragrahmen 202a, 202b, insbesondere an der vorderen Tragwand 206a, b ein Stellantrieb 224a, 224b in Form eines Linearantriebes befestigt ist, der einen Elektromotor und einen über eine an diesen angeflanschte Gewindespindel positioniert verstellbaren und entlang einer Führungsbahn geführten Schlitten umfasst. Das Spannwerkzeug 201a, 201b ist in diesem Fall am Schlitten befestigt.

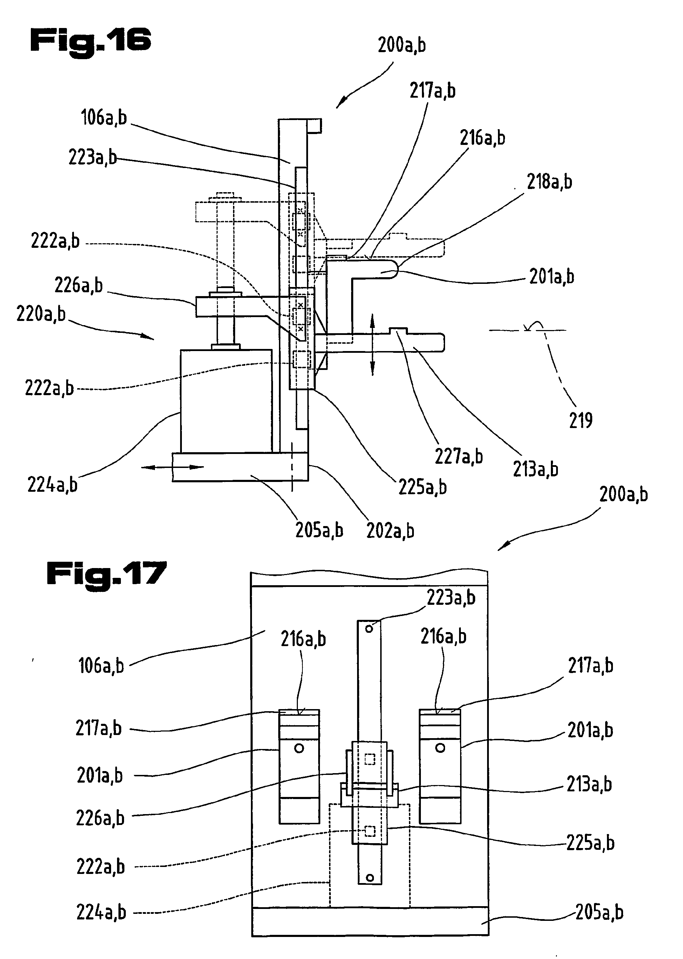

In den gemeinsam beschriebenen Fig. 16 und 17 ist eine weitere Ausführungsvariante der Höhenpositioniervorrichtung 200a, 200b der Spanneinrichtungen 194a, 194b in unterschiedlichen Ansichten gezeigt. Jede Spanneinrichtung 194a, 194b umfasst nach dieser Ausführung zwei Spannwerkzeuge 201a, 201b, von welchen jedes die Auflagefläche 217a, 217b und Anschlagfläche 216a, 216b ausbildet. Die Spannwerkzeuge 201a, 201b sind zu beiden Seiten der Führungsbahn 223a, 223b angeordnet und am Tragrahmen 202a, 202b befestigt. Nach dieser Ausführung sind die Höhenpositioniervorrichtung 200a, 200b bzw. die Hebevorrichtung 220a, 220b und das Spannwerkzeug 201a, 201b getrennt voneinander ausgebildet. Die Höhenpositioniervorrichtung 200a, 200b umfasst wiederum die Hebevorrichtung 220a, 220b, wovon letztere das die Teile 1, 2 (nicht dargestellt) zwischen einer am Teiletransportträger 48 befindlichen Transportstellung und einer gegenüber dieser ober- oder unterhalb liegende Bereitstellungsposition anhebende oder absenkende Auflagerelement 213a, 213b ausbildet. Demnach sind das Spannwerkzeug 201a, 201b und das Auflagerelement 213a, 213b voneinander getrennt und relativ zueinander verstellbar ausgebildet. Die Hebevorrichtung 220a, 220b umfasst zumindest ein Führungsorgan 222a, 222b, mittels dem das Auflagerelement 213a, 213b auf zumindest einer Führungsbahn 223a, 223b geführt und mittels einem Stellantrieb 224a, 224b entlang der Führungsbahn 223a, 223b gemäß eingetragenem Doppelpfeil vertikal verstellbar ist.

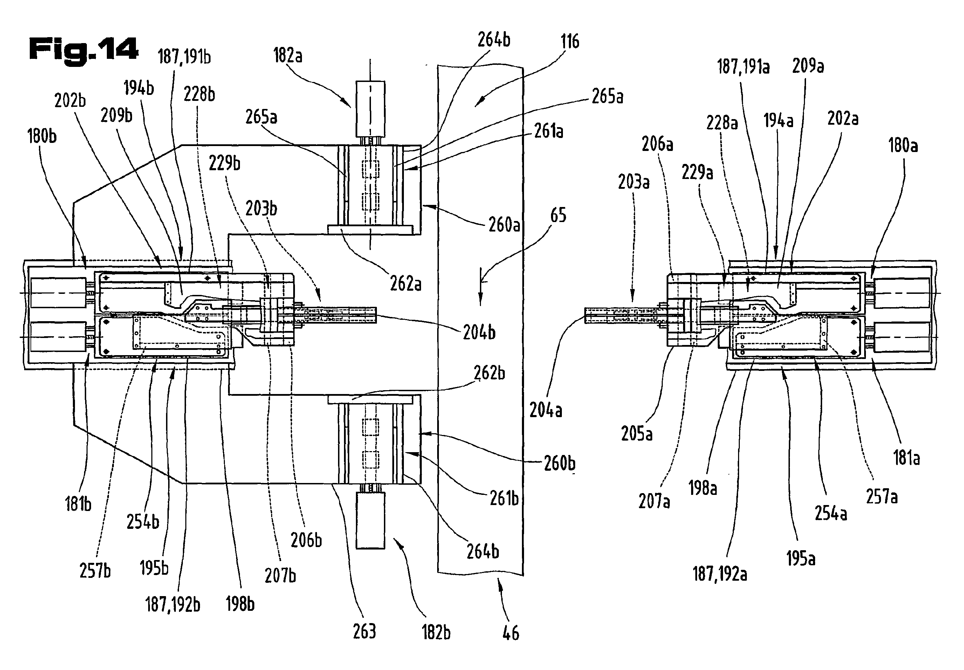

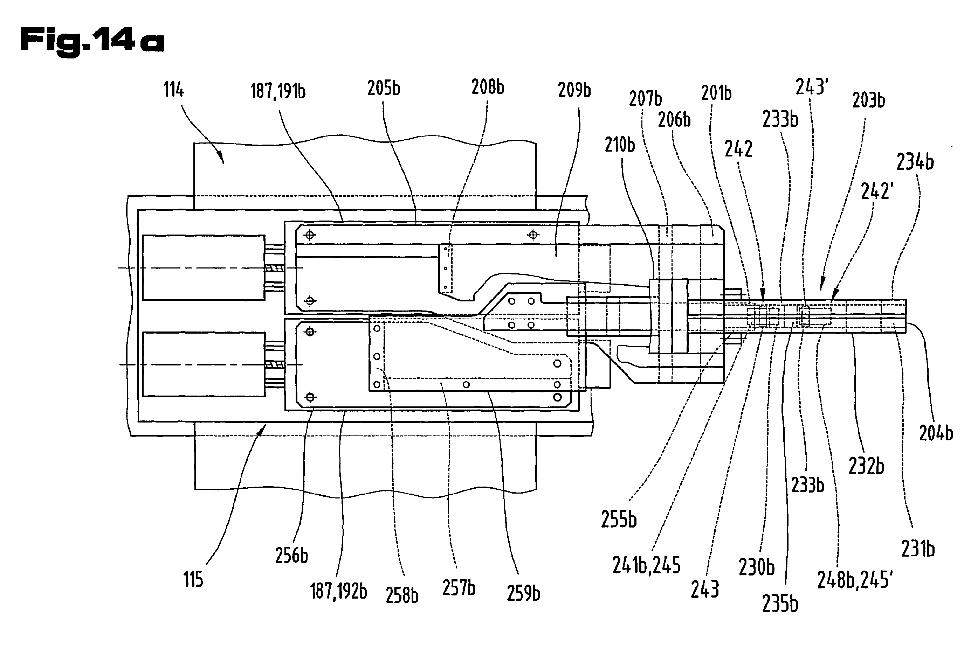

Das Führungsorgan 222a, 222b ist auf einem Schlitten 225a, 225b gelagert. Der Schlitten 225a, 225b ist über eine Konsole mit dem Auflagerelement 213a, 213b verbunden. Der Stellantrieb 224a, 224b ist seinerseits über ein Übertragungselement 226a, 226b mit dem Schlitten 225a, 225b bzw. Auflagerelement 213a, 213b bewegungsmäßig gekoppelt. Der Stellantrieb 224a, 224b ist durch einen Elektro- oder Fluidmotor gebildet. Das Auflagerelement 213a, 213b ragt mit seiner der Transporteinrichtung 46 (siehe Fig. 13 und 14) zugewandten Kante an der Kante 118a, 118b des Spannwerkzeuges 201 a, 201b vor und weist an seiner Oberseite ein Anschlagelement 227a, 227b auf, um sicherzustellen, dass während dem Anheben der nicht dargestellten Teile 1, 2 der erste Teil 1 nicht mit dem Spannwerkzeug 201a, 20 1 b kollidiert. Demnach ist das Anschlagelement 227a, 227b gegenüber die Kante 218a, 218b des Spannwerkzeuges 201a, 201b in Richtung zur Transporteinrichtung 46 versetzt angeordnet und überragt dessen vertikale Anschlagfläche die Kante 218a, 218b.

Das Auflageelement 213a, 213b ist aus einer Ausgangsstellung, wie in volle Linien eingetragen, in eine knapp oberhalb der Auflagefläche 216a, 216b des Spannwerkzeuges 201a, 201b liegende Betätigungsstellung, wie in strichlierte Linien eingetragen, verstellbar ausgebildet. Die Auflageelemente 213a, 213b der Spanneinrichtungen 194a, 194b heben dabei einen auf diesen aufgelagerten Teil 1 gemeinsam mit dem Teil 2 an oder senken den Teil 1 gemeinsam mit dem Teil 2 ab. Nach dem Erreichen der Betätigungsstellung der Auflagerelemente 213a, 213b oder während dem Absenken derselben in Richtung der Ausgangsstellung, werden die Paare von Spannwerkzeugen 201 a, 201 b bzw. die Spanneinrichtungen 194a, 194b aufeinander zugestellt, sodass ein Abstand zwischen den aufeinander zugewandten Kanten 218a, 218b der Spannwerkzeuge 201a, 201b geringer ist als die Länge des ersten Teiles 1 (nicht dargestellt). Werden nun die Auflagerelemente 213a, 213b mit den Teilen 1, 2 in Richtung der Ausgangsstellung nach unten bewegt, wird der Teil 1 gemeinsam mit dem Teil 2 an den in einer Ebene befindlichen Auflageflächen 216a, 216b der Spannwerkzeuge 201a, 201b abgesetzt. Die Auflagerelemente 213a, 213b werden bis in ihre Ausgangsstellungen zurückbewegt. Der Spannvorgang des Teiles 1 wird im Nachfolgenden noch näher beschrieben.

Eine andere nicht gezeigte Ausführung besteht darin, dass die Höhenpositioniervorrichtungen 200a, 200b bzw. die Hebevorrichtungen 220a, 220b mit den einen Teil 1 abstützenden Auflagerelementen 213a, 213b zu beiden Seiten der Transporteinrichtung 46 und getrennt von den Spanneinrichtungen 194a, 194b; 195a, 195b der Spanneinheiten 114, 115 ausgebildet und in der Fügestation 43 im Nahbereich der Spanneinheiten 114, 115 angeordnet sind.

Genauso gut ist es auch möglich, dass die Fügestation 43 im Nahbereich der Spanneinheiten 114, 115 nur eine Höhenpositioniervorrichtung 200a bzw. eine Hebevorrichtung 220a mit dem Auflagerelement 213a aufweist, mit dem beide Teile 1, 2 zwischen einer Transportstellung und Bereitstellungsposition gemeinsam angehoben oder abgesenkt werden.

Werden die Teile 1, 2 auf zwei Teiletransportträgern 48 getrennt von den Übernahmepositionen 106, 106' zur Halteposition 110 in die Fügestation 43 transportiert, ist einerseits eine erste Höhenpositioniervorrichtung für den ersten Teil 1 und andererseits eine zweite Höhenpositioniervornchtung für den zweiten Teil 1 vorgesehen. Die Höhenpositioniervorrichtungen weisen jeweils die Hebevorrichtungen auf. Die erste Hebevorrichtung bildet ein den ersten Teil 1 zwischen einer am Teiletransportträger 48 befindlichen Transportstellung und einer gegenüber dieser ober- oder unterhalb liegende Bereitstellungsposition des ersten Teiles 1 anhebendes oder absenkendes, erstes Auflagerelement aus. Die zweite Hebevorrichtung bildet ein den zweiten Teil 2 zwischen einer am Teiletransportträger 48 befindlichen Transportstellung und einer gegenüber dieser ober- oder unterhalb liegende Bereitstellungsposition des zweiten Teiles 2 anhebendes oder absenkendes, zweites Auflagerelement aus. Im allgemeinen können die erste und zweite Höhenpositioniervorrichtung identisch aufgebaut sein. Dabei kann eine der Spanneinrichtungen 194a, 194b, 195a, 195 mit der zweiten Höhenpositioniervorrichtung oder beide Spanneinrichtungen 194a, 194b, 195a, 195 der Spanneinheiten 114, 115 mit jeweils einer zweiten Höhenpositioniervorrichtung ausgestattet sein. Andererseits kann auch die Fügestation 43 mit zumindest einer zweiten Höhenpositioniervorrichtung versehen sein, die getrennt von den Spanneinheiten 114, 115 ausgebildet und im Nahbereich deren angeordnet ist.

Wie bereits oben beschrieben, umfasst jede Spanneinrichtung 194a, 194b eine Anpressvorrichtung 203a, 203b, wie diese in den Fig. 13a und 14a dargestellt ist. Die Anpressvorrichtung 203a, 203b der Spanneinrichtungen 194a, 194b umfassen jeweils zwei über getrennte Stellvorrichtungen 228a, 228b, 229a, 229b relativ zueinander verstellbare Anpresselemente 230a, 230b, 231a, 231b und einen Gehäuseteil 232a, 232b, der über einen Flansch am Tragrahmen 202a, 202b, insbesondere der vertikalen Tragwand 206a, 206b befestigt ist. Der Gehäuseteil 232a, 232b umfasst zwei im Abstand voneinander angeordnete Seitenwände 233a, 233b, einen diese verbindenden Boden 234a, 234b und einen Deckel 235a, 235b. Der Boden und Deckel 234a, 234b, 235a, 235b bilden auf ihren einander zugewandten Innenseiten jeweils eine Führungsfläche 236a, 236b aus, entlang denen noch näher zu beschreibende Horizontalschieber 237a, 237b, 238a, 238b geführt sind. Die Horizontalschieber 237a, 237b, 238a, 238b bilden wiederum auf ihren den Führungsflächen 236a, 236b zugewandten Außenseiten und an diesen aufliegende Führungsflächen 239a, 239b aus. Zusätzlich sind die Horizontalschieber 237a, 237b, 238a, 238b auf ihren einander zugewandten Innenseiten mit inneren Führungsflächen 240a, 240b versehen. Die Horizontalschieber 237a, 237b, 238a, 238b stützen sich mit ihren inneren Führungsflächen 240a, 240b aufeinander ab und führen sich gegenseitig.

Das erste Anpresselement 230a, 230b ist an einem ersten Vertikalschieber 241a, 241b befestigt. Der erste Vertikalschieber 241a, 241b ist über eine Kulissenanordnung 242 mit dem unteren Horizontalschieber 237a, 237b bewegungsmäßig gekoppelt. Dazu ist der in Längsrichtung des Gehäuseteiles 232a, 232b horizontal und quer zur Vorschubrichtung -gemäß Pfeil 46 - der Teiletransporträger 48 verstellbare, untere Horizontalschieber 237a, 237b mit einem Kulissenelement 243, beispielsweise ein zylindrischer Bolzen, versehen, das innerhalb einer bogenförmigen Kulissenbahn 244 im ersten Vertikalschieber 241a, 241b gelagert ist. Wie in Fig. 14, 14a ersichtlich, sind der Boden 234a, 234b, Deckel 235a, 235b und die Horizontalschieber 237a, 237b, 238a, 238b mit vertikal übereinanderliegenden, ersten Durchtrittsöffnungen 245 versehen. Der Vertikalschieber 241a, 241b ist etwa quaderförmig ausgebildet und entspricht die Umrissform der Durchtrittsöffnung 245 der Außenkontur des Vertikalschiebers 241a, 241b. Der Vertikalschieber 241a, 241b durchsetzt die Durchtrittsöffnungen 245 und ist mittels der im Gehäuseteil 232b bzw. Boden 234a, 234b, Deckel 235a, 235b ausgebildeten Durchtrittsöffnungen 245 zwangsgeführt. Der untere Vertikalschieber 241a, 241 b ist über ein Koppelement 246 mit einem ersten Antriebsmotor 247a, 247b, beispielsweise einen Elektro- oder Fluidmotor verbunden. Der Antriebsmotor 247a, 247b ist am Tragrahmen 202a, 202b, insbesondere der mittleren Tragwand 207a, 207b befestigt.

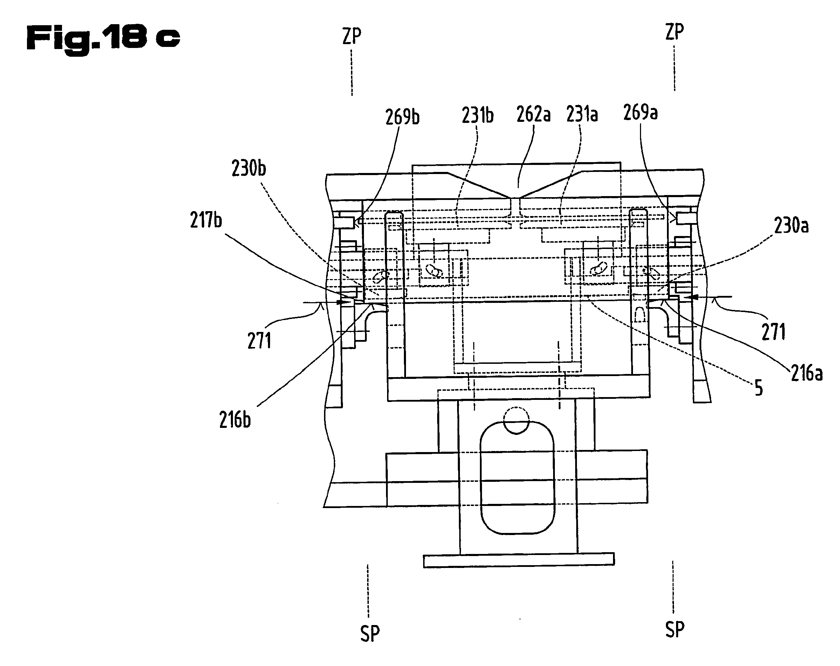

Wird nun der untere Horizontalschieber 237a, 237b mittels dem Antriebsmotor 247a, 247b aus der gezeichneten Ausgangsstellung in eine in Fig. 18c dargestellte Betätigungsstellung von links nach rechts verschoben, wird gleichzeitig das erste Anpresselement 230a, 230b in Richtung auf das feststehende Spannwerkzeug 201a, 201b bewegt und der nicht weiters dargestellte, erste Teil 1 zwischen dem Spannwerkzeug 201a, 201b und dem Anpresselement 230a, 230b fixiert.

Das zweite Anpresselement 231a, 231b ist an einem zweiten Vertikalschieber 248a, 248b befestigt und mit einer Spannbacke 252a, 252b versehen. Der zweite Vertikalschieber 248a, 248b ist über eine Kulissenanordnung 242' mit dem oberen Horizontalschieber 238a, 238b bewegungsmäßig gekoppelt. Dazu ist der in Längsrichtung des Gehäuseteiles 232a, 232b horizontal und quer zur Vorschubrichtung - gemäß Pfeil 46 - der Teiletransporträger 48 verstellbare, obere Horizontalschieber 238a, 238b mit einem Kulissenelement 243', beispielsweise ein zylindrischer Bolzen, versehen, das innerhalb einer bogenförmigen Kulissenbahn 244' im zweiten Vertikalschieber 248a, 248b gelagert ist. Wie in Fig. 14, 14a ersichtlich, sind der Boden 234a, 234b, Deckel 235a, 235b und die Horizontalschieber 237a, 237b, 238a, 23 8b mit vertikal übereinanderliegenden, zweiten Durchtrittsöffnungen 245` versehen. Der Vertikalschieber 248a, 248b ist etwa quaderförmig ausgebildet und entspricht die Umrissform der Durchtrittsöffnung 245' der Außenkontur des Vertikalschiebers 248a, 248b. Der Vertikalschieber 248a, 248b durchsetzt die Durchtrittsöffnungen 245' und ist mittels der im Gehäuseteil 232b bzw. Boden 234a, 234b, Deckel 235a, 235b ausgebildeten Durchtrittsöffnungen 245' zwangsgeführt. Der Vertikalschieber 248a, 248b ist über ein Koppelement 249a, 249b mit einem zweiten Antriebsmotor 251a, 251b, beispielsweise einen Elektro- oder Fluidmotor verbunden. Der zweite Antriebsmotor 251a, 251b ist über einen Montagewinkel 250a, 250b mit dem Tragrahmen 202a, 202b, insbesondere der Tragwand 207a, 207b verbunden.

Wird nun der obere Horizontalschieber 238a, 238b mittels dem Antriebsmotor 251a, 251b aus der gezeichneten Ausgangsstellung in eine in Fig. 18c dargestellte Betätigungsstellung von links nach rechts verschoben, wird gleichzeitig das zweite Anpresselement 231a, 231b in Richtung auf das feststehende Widerlager 204a, 204b bewegt und der nicht weiters dargestellte, zweite Teil 2 zwischen den Spannbacken 212a, 212b, 252a, 252b fixiert.

Die das erste Anpresselement 230a, 230b betätigende Stellvorrichtung 228a, 228b umfasst den oben beschriebenen, ersten Vertikalschieber 241a, 241b, die Kulissenanordnung 242, das Koppelelement 246a, 246b und den ersten Antriebsmotor 247a, 247b. Die das zweite Anpresselement 231a, 231b betätigende Stellvorrichtung 229a, 229b umfasst den oben beschriebenen, zweiten Vertikalschieber 248a, 248b, die Kulissenanordnung 242', das Koppelelement 249a, 249b und den zweiten Antriebsmotor 251a, 251b.

Nach dieser Ausführung bildet die zweite Stellvorrichtung 229a, 229b eine Hebevorrichtung einer zweiten Höhenpositioniervorrichtung aus, wobei das zweite Anpresselement 231a, 231b bzw. die Spannbacke 252a, 252b das den zweiten Teil 2 zwischen einer am Teiletransportträger 48 befindlichen Transportstellung und einer gegenüber dieser ober- oder unterhalb liegende Bereitstellungsposition anhebende oder absenkende Auflagerelement der Hebevorrichtung ausbildet.

Wie ebenfalls in Fig. 13 und 14 eingetragen, umfasst das Spannsystem 111 der in Fig. 1 und 10 dargestellten Fügestation 43, die zweite Spanneinheit 115. Diese weist zu beiden Seiten der Transporteinrichtung 46 angeordnete, zusammenwirkende Spanneinrichtungen 195a, 195b auf.

Die Spanneinrichtungen 195a, 195b der zweiten Spanneinheit 115 umfassen jeweils die Antriebseinheit 181a, 181b, einen Tragrahmen 254a, 254b sowie ein Spannwerkzeug 255a, 255b. Das Spannwerkzeug 255a, 255b ist über den Tragrahmen 254a, 254b mit der Rüstplattform 187 der Antriebseinheit 181a, 181b verbunden. Der Tragrahmen 254a, 254b umfasst eine an der Rüstplattform 187 befestigte Montageplatte 256a, 256b, an dieser befestigte, senkrecht ausgerichtete Tragwände 257a, 257b, 258a, 258b sowie eine an diesen, oben befestigte Tragplatte 259a, 259b. An der Tragplatte 259a, 259b ist das Spannwerkzeug 255a, 255b montiert. Die aufeinander zugerichteten Spannwerkzeuge 255a, 255b sind nun über die Antriebseinheiten 181 a, 181 b quer zur Vorschubrichtung - gemäß Pfeil 65 - der Teiletransportträger 48 und zum Spannwerkzeug 201a, 201b der Spanneinrichtungen 194a, 194b der ersten Spanneinheit 114 relativ verstellbar ausgebildet. Die gegebenenfalls synchron zueinander verstellbaren Spannwerkzeuge 201a, 201b als auch die Spannwerkzeuge 255a, 255b sind ausschließlich in horizontalen Ebenen verstellbar.

Wie weiters aus den Fig. 13 und 14 ersichtlich, umfasst das Spannsystem 111 der in Fig. 1 und 10 dargestellten Fügestation 43 eine dritte Spanneinheit 116, die zwei in Vorschubrichtung - gemäß Pfeil 65 - der Teiletransportträger 48 hintereinander angeordnete und über die Antriebseinheiten 182a, 182b zusammenwirkende Spanneinrichtung 260a, 260b umfasst. Die Spanneinrichtungen 260a, 260b der dritten Spanneinheit 116 umfassen jeweils die Antriebseinheit 182a, 182b, einen Tragrahmen 261a, 261b sowie ein Spannwerkzeug 262a, 262b. Jedes Spannwerkzeug 262a, 262b ist über den Tragrahmen 261a, 261b mit der Rüstplattform 187 der Antriebseinheit 182a, 182b verbunden. Die Antriebseinheiten 182a, 182b der Spanneinrichtungen 260a, 260b sind über eine etwa U-förmige Befestigungsplatte 263 am Schlitten 198b montiert. Die Schenkeln der Befestigungsplatte 263 tragen die Antriebseinheiten 182a, 182b, während deren Basis mit dem Schlitten 198b verbunden ist. Der Tragrahmen 261a, 261b umfasst eine an der Rüstplattforrn 187 befestigte Montageplatte 264a, 264b sowie an dieser befestigte, senkrecht ausgerichtete Tragwände 265a, 265b, mit denen das Spannwerkzeug 262a, 262b verbunden ist. Die Spannwerkzeuge 262a, 262b sind über die Antriebseinheiten 182a, 182b in Vorschubrichtung - gemäß Pfeil 65 - der Teiletransportträger 49 gegebenenfalls synchron verstellbar ausgebildet.

Wie aus der Betrachtung der Fig. ersichtlich, sind die Spanneinrichtungen 194a, 195a auf dem Schlitten 198a des Linearantriebes 196a (Zustellachse 112a) und die Spanneinrichtungen 194b, 195b, 260a, 260b am Schlitten 198b des Linearantriebes 196b (Zustellachse 112b) aufgebaut.

Es sei an dieser Stelle kurz darauf hingewiesen, dass die an sich bekannten Linearantriebe der Spanneinheiten 114 bis 116 und des Antriebssystems 156 für die Schweißvorrichtung 119 sowie der Zustellachsen 112a, 112b jeweils einen Elektromotor, insbesondere einen stufenlos steuerbaren Servo- oder Schrittschaltmotor, eine an diesen direkt angeflanschte Gewindespindel und zumindest eine über die Gewindespindel entlang von Führungen verstellbare Spindelmutter umfasst, wobei an der Spindelmutter der Schlitten der Spanneinheiten 114 bis 116 und des Antriebssystems 156 gelagert ist. Die Elektromotoren sind über Verbindungsleitungen an die elektronische Steuereinrichtung 36 angeschlossen. Wie im Nachfolgenden noch beschrieben wird, wird von jedem der Elektromotoren der Spanneinheiten 114 bis 116 das ausgeübte Drehmoment bzw. der Motorstrom erfasst, der Steuereinrichtung 36 und/oder Auswerteeinheit 38 gemeldet und daraus eine Spannkraft und/oder ein Verfahr- und/oder Spannweg jeder einzelnen Spanneinrichtung der Spanneinheiten 114 bis 116 ermittelt, worauf ein Soll-Istwert-Vergleich im Vergleichsmodul 39 durchgeführt und eine Information über das Qualitätsmerkmal des zu verarbeitenden Teiles 1, 2 in Form von "Gutteil" oder "Schlechtteil" im Auswertemodul 40 ausgewertet und in die Steuereinrichtung 36 eingegeben werden, anhand deren die Spanneinrichtungen der Spanneinheiten 114 bis 116 und/oder das Antriebssystems 156 für die Schweißvorrichtung 119 sowie die Zustellachsen 112a, 112b angesteuert werden.

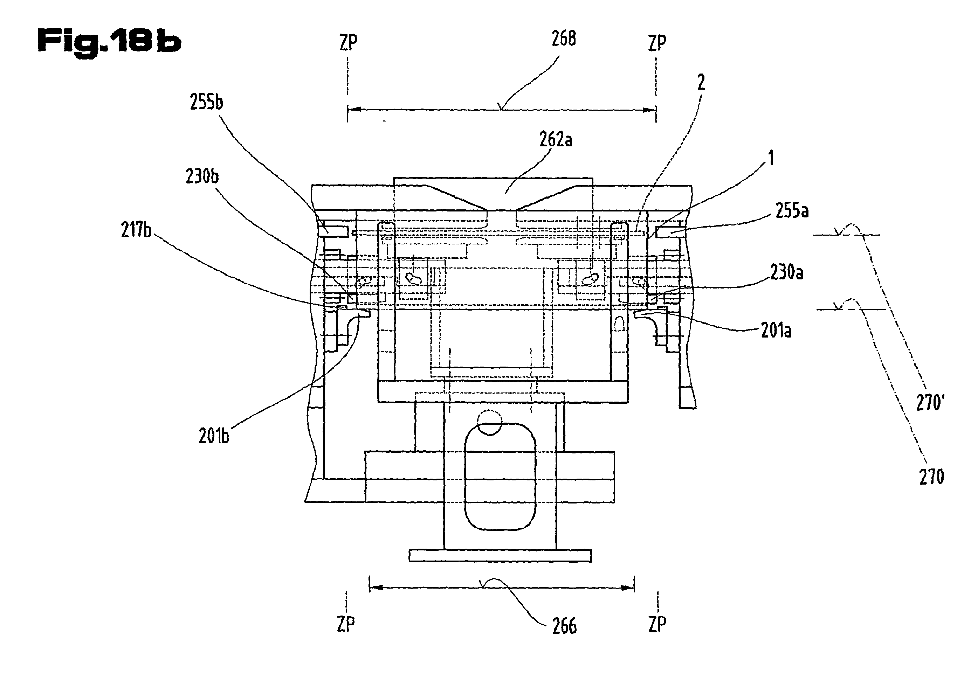

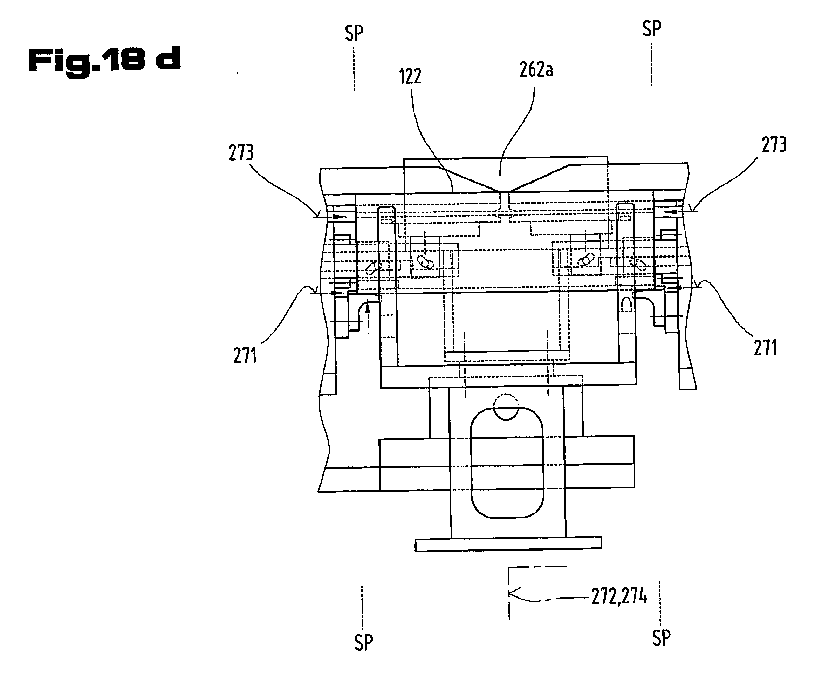

In den Fig. 18a bis 18f wird nun der Spannvorgang mittels dem Spannsystem 111 näher beschrieben. Zunächst werden die Spanneinrichtungen 194a, 194b, 195a, 195b der Spanneinheiten 114, 115 durch Verfahren der Schlitten 198a, 198b der Zustellachsen 112a, 112b aufeinander zu bewegt, sodass eine lichte Weite 266 bemessen zwischen den einander zugewandten Kanten 218a, 218b der Spannwerkzeuge 201a, 201b soweit verkleinert wird, bis diese geringer ist als die Länge 267 des ersten Teiles 1. Ebenso wird eine lichte Weite 268 bemessen zwischen den einander zugewandten Anschlagflächen 269 verkleinert. Dabei werden die Spannwerkzeuge 201a, 201b, 255a, 255b der Spanneinheiten 214, 215 jeweils aus einer vom Teil 1, 2 entfernten Ausgangsposition (AP), wie in strichlierte Linien in Fig. 18a eingetragen, in eine Zwischenposition (ZP), wie in strichlierte Linien in Fig. 18b eingetragen, bewegt. Die Bewegung der Spannwerkzeuge 201a, 201b, 255a, 255b zwischen der Zwischenposition (ZP) und einer den Teil 1, 2 festlegenden bzw. klemmenden Spannposition (SP), wie in Fig. 18d dargestellt, erfolgt über die Antriebseinheiten 180a, 180b, 181a, 181b. In der Zwischenposition (ZP) liegen die Anschlagflächen 217a, 217b, 269a, 269b der Spannwerkzeuge 201a, 201b, 255a, 255b im Nahbereich knapp vor den Anlageflächen 10, 12 der Teile 1, 2.

Wie oben beschrieben, sind die aufeinander zustellbaren Spannwerkzeuge 201a, 201b mit der Auflaufschräge 215a, 215b versehen, sodass alleinig auf Grund der Zustellbewegung der Spannwerkzeuge 201a, 201b von der Ausgangsposition (AP) in die Zwischen- oder Spannposition (ZP, SP), der zuvor mittels dem Teiletransportträger 48 in die Halteposition 110 der Fügestation 43 angelieferte Teile 1 auf die Spannwerkzeuge 201a, 201b aufgeschoben und vom Teiletransportträger 48 abgehoben wird. Wie in den vorhergehenden Fig. erläutert, ist der zweite Teil 2 an Auflagefortsätzen 8 des ersten Teiles 1 abgestützt und werden die Teile 1, 2 gemeinsam über einen Teiletransportträger 48 in die Fügestation 43 antransportiert als auch gemeinsam vom Teiletransportträger 48 angehoben oder abgesenkt. Hierbei wird der erste Teil 1 aus der am Teiletransportträger 48 befindlichen Transportstellung 219 in eine ober- oder unterhalb vom Teiletransportträger 48 befindliche Bereitstellungsposition 270 als auch der zweite Teil 2 aus der am Teiletransportträger 48 befindlichen Transportstellung 219' in eine ober- oder unterhalb vom Teiletransportträger 48 befindliche Bereitstellungsposition 270' bewegt. Werden im Gegensatz dazu, die Teile 1, 2 auf zwei Teiletransportträgern 48 getrennt angeliefert, wird der erste Teil 1 über die erste Höhenpositioniervorrichtung 200a, 200b und der zweite Teil 2 über die zweite Höhenpositioniervorrichtung vom Teiletransportträgern 48 abgehoben oder abgesenkt.

In den Bereitstellungspositionen 270, 270' befinden sich die Teile 1, 2 zwischen den gegenüberliegenden Spannwerkzeugen 201a, 201b und 255a, 255b der Spanneinrichtungen 194a, 194b, 195a, 195b.

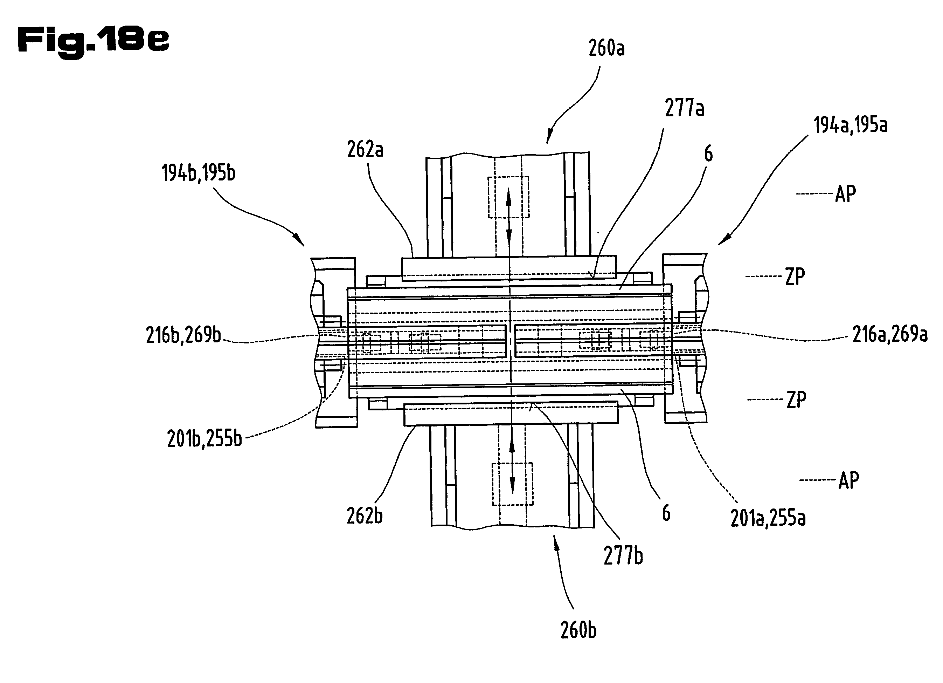

Während der Zustellbewegung der Spanneinrichtungen 194a bis 195b der Spanneinheiten 114, 115 werden gleichzeitig auch die Spannwerkzeuge 262a, 262b der Spanneinrichtungen 260a, 260b der Spanneinheit 115 jeweils aus einer Ausgangsposition (AP), siehe Fig. 18a, in eine Zwischenposition (ZP), siehe Fig. 18e, knapp vor die Schenkeln 6 des Teiles 1 bewegt. Die Bewegung der Spannwerkzeuge 262a, 262b zwischen der Zwischenposition (ZP) und einer die Teile 1, 2 fixierenden Spannposition (SP), wie in Fig. 18d dargestellt, erfolgt über die Antriebseinheiten 182a, 182b.

Gemäß Fig. 18c werden zunächst die Spannwerkzeuge 201a, 201b der Spanneinrichtungen 194a, 195b relativ zueinander verstellt bis die Anschlagflächen 217a, 217b gegen die stirnseitigen Anlageflächen 10 des ersten Teiles 1 anliegen, sodass der erste Teil 1 in einer ersten Raumrichtung positioniert und gespannt wird. Der Teil 1 wird dabei mit entgegengerichteten Spannkräften - gemäß eingetragenen Pfeilen 271 - beaufschlagt. Auf diese Weise ist der erste Teil 1 in einer ersten Raumrichtung festgelegt.

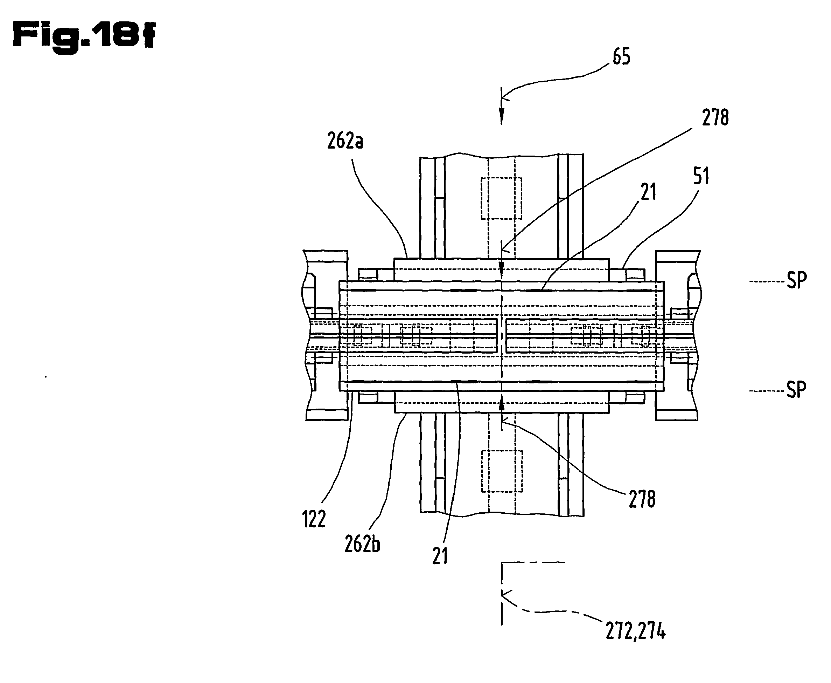

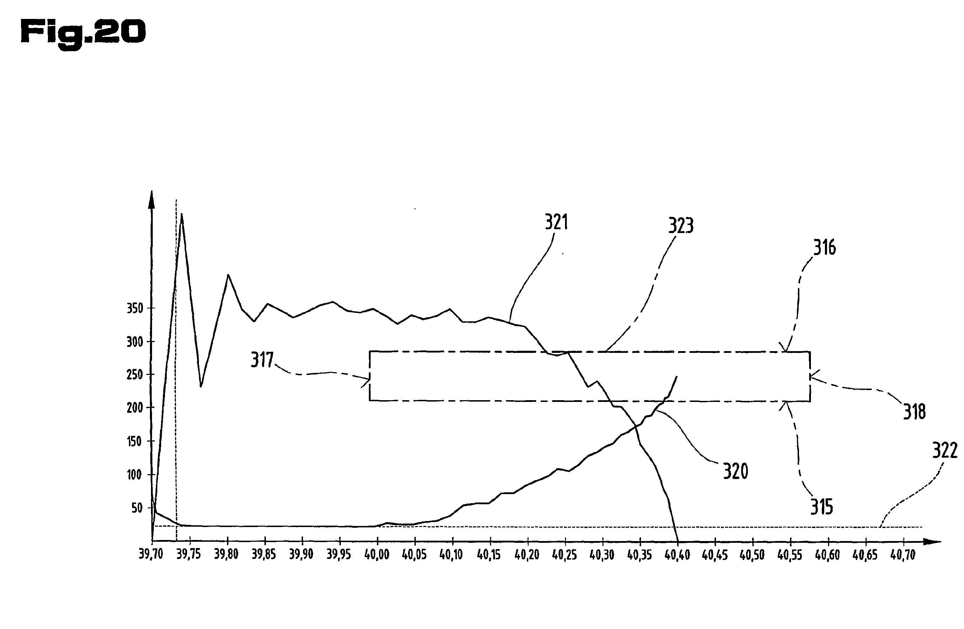

In einer ersten Ausführung sind die Elektromotoren 188a, 188b der Spanneinrichtungen 194a, 194b elektronisch gekoppelt und werden die Spannwerkzeuge 201a, 201b über die Antriebseinheiten 180a, 180b aus der in Fig. 18b gezeigten Zwischenposition (ZP) in die in Fig. 18c in strichlierte Linien eingetragene, klemmende Spannposition (SP) synchron zueinander verstellt bzw. aufeinander zubewegt bis die Anschlagflächen 217a, 217b gegen die stirnseitigen Anlageflächen 10 des ersten Teiles 1 anliegen und den Teil 1 zwischen diesen spannen. Dadurch wird der Teil 1 in seiner Spannposition 274 (siehe Fig. 18d, 18f) bezüglich der Fügestation 43, wie in Fig. 1 und 10 dargestellt, zentrisch aufgenommen und gespannt, wie durch strichpunktierte Linie angedeutet. Die Istwerte der Spannkräfte werden aus den ausgeübten Drehmomenten bzw. dem Motorstrom der stufenlos steuerbaren Elektromotoren 188a, 188b der Spanneinrichtungen 194a, 194b vorzugsweise laufend ermittelt und der elektronischen Auswerteinheit 38 (siehe Fig. 3) gemeldet sowie in dieser ein Soll-Istwert-Vergleich der Spannkräfte durchgeführt, wie anhand der Fig. 20 bis 22 näher beschrieben wird. Zusätzlich werden noch die zwischen der Ausgangs-, Zwischen- und Spannposition (AP, ZP, SP) zurückgelegten Verfahr- und Spannwege der Spannwerkzeuge 20 1 a, 20 1 b vorzugsweise laufend als Istwert erfasst und der Auswerteeinheit 38 übermittelt, sodann in dieser ein Soll-Istwert-Vergleich der Verfahr- und Spannwege der Spannwerkzeuge 201a, 201b vorzugsweise laufend durchgeführt.

In einer zweiten Ausführung, wird nur eines der Spannwerkzeuge 201b über die Antriebseinheit 180b aus der in Fig. 18b gezeigten Zwischenposition (ZP) in die in Fig. 18c in strichlierte Linien eingetragene Spannposition (SP) verstellt, während das andere Spannwerkzeug 201a in der Zwischenposition (ZP) verharrt und dadurch die Spannposition (SP) einnimmt. Demnach entspricht die Spannposition (SP) der Zwischenposition (ZP). Nach dieser Ausführung wird nur von einem Elektromotor 188b das ausgeübte Drehmoment bzw. der Motorstrom erfasst und daraus die auf den Teil 1 einwirkende Spannkraft ermittelt und der Auswerteinheit 38 gemeldet sowie in dieser ein Soll-Istwert-Vergleich der Spannkraft durchgeführt, wie anhand der Fig. 20 bis 22 näher beschrieben wird. Zusätzlich werden noch die zwischen der Ausgangs- und Zwischenposition (AP, ZP) zurückgelegten Verfahr- und Spannwege der Spannwerkzeuge 201a, 201b sowie die zwischen der Zwischen- und Spannposition (AP, ZP, SP) zurückgelegten Verfahr- und Spannwege des Spannwerkzeuges 201b vorzugsweise laufend als Istwert erfasst und der Auswerteeinheit 38 übermittelt, sodann in dieser ein Soll-Istwert-Vergleich der Verfahr- und Spannwege der Spannwerkzeuge 201a, 201b vorzugsweise laufend durchgeführt.

Wie in Fig. 18c eingetragen, werden während dem Spannvorgang bzw. der Zustellbewegung eines oder beider Spannwerkzeuge(s) 201a, 201b aus der Zwischenposition (ZP) in die klemmenden Spannposition (SP) oder nachdem die Spannwerkzeuge 201a, 201b die Spannposition (SP) erreicht haben, die Anpresselemente 230a, 230b betätigt und aus einer Ruheposition, wie in Fig. 18b eingetragen, in eine Anpressposition, wie in Fig. 18c eingetragen, verstellt. Die Anpresselemente 230a, 230b werden in Richtung auf die Auflagefläche 216a, 216b zubewegt und gegen die Basis 5 des Teiles 1 mit einer Anpresskraft angedrückt, sodass der erste Teil 1 in der Anpressposition der Anpresselemente 230a, 230b auch in einer zweiten Raumrichtung positioniert und gehalten ist.

Nachdem nun der erste Teil 1 in zwei Raumrichtungen festgelegt ist, wird nun auch der zweite Teil 2 mittels der Spannwerkzeuge 255a, 255b der Spanneinrichtungen 195a, 195b der zweiten Spanneinheit 115 gegenüber dem ersten Teil 1 positioniert, gespannt und fixiert.

Wie in Fig. 18c weiters eingetragen, werden zunächst die Spannwerkzeuge 255a, 255b relativ zueinander verstellt bis die Anschlagflächen 269a, 269b gegen die stirnseitigen Anlageflächen 12 des zweiten Teiles 2 anliegen, sodass der zweite Teil 2 relativ zum ersten Teil 1 verstellt, gegenüber den ersten Teil 1 in einer ersten Raumrichtung positioniert und gespannt wird. Der Teil 2 wird dabei mit entgegengerichteten Spannkräften - gemäß in Fig. 18d eingetragenen Pfeilen 273 - gespannt wird. Somit ist nun der zweite Teil 2 in Richtung seiner Längserstreckung gegenüber dem ersten Teil 1 und in einer zweiten Raumrichtung festgelegt.

Hierzu können in einer ersten Ausführung die Elektromotoren 189a, 189b der Spanneinrichtungen 195a, 195b elektronisch gekoppelt und die Spannwerkzeuge 255a, 255b über die Antriebseinheiten 181 a, 181 b aus der in Fig. 18b gezeigten Zwischenposition (ZP) in die in Fig. 18c in strichlierte Linien eingetragene Spannposition (SP) synchron zueinander verstellt bzw. aufeinander zubewegt werden, bis die Anschlagflächen 269a, 269b gegen die stirnseitigen Anlageflächen 12 des zweiten Teiles 2 anliegen und den Teil 2 zwischen diesen spannen. Dadurch wird der Teil 2 in seiner Spannposition (siehe Fig. 18d, 18f) bezüglich der Fügestation 43, wie in Fig. 1 und 10 dargestellt, zentrisch aufgenommen und gespannt, wie durch strichpunktierte Linie angedeutet. Die Istwerte der Spannkräfte werden aus den ausgeübten Drehmomenten bzw. dem Motorstrom der stufenlos steuerbaren Elektromotoren 189a, 189b der Spanneinrichtungen 195a, 195b vorzugsweise laufend ermittelt und der elektronischen Auswerteinheit 38 (siehe Fig. 3) gemeldet sowie in dieser ein Soll-Istwert-Vergleich der Spannkräfte durchgeführt, wie anhand der Fig. 20 bis 22 näher beschrieben wird. Zusätzlich werden noch die zwischen der Ausgangs-, Zwischen- und Spannposition (AP, ZP, SP) zurückgelegten Verfahr- und Spannwege der Spannwerkzeuge 255a, 255b vorzugsweise laufend als Istwert erfasst und der Auswerteeinheit 38 übermittelt, sodann in dieser ein Soll-Istwert-Vergleich der Verfahr- und Spannwege der Spannwerkzeuge 255a, 255b vorzugsweise laufend durchgeführt.

In einer zweiten Ausführung, wird nur eines der Spannwerkzeuge 255b über die Antriebseinheit 181b aus der in Fig. 18b gezeigten Zwischenposition (ZP) in die in Fig. 18c in strichlierte Linien eingetragene Spannposition (SP) verstellt, während das andere Spannwerkzeug 255a in der Zwischenposition (ZP) verharrt und dadurch die Spannposition (SP) einnimmt. Demnach entspricht die Spannposition (SP) der Zwischenposition (ZP). Nach dieser Ausführung wird nur von einem Elektromotor 189b das ausgeübte Drehmoment bzw. der Motorstrom erfasst und daraus die auf den Teil 2 einwirkende Spannkraft ermittelt und der Auswerteinheit 38 gemeldet sowie in dieser ein Soll-Istwert-Vergleich der Spannkraft durchgeführt, wie anhand der Fig. 20 bis 22 näher beschrieben wird. Zusätzlich werden noch die zwischen der Ausgangs- und Zwischenposition (AP, ZP) zurückgelegten Verfahr- und Spannwege der Spannwerkzeuge 255a, 255b sowie die zwischen der Zwischen- und Spannposition (AP, ZP, SP) zurückgelegten Verfahr- und Spannwege des Spannwerkzeuges 255b vorzugsweise laufend als Istwert erfasst und der Auswerteeinheit 38 übermittelt, sodann in dieser ein Soll-Istwert-Vergleich der Verfahr- und Spannwege der Spannwerkzeuge 255a, 255b vorzugsweise laufend durchgeführt.

Gemäß Fig. 18c werden noch vor, während dem Spannvorgang bzw. der Zustellbewegung eines oder beider Spannwerkzeuge(s) 255a, 255b aus der Zwischenposition (ZP) in die Spannposition (SP) oder nachdem die Spannwerkzeuge 255a, 255b die Spannposition (SP) erreicht haben, die Anpresselemente 231a, 231b der zweiten Höhenpositioniervorrichtungen betätigt und aus einer Ruheposition, wie in Fig. 18b eingetragen, in eine Anpressposition, wie in Fig. 18c eingetragen, verstellt. Die Anpresselemente 231a, 231b werden dazu in Richtung auf die Widerlager 204a, 204b zubewegt, der Teil 2 relativ zum ersten Teil 1 bewegt und gegen den Teil 2 mit einer Anpresskraft angedrückt, sodass in der Anpressposition der Anpresselemente 231a, 231b der Teil 2 auch in einer zweiten Raumrichtung positioniert und gehalten ist.

In den nachfolgenden Schritten, wie zu den Fig. 18e und 18f beschrieben, werden die Teile 1, 2 nunmehr auch in einer dritten Raumrichtung gegenüber die Fügestation 43 positioniert und festgelegt, indem die Spannwerkzeuge 262a, 262b der Spanneinrichtungen 260a, 260b relativ zueinander verstellt werden, bis die Anschlagflächen 277a, 277b gegen die Außenseite der Schenkeln 6 vom ersten Teil 1 anliegen und beide Teile 1, 2 in die im Raum vorgegebene Spannposition 272, 274 gemeinsam bewegt, positioniert und gegeneinander gespannt werden. Die Teile 1, 2 werden dabei mit entgegengerichteten Spannkräften - gemäß eingetragenen Pfeilen 278 - beaufschlagt. Die Spannkräfte 278 der Spannwerkzeuge 262a, 262b sind so gewählt, dass der erste und zweite Teil 1, 2 gegenüber die Spannwerkzeuge 201a, 201b, 255a, 255b und Anpresselemente 230a, 230b, 231a, 231b in der dritten Raumrichtung in die Spannposition 272, 274 bzw. in Vorschubrichtung - gemäß Pfeil 65 - der Teiletransportträger 48 geringfügig verschoben werden können. Auf diese Weise sind die Teile 1, 2 auch in einer dritten Raumrichtung festgelegt und in der Spannposition 272, 274 exakt im Raum positioniert, fixiert und entlang der Fügestellen 17a, 17b miteinander verspannt.

Hierzu können in einer ersten Ausführung die Elektromotoren 190a, 190b der Spanneinrichtungen 260a, 260b elektronisch gekoppelt und die Spannwerkzeuge 262a, 262b über die Antriebseinheiten 182a, 182b aus der in Fig. 18e gezeigten Zwischenposition (ZP) in die in Fig. 18f in strichlierte Linien eingetragene Spannposition (SP) synchron zueinander verstellt bzw. aufeinander zubewegt werden, bis die Anschlagflächen 277a, 277b gegen die Schenkeln 6 des zweiten Teiles 2 anliegen und die Teile 1, 2 gegeneinander gespannt sind. Dadurch, dass mittels den Spannwerkzeugen 262a, 262b ein symmetrisches Spannen erfolgt, werden die Teile 1, 2 nun auch in einer dritten Raumrichtung in die vorgegebene Spannposition 272, 274 verbracht und bezüglich der Fügestation 43 zentrisch aufgenommen und gespannt. Die Istwerte der Spannkräfte werden aus den ausgeübten Drehmomenten bzw. dem Motorstrom der stufenlos steuerbaren Elektromotoren 190a, 190b der Spanneinrichtungen 260a, 260b vorzugsweise laufend ermittelt und der elektronischen Auswerteinheit 38 (siehe Fig. 3) gemeldet sowie in dieser ein Soll-Istwert-Vergleich der Spannkräfte durchgeführt, wie anhand der Fig. 20 bis 22 näher beschrieben wird. Zusätzlich werden noch die zwischen der Ausgangs-, Zwischen- und Spannposition (AP, ZP, SP) zurückgelegten Verfahr- und Spannwege der Spannwerkzeuge 262a, 262b vorzugsweise laufend als Istwert erfasst und der Auswerteeinheit 38 übermittelt, sodann in dieser ein Soll-Istwert-Vergleich der Verfahr- und Spannwege der Spannwerkzeuge 262a, 262b vorzugsweise laufend durchgeführt.

In einer zweiten Ausführung, wird nur eines der Spannwerkzeuge 262b über die Antriebseinheit 182b aus der in Fig. 18e gezeigten Zwischenposition (ZP) in die in Fig. 18f in strichlierte Linien eingetragene Spannposition (SP) verstellt, während das andere Spannwerkzeug 262a in der Zwischenposition (ZP) verharrt und dadurch die Spannposition (SP) einnimmt. Demnach entspricht die Spannposition (SP) der Zwischenposition (ZP). Nach dieser Ausführung wird nur von einem Elektromotor 190b das ausgeübte Drehmoment bzw. der Motorstrom erfasst und daraus die auf die Teile 1, 2 einwirkende Spannkraft ermittelt und der Auswerteinheit 38 gemeldet sowie in dieser ein Soll-Istwert-Vergleich der Spannkraft durchgeführt, wie anhand der Fig. 20 bis 22 näher beschrieben wird. Zusätzlich werden noch die zwischen der Ausgangs- und Zwischenposition (AP, ZP) zurückgelegten Verfahr- und Spannwege der Spannwerkzeuge 262a, 262b sowie die zwischen der Zwischen- und Spannposition (AP, ZP, SP) zurückgelegten Verfahr- und Spannwege des Spannwerkzeuges 262b vorzugsweise laufend als Istwert erfasst und der Auswerteeinheit 38 übermittelt, sodann in dieser ein Soll-Istwert-Vergleich der Verfahr- und Spannwege der Spannwerkzeuge 262a, 262b vorzugsweise laufend durchgeführt.

Nachdem die beiden Teile 1, 2 in den drei Raumrichtungen in die Spannposition 272, 274 bewegt, in dieser positioniert, gespannt und gegebenenfalls fixiert sowie die Qualitätsmerkmale überprüft und positiv ausgewertet wurden, werden die Teile 1, 2 entlang der durch die Spannwerkzeuge 262a, 262b vorgespannten Bereiche an den Fügestellen 17a, 17b mittels Fügenähten 21 zumindest bereichsweise miteinander verbunden, insbesondere verschweißt. Während dem Fügevorgang, werden die Spannwerkzeuge 201a, 201b, 255a, 255b, 262a, 262b ruhig gehalten.

Dabei ist von Vorteil, dass die Fügestellen 17a, 17b zwischen den Teilen 1, 2, sofern diese den Qualitätsanforderungen, insbesondere der Maßhaltigkeit entsprechen, stets an der gleichen Position im Raum vorgegeben sind und die Fügeeinrichtung, insbesondere der Strahlschweißkopf, nach einer einmalig programmierten Bewegungsbahn verfahren werden kann und dabei die Teile 1, 2 miteinander verschweißt. Diese Bewegungsbahn wird beispielsweise im Teach-In-Verfahren programmiert und ist in der Steuereinrichtung 36 abgespeichert. Eine aus dem Stand der Technik bekannte Nahtverfolgung kann dadurch entfallen. Wie noch in den Fig. 20 bis 22 beschrieben wird, kann die Position der Fügestellen 17a, 17b innerhalb eines zulässigen Toleranzfensters liegen und die Schweißverbindung dennoch erfolgen, da der Schweißstrahl im Fokus etwa einen Durchmesser von 0,3 mm bis 0,5 mm aufweist. Der Durchmesser des Fokus fließt in die Definition des Toleranzfensters mit ein.

Nachdem die Teile 1, 2 zur Baugruppe 122 gefügt und der Fügevorgang beendet wurden, werden die Spannwerkzeuge 201a, 201b, 255a, 255b, 262a, 262b aus deren Spannpositionen (SP) in die Ausgangspositionen (AP) bewegt und dabei durch Vergrößerung der lichten Weite 266 die Baugruppe 122 wiederum auf den vorzugsweise während dem Spann- und Schweißvorgang in der Halteposition 110 verharrenden Teiletransportträger 48 abgesetzt und aus der Fügestation 43 abtransportiert. Am Teiletransportträger 48 wird der Positionierfortsatz 80 in die Positionieröffnung 7 eingefädelt und die Baugruppe 122 gegenüber dem Teiletransportträger 48 in ausreichender Genauigkeit positioniert.

Vorzugsweise werden die Zustellachsen 112a, 112b gleichermaßen die Spannwerkzeuge 201a, 201b, 255a, 255b, 262a, 262b der Spanneinrichtungen 194a bis 195b, 260a, 260b aus der Ausgangsposition (AP) bis zur Spannposition (ZP) geregelt verfahren. Die Regelung der Verfahrgeschwindigkeit der Spannwerkzeuge 201a, 201b, 255a, 255b, 262a, 262b kann auf unterschiedliche Arten erfolgen.

In einer ersten Ausführung, werden zunächst die Spannwerkzeuge 201a, 201b, 255a, 255b, 262a, 262b aus der Ausgangsposition (AP) bis knapp vor die Zwischenposition (ZP) beschleunigt und bis hin zur Zwischenposition (ZP) zum Stillstand verzögert verfahren, worauf eines oder beide Spannwerkzeuge 201a, 201b, 255a, 255b, 262a, 262b aus der Zwischenposition (ZP) beschleunigt und bis zur Spannposition (SP) zum Stillstand verzögert verfahren. Die Art und Weise der Regelung der Verfahrgeschwindigkeit der Spannwerkzeuge 201a, 201b, 255a, 255b, 262a, 262b, wird im Nachfolgenden noch zu den Fig. 20 bis 22 genauer beschrieben.

In einer zweiten Ausführung, werden die Spannwerkzeuge 201a, 201b, 255a, 255b, 262a, 262b aus der Ausgangsposition (AP) bis knapp vor die Zwischenposition (ZP) beschleunigt und bis hin zur Zwischenposition (ZP) verzögert verfahren, sodann eines oder beide Spannwerkzeuge 201a, 201b, 255a, 255b, 262a, 262b aus der Zwischenposition (ZP) bis zur Anlage der Anschlagflächen 217a, 217b, 269a, 269b, 277a, 277b gegen den Teil 1, 2 beschleunigt, annähernd mit konstanter Verfahrgeschwindigkeit oder weiterhin verzögernd verfahren und erst dann in Abhängigkeit des Kraftanstieges die Verfahrgeschwindigkeit, wie zu den Fig. 20 bis 22 genauer beschrieben, geregelt bis zum Stillstand verzögert.

In der Zwischenposition (ZP) können die Spannwerkzeuge 201a, 201b, 255a, 255b, 262a, 262b den Teil 1; 2 ergreifen und in die gezeigte Bereitstellungsposition 270, 270' verstellen, wobei die Anschlagflächen 217a, 217b, 269a, 269b, 277a, 277b vom Teil 1, 2 noch entfernt sind, oder sind diese vom Teil 1; 2 noch geringfügig entfernt.

Vorzugsweise sind die Elektromotoren 197a, 197b der Zustellachsen 112a, 112b elektronisch gekoppelt und werden durch deren Zustellbewegung die Spannwerkzeuge 201a, 201b, 255a, 255b, 262a, 262b der Spanneinrichtungen 194a bis 195b, 260a, 260b aus einer Vorposition in die in Fig. 18a gezeigte Ausgangsposition (AP) verstellt. Die Verstellbewegung der Spannwerkzeuge 201a, 201b, 255a, 255b, 262a, 262b aus der Ausgangsposition (AP) in die Zwischen- und Spannposition (ZP, SP) erfolgt mittels der Antriebseinheiten 180a bis 181b.

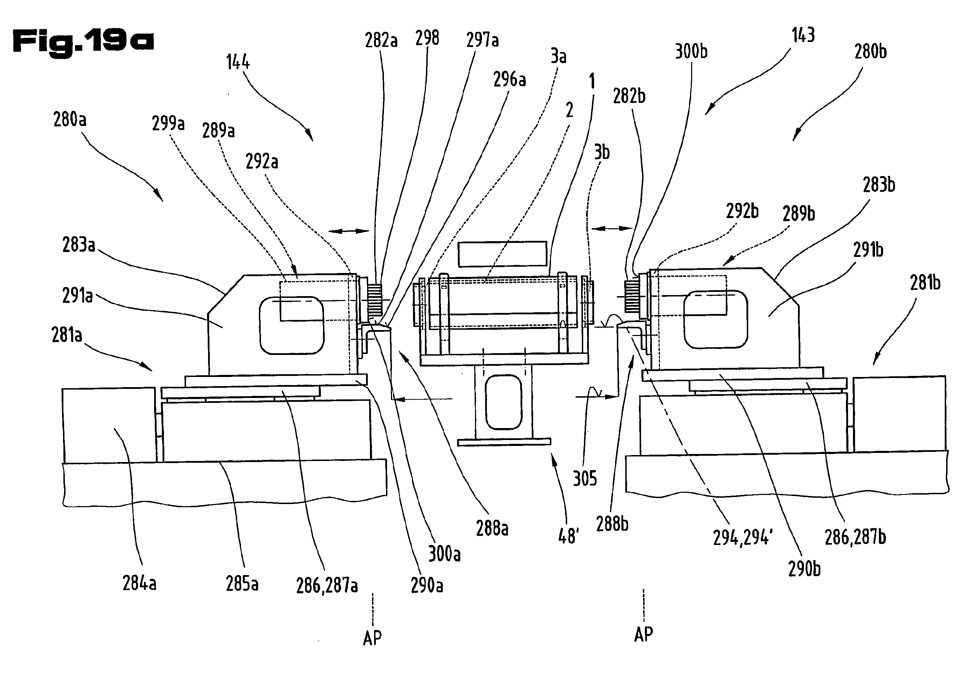

In den gemeinsam beschriebenen Fig. 19a bis 19c ist das Spannsystem 143 für die zweite Fügestation 128 (wie in Fig. 3 dargestellt) und der Verfahrensablauf näher beschrieben. Das Spannsystem 143 umfasst nach dieser Ausführung die Spanneinheit 144, die durch zu beiden Seiten eines geradlinigen Transportabschnittes der zweiten Transporteinrichtung 130 angeordnete Spanneinrichtungen 280a, 280b gebildet ist. Diese Spanneinrichtungen 280a, 280b umfassen jeweils eine Antriebseinheit 281a, 281b, ein in Richtung des eingetragenen Doppelpfeiles verstellbares Spannwerkzeug 282a, 282b, einen Tragrahmen 283a, 283b, eine Höhenpositioniervorrichtung 288a, 288b sowie eine Stellvorrichtung 289a, 289b für das Spannwerkzeug 282a, 282b. Die Antriebseinheiten 281a, 281b weisen jeweils einen mittels Elektromotor 284a, 284b angesteuerten Linearantrieb 285a, 285b und eine Rüstplattform 286 auf. Die Linearantriebe 285a, 285b umfassen jeweils einen in einer horizontalen Ebene verstellbaren Schlitten 287a, 287b, an dem die Rüstplattform 286 befestigt ist. Nach gezeigter Ausführung ist die Rüstplattform 286 durch den Schlitten 287a, 287b gebildet. Das Spannwerkzeug 282a, 282b ist über den Tragrahmen 283a, 283b mit der Rüstplattform 286 der Antriebseinheit 281a, 281b verbunden. Die Tragrahmen 283a, 283b der Spanneinrichtungen 280a, 280b umfassen jeweils eine an der Rüstplattform 286 befestigte Montageplatte 290a, 290b und zwei an dieser befestigte, voneinander beabstandet angeordnete Seitenwände 291 a, 291b sowie eine diese verbindende, auf einer der Transporteinrichtung 130 zugewandten Seite angeordnete Tragwand 292a, 292b.

Die Höhenpositioniervorrichtung 288a, 288b umfasst eine Hebevorrichtung 293a, 293b mit einem die vorangegangen geschweißte Baugruppe 122 und die Teile 3a, 3b gemeinsam zwischen einer am Teiletransportträger 48' befindlichen Transportstellung 294, 294' derselben und einer gegenüber dieser ober- oder unterhalb liegende Bereitstellungsposition 302, 302' derselben anhebenden oder absenkenden Auflageelement 295a, 295b. Dieses Auflageelement 295a, 295b besitzt ausschließlich eine in Richtung der Transporteinrichtung 130 geneigt nach unten verlaufende Auflaufschräge 296a, 296b sowie eine horizontale Auflagefläche 297a, 297b für die Baugruppe 122 und den Teil 3a, 3b. Das Auflageelement 295a, 295b der Hebevorrichtung 293a, 293b ist am Tragrahmen 283a, 283b, insbesondere an der Tragwand 292a, 292b befestigt. Natürlich kann das Auflageelement 295a, 295b der Höhenpositioniervorrichtung 288a, 288b auch nach dieser Ausführung über ein Stellantrieb vertikal verstellbar ausgebildet sein, wie in den Fig. 15 bis 17 beschrieben. Ebenso kann die Höhenpositioniervorrichtung 288a, 288b getrennt von den Spanneinrichtungen 280a, 280b innerhalb der Fügestation 128 angeordnet sein.

Das Spannwerkzeug 282a, 282b ist nach dieser Ausführung durch eine Spannzange mit über die Stellvorrichtung 289a, 289b radial verstellbaren Spannsegmenten 298 gebildet, wie nur schematisch angedeutet. Die Stellvorrichtung 289a, 289b weist dazu einen Stellantrieb 299a, 299b auf, beispielsweise einen Fluidantrieb, mittels dem von innen die Spannsegmente 298 mit dem Druckmittel beaufschlagbar sind. Das Spannwerkzeug 282a, 282b oder der Tragrahmen 283a, 283b ist mit einer Anschlagfläche 300a, 300b versehen.

Zusätzlich umfasst die Fügestation 128 eine Anpressvorrichtung 301, die getrennt von der Spanneinheit 144 ausgebildet ist und drei voneinander getrennt angeordnete, gemäß den Doppelpfeilen verstellbare Anpresselemente 304a, 304b, 304c ausbildet. Die Anpresselemente 304a, 304b, 304c sind der vorangegangenen geschweißten Baugruppe 122 zugeordnet.

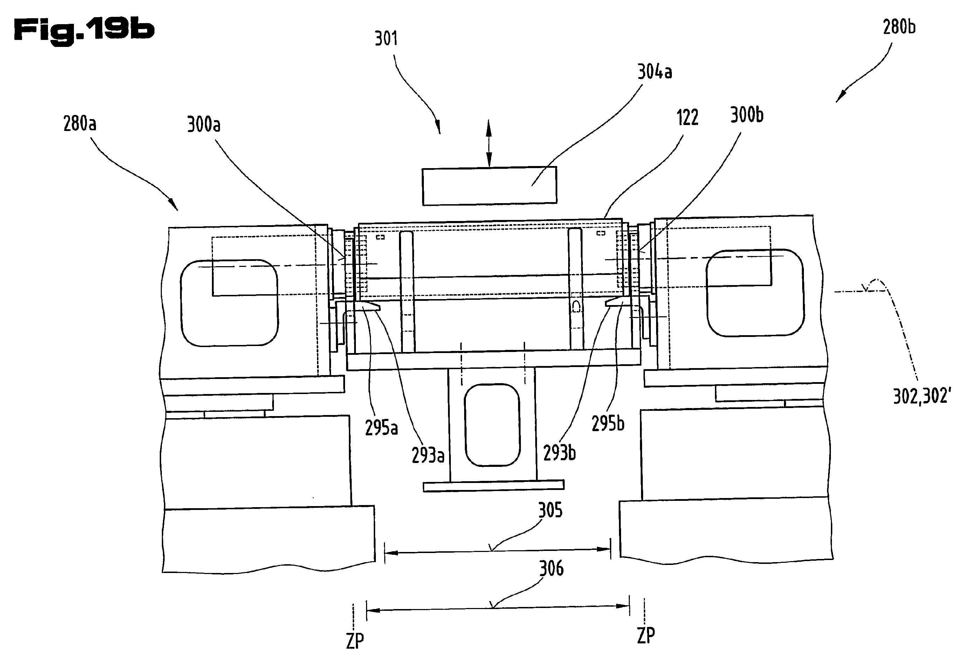

In Fig. 19a ist der Teiletransportträger 48' in die Halteposition 142 (siehe Fig. 3) zwischen die Spanneinrichtungen 280a, 280b der Spanneinheit 144 verfahren und in dieser angehalten. Zunächst werden die Spannwerkzeuge 282a, 282b der Spanneinrichtungen 280a, 280b mittels der Antriebseinheiten 281a, 281b quer zur Vorschubrichtung - gemäß Pfeil 140 - der Teiletransportträger 48' aus einer von den Teilen 3a, 3b entfernten Ausgangsposition (AP), wie in strichlierte Linien in Fig. 19a eingetragen, in eine Zwischenposition (ZP), wie in strichlierte Linien in Fig. 19b eingetragen, bewegt. Demnach wird eine lichte Weite 305 bemessen zwischen den einander zugewandten Kanten der aufeinander zugerichteten Auflageelemente 295a, 295b soweit verkleinert, dass diese geringer ist als die Länge 306 der Baugruppe 122. Ebenso wird eine lichte Weite bemessen zwischen den einander zugewandten Anschlagflächen 300a, 300b verkleinert. Dadurch werden die am Teiletransportträger 48' gemeinsam angelieferten Teile 3a, 3b und Baugruppe 122 entlang der Auflaufschrägen 296a, 296b auf die Auflageelemente 295a, 295b aufgeschoben und von der Transportstellung 294, 294' am Teiletransportträger 48', insbesondere dessen Aufnahmen 51', 131a, 131b, in die Bereitstellungsposition 302, 302' angehoben sowie an den Auflageflächen 297a, 297b aufgelagert. Gleichzeitig dringen die Spannwerkzeuge 282a, 282b, insbesondere deren Spannsegmente 298 in die Hülsen 16 der Teile 3a, 3b vor und werden die Teile 3a, 3b von den Spannwerkzeugen 282a, 282b aufgenommen. Während dem Aufschieben der Teile 3a, 3b auf die Spannwerkzeuge 282a, 282b sind die Spannsegmente 298 in einer unbetätigten Ausgangsstellung.

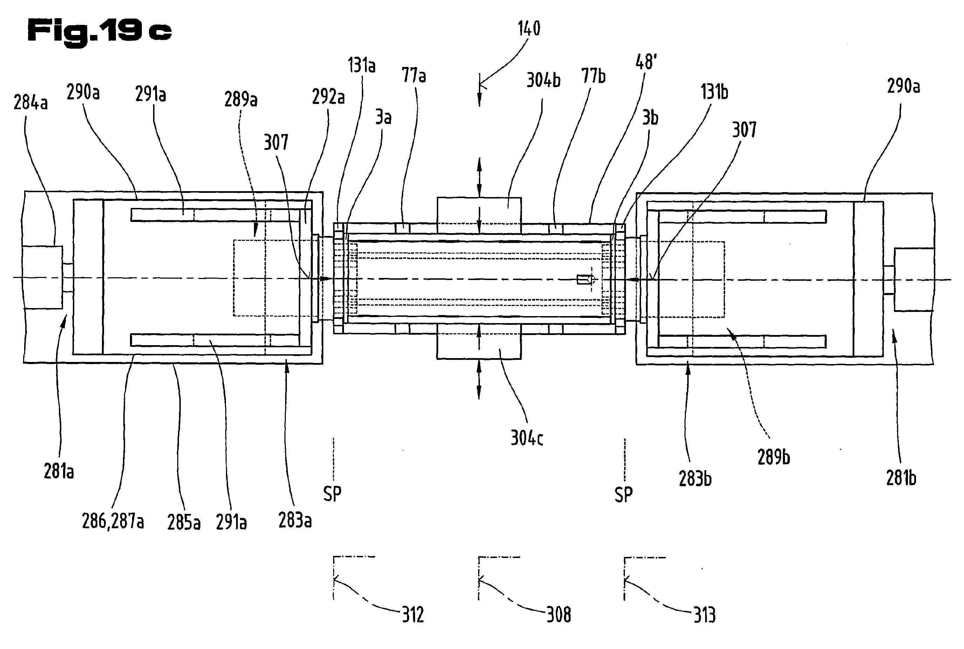

Gemäß Fig. 19b und 19c werden vorzugsweise beide Spannwerkzeuge 282a, 282b der Spanneinheiten 280a, 280b aus den Zwischenpositionen (ZP) in die Spannpositionen (SP) synchron aufeinander zugestellt bis die Anschlagflächen 300a, 300b gegen die Stirnflächen der Teile 3a, 3b anliegen und die Teile 3a, 3b mit entgegengerichteten Spannkräften - gemäß den eingetragenen Pfeilen 307 - gegen die Baugruppe 122 gespannt sind. Dabei werden die Teile 3a, 3b und Baugruppe 122 relativ zueinander verstellt, sodass diese in Richtung einer Längserstreckung der Teile 3a, 3bBaugruppe 122 bzw. in einer ersten Raumrichtung positioniert und gespannt sind.

In einer anderen Ausführung wird nur eines der Spannwerkzeuge 282b der Spanneinheiten 280b von der Ausgangsposition (AP) in die Spannposition (SP) verstellt, während das andere Spannwerkzeuge 282a der Spanneinheiten 280a in der Zwischenposition (ZP) als Spannposition (SP) verharrt. Die Istwerte der Spannkraft bzw. Spannkräfte und Spann- und Verfahrwege werden erfasst, der Auswerteeinheit 38 gemeldet und mit den Sollwerten verglichen sowie die Qualitätsmerlanale ausgewertet, wie noch beschrieben wird.

Gemäß den Fig. 19a und 19c werden als nächstes die Anpresselemente 202 bis 204 auf die Baugruppe 122 zugestellt. Die Baugruppe 122 wird über die Anpresselemente 304a, 304b, 304c von oben und seitlich mit Anpresskräften beaufschlagt. Die Anpresskräfte sind so gewählt, dass die Baugruppe 122 gegenüber die Teile 3a, 3b und/oder den Spannflächen 300a, 300b der Spannwerkzeuge 282a, 282b in einer zweiten und dritten Raumrichtung geringfügig verschoben werden kann. Auf diese Weise wird die Baugruppe 122 auch in der zweiten und dritten Raumrichtung positioniert sowie in die im Raum definierte Spannposition 308 bewegt als auch in dieser fixiert.

Darauffolgend werden die Teile 3a, 3b aus ihrer Bereitstellungsposition 302' in die Spannposition 312, 313 bewegt, indem die Spannsegmente 298 der Spannwerkzeuge 282a, 282b betätigt und aus ihrer Ausgangsstellung in eine Betätigungsstellung verstellt und dabei gegen die Innenfläche der Hülsen 16 angepresst werden, wie in Fig. 19c eingetragen. In der Betätigungsstellung der Spannsegmenten 298 sind die Teile 3a, 3b auf diesen zentriert aufgenommen und bilden die Mittelachsen beider Hülsen 16 eine gemeinsame Achse. Somit werden die Teile 3a, 3b gegenüber die im Raum festgelegte Baugruppe 122 in der zweiten und dritten Raumrichtung positioniert sowie in die im Raum definierte Spannposition 312,313 bewegt als auch in diesen fixiert gehalten.

Mit den Spannwerkzeugen 282a, 282b, insbesondere den Spannsegmenten 298, können auch Maßabweichungen der Hülse 16 korrigiert werden, indem die Spannsegmente 298 soweit radial nach außen bewegt werden, dass die Hülsen 16 der Teile 3a, 3b von einer Istform in eine Sollform umgeformt werden, wie dies in der AT 1278/2004 beschrieben ist und Gegenstand der vorliegenden Anmeldung bilden kann. Dadurch können nun auch geringfügige Formabweichungen der Hülsen 16 auf einfache Weise beseitigt werden. In der formgebenden Betätigungsstellung werden die Spannsegmente 298 der Spannwerkzeuge 282a, 282b gegen die Innenfläche der Hülse mit einer Vorspannkraft angepresst, sodass die Hülse 16 elastisch und/oder plastisch verformt wird.

Nachdem die Teile 3a, 3b und Baugruppe 122 in den drei Raumrichtungen positioniert und in die jeweilige Spannposition 308, 312, 313 bewegt, in dieser gespannt und fixiert sowie die Qualitätsmerkmale überprüft und positiv ausgewertet wurden, werden die Teile 3a, 3b mit der Baugruppe 122 an den Fügestellen 18a, 18b, 18c; 19a, 19b mittels Fügenähten 21 miteinander verbunden, insbesondere verschweißt. Die Fügenähte 21 sind durch 1-Nähte gebildet, sodass eine Positioniergenauigkeit der Teile 3a, 3b in einer quer zur Längserstreckung der Baugruppe 122 verlaufenden Ebene von 0,1 mm bis 0,5 mm ausreichend ist. Während dem Fügevorgang, werden die Spannwerkzeuge 282a, 282b, die Spannsegmenten 298 und die Anpresselemente 304a, 304b, 304c ruhig gehalten.

Ist der Fügevorgang beendet ist, werden die Spannwerkzeuge 282a, 282b aus deren Spannpositionen (SP) in die Ausgangspositionen (AP) bewegt und dabei durch Vergrößerung des Abstandes 305 die fertig gefügte Baugruppe 147 wiederum auf den vorzugsweise während dem Spann- und Fügevorgang in der Halteposition 142 verharrenden Teiletransportträger 48' abgesetzt und aus der Fügestation 128 abtransportiert.

Die Zwischenposition (ZP) wird vor Inbetriebnahme des Fertigungssystems 1 für jede der oben genannten Spanneinrichtungen festgelegt und liegt etwa zwischen 0,3 mm und 5 mm, insbesondere zwischen 1 mm und 3 mm, vor den Anlageflächen 10, 12 bzw. Stirnflächen der Teile 1, 2, 3a, 3b.

Auch sei an dieser Stelle zusammenfassend erwähnt, dass von jenen Spannwerkzeugen, die aus der Zwischenposition (ZP) in die Spannposition (SP) verfahren, die Istwerte der Spannkräfte und Verfahr- und Spannwege erfasst, mit den Sollwerten verglichen und die Qualitätsmerkmale ausgewertet werden, während von denjenigen Spannwerkzeugen, die ausschließlich in die einer Spannposition (SP) entsprechenden Zwischenposition (ZP) verfahren, nur die Istwerte der Verfahrwege erfasst und diese mit den Sollwerten zur Lageregelung bzw. Positionierung der Spannwerkzeuge verglichen werden.

Nach den beschriebenen Verfahrensweisen werden entweder beide Spannwerkzeuge 201a, 201b, 255a, 255b, 262a, 262b; 282a, 282b der Spanneinheiten 114 bis 116; 144 gegeneinander bzw. gegenläufig oder wird nur eines der Spannwerkzeuge 201a, 201b, 255a, 255b, 262a, 262b; 282a, 282b der Spanneinheiten 114 bis 116; 144 von der Ausgangsposition (AP) in die Spannposition (SP) verstellt. Letztere Verfahrensweise wird dann eingesetzt, wenn die Teile 1, 2, 3a, 3b mit relativ hoher Genauigkeit gefertigt sind, wie beispielsweise durch Feinstanzen, Tiefziehen oder Massivumformen.

In den gemeinsam beschriebenen Fig. 20 bis 22 wird nun ein Verfahren zum Positionieren und Überprüfen eines Qualitätsmerkmales eines weiter zu verarbeitenden Teiles 1 bis 3b sowie ein Verfahren zum Fügen der Teile 1 bis 3b in einer der vorangegangen beschriebenen Fügestation 43; 128 näher beschrieben. Im Nachfolgenden wird der Positionier- und Spannvorgang für die Teile 1, 2 beschrieben.

Zunächst wird der erste Teil 1 mittels der Spannwerkzeuge 201a, 201b vom Teiletransportträger 48 aus der Transportstellung 219 in die Bereitstellungsposition 270 bewegt, indem die Spannwerkzeuge 201a, 201b jeweils aus der Ausgangsposition in die Zwischenposition verfahren. Dies erfolgt bevorzugt mit hoher Geschwindigkeit, um dadurch die Taktzeit für das Positionieren und Spannen des ersten Teiles 1 möglichst niedrig zu halten. In der Zwischenposition sind die Anschlagfläche 217a, 217b der Spannwerkzeuge 201 a, 201 b knapp vor den Stirn- bzw. Anlageflächen 12 des ersten Teiles 1 positioniert, jedoch liegt der Teil 1 bereits an den Auflaufschrägen 215a, 215b oder den horizontalen Auflageflächen 216a, 216b auf.

Die Fig. 20 bis 22 zeigen die Auswertung bzw. Aufzeichnung des Verfahr- und Spannweges sowie der Spannkraft beispielsweise auf den Teil 1 eines zwischen der Zwischen- und Spannposition verfahrenden Spannwerkzeuges 201b. Dazu werden nun vorzugsweise die Istwerte der Verfahr- und Spannwege als auch der Spannkraft laufend erfasst und der in Fig. 3 eingetragenen, elektronischen Auswerteeinheit 38 übermittelt, sodann in dieser mittels dem Vergleichsmodul 39 ein Soll- und Istwert-Vergleich der Verfahr- und Spannwege als auch der Spannkraft auf den Teil 1, vorzugsweise laufend durchgeführt.

Gemäß der Erfindung ist es nun vorgesehen, dass der Sollwert für die Spannkraft des Spannwerkzeuges 201b durch ein Toleranzfeld mit einer Untergrenze 315 und einer Obergrenze 316 und der Sollwert für den zurückgelegten Verfahr- und/oder Spannweg des Spannwerkzeuges 201b durch ein Toleranzfeld mit einer Untergrenze 317 und einer Obergrenze 318 begrenzt vorgegeben wird. Die Unter- und Obergrenzen 315 bis 318 definieren ein Toleranzfenster. Für die Überwachung des Spannvorganges bzw. den kontrollierten Spannvorgang wird der sich zwischen der Zwischen- und endgültigen Spannposition zurückgelegte bzw. erstreckende Verfahr- und/oder Spannweg und die Spannkraft bezogen auf den Verfahr- und/oder Spannweg aufgezeichnet.

Durch die Relativbewegung der Spannwerkzeuge 201a, 201b wird nachdem die Anschlagflächen 217a, 217b gegen die Stirn- bzw. Anlageflächen 10 vom Teil 1 anliegen, der Teil 1 geringfügig vorgespannt, infolge dessen die Spannkraft ansteigt.

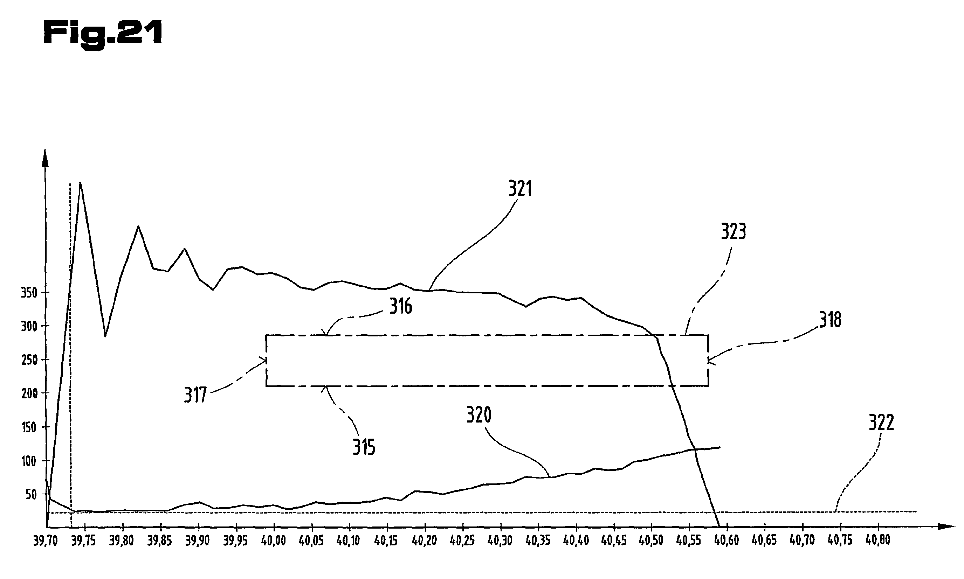

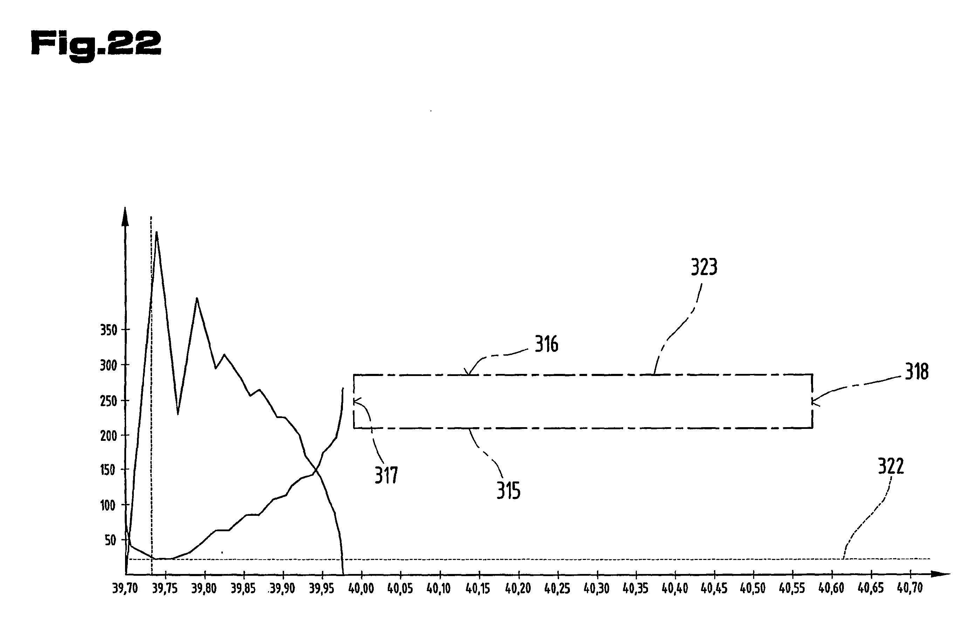

Wie bereits oben beschrieben, ist nun mit dem erfindungemäßen Verfahren ein Überprüfen eines Qualitätsmerkmales, insbesondere der Maßhaltigkeit des Teiles 1, möglich. So kann nun festgestellt werden, ob seine Länge 267 innerhalb vorgegebener Toleranzen gefertigt wurde. Beispielsweise sind abhängig vom Fügeverfahren die Toleranzgrenzen +/- 0,2 mm. Übersteigt die Länge 267 des ersten Teiles 1 die untere oder obere Toleranzgrenze, kann die Gesamtgenauigkeit der herzustellenden Baugruppe 122, 147 nicht mehr sichergestellt werden und muss dieser unzureichend genaue Teil 1 als Schlechtteil aus dem Fertigungsprozess ausgeschleust werden, wie zu den Diagrammen aus Fig. 21 und 22 näher erläutert.

Fig. 20 zeigt die Auswertung der Spannkraft und der Verfahr- und Spannwege von einem Teil 1, dessen Qualitätsmerkmal, insbesondere die Maßhaltigkeit innerhalb vorgegebener Toleranzgrenzen, erfüllt ist. Wie aus dem Diagramm erkennbar, wird die Spannkraft 320 auf den Teil 1 und die Verstellgeschwindigkeit 321 des Spannwerkzeuges 201b über den Verfahr- und Spannweg zwischen der Zwischen- und Spannposition ausgewertet. Vorzugsweise wird die während der Verstellung des Spannwerkzeuges-201b zwischen der Zwischen- und Spannposition auftretende Reibkraft 322 aus dem ausgeübten Drehmoment bzw. Motorstrom des Elektromotors 188b für diese Spanneinrichtung 194b während dem Spannvorgang erfasst. Die Reibkraft 322 wird an der vertikalen, strichlierten Linie in die Steuereinrichtung 36 als Betrag eingelesen und von dieser automatisch die Unter- und Obergrenze 315, 316 des Sollwertes für die Spannkraft mit dem Betrag der Reibkraft 322 beaufschlagt.

Wird das Spannwerkzeug 201b von der Zwischen- in die Spannposition verfahren, treffen die Anschlagflächen 217a, 217b an den Anlageflächen 10 des Teiles 1 auf und steigt infolge der zunehmenden Vorspannung im Teil 1 die Spannkraft an. Auf dem Verfahrweg von der Zwischenposition bis zur Anlagefläche 10 bzw. zum Spannbeginn des Teiles 1 wird nur die beim Verfahren des Spannwerkzeuges 201b vom Linearantrieb 184b zu überwindende Reibkraft erfasst. Gleichzeitig wird die Verfahrgeschwindigkeit des Spannwerkzeuges 201b bzw. der Spanneinrichtung 194b ausgewertet. Wie ersichtlich, wird das Spannwerkzeug 201b aus der Zwischenposition heraus kurzzeitig beschleunigt und danach mit zunehmend ansteigender Spannkraft vom Geschwindigkeitsmaximum bis auf ein Geschwindigkeitsminimum geregelt abgebremst. Das Geschwindigkeitsminimum beträgt 0 mm/sec. Die Geschwindigkeitsregelung erfolgt mittels an sich bekannter Regelungen.

Der Teil 1 wird als "Gutteil" ausgewertet und das zumindest eine Spannwerkzeug 20 1 b in seiner Spannbewegung angehalten, sofern der Istwert des zurückgelegten Verfahr- und Spannweges vom aus der Zwischen- in die Spannposition verstellten Spannwerkzeuges 201 b und der Istwert der Spannkraft auf den Teil 1 innerhalb des Toleranzfensters liegen. Mit anderen Worten, müssen in der Spannposition des Teiles 1, daher wenn dieser positioniert, gespannt und fixiert ist, die Spannwerkzeuge 201a, 201b soweit aufeinander zugestellt sein, dass eine Vorspannung im Teil 1 aufgebaut wird und dabei der Istwert der Spannkraft zwischen der Unter- und Obergrenze 315, 316 liegt.

Nachdem der Teil 1 den Qualitätsanforderungen entspricht und von der Steuereinrichtung 36 als "Gutteil" verifiziert wurde, wird der Teil 1 in seiner Spannposition 272 mittels den Anpresselementen 230a, 230b fixiert, die Spanneinheit 115, insbesondere zumindest eine der Spanneinrichtungen 195a, 195b von der Steuereinrichtung 36 angesteuert und der Spannvorgang als auch eine Überprüfung eines Qualitätsmerkmals, insbesondere die Maßhaltigkeit des zweiten Teiles 2 gestartet. Demnach wird der erste Teil 1 nur dann einem weiteren Arbeitsprozess bereitgestellt, wenn dieser auch die Qualitätsanforderungen erfüllt. Der Teil 1 und die Spannwerkzeuge 201a, 201b werden in der Zwischenzeit in seiner Spannposition unverändert gehalten.

Zunächst wird der Teil 2 mittels der zweiten Höhenpositioniervorrichtungen in die Bereitstellungsposition 270' zwischen zwei zusammenwirkende Spannwerkzeugen 255a, 255b positioniert. Danach werden die Spannwerkzeuge 255a, 255b aus ihren Ausgangspositionen in die Zwischenpositionen verfahren und in diesen kurz angehalten. Darauffolgend wird zumindest eines der Spannwerkzeuge 255b von der Zwischen- in die Spannposition verfahren. Treffen die Anschlagflächen 269a, 269b an den Anlageflächen 12 des Teiles 2 auf und steigt infolge der zunehmenden Vorspannung im Teil 2 die Spannkraft an. Die Geschwindigkeitsregelung erfolgt auf gleicher Basis wie oben beschrieben. Der Teil 2 wird als "Gutteil" ausgewertet und das zumindest eine Spannwerkzeug 255b in seiner Spannbewegung angehalten, sofern der Istwert des zurückgelegten Verfahr- und Spannweges vom aus der Zwischen- in die Spannposition verstellten Spannwerkzeuges 255b und der Istwert der Spannkraft auf den Teil 2 innerhalb des Toleranzfensters liegen. Während der Verstellbewegung des Spannwerkzeuges 255b wird der zweite Teil 2 gegenüber dem ersten Teil 1 in zumindest eine Raumrichtung, insbesondere in Richtung deren Längserstreckung positioniert.

Vorzugsweise werden die Teile 1, 2 mittig zueinander ausgerichtet, daher verlaufen die quer zur Verstellrichtung - gemäß den in Fig. 18a eingetragenen Doppelpfeil 323 - zumindest eines Spannwerkzeuges 255b verlaufenden Mittelachsen der Teile 1, 2 deckungsgleich. Sind beide Spannwerkzeuge 201a, 201b, 255a, 255b der Spanneinheiten 194a, 194b, 195a, 195b relativ zueinander verstellbar, werden die Teile 1, 2 alleinig auf Grund der synchronen Zustellbewegung derselben mittig zueinander gespannt. Dadurch ist es möglich, dass die Fertigungstoleranzen der Teile 1, 2 in Verstellrichtung - gemäß Doppelpfeil 323 - so aufgeteilt werden, dass der Fügespalt 27a, 27b auf beiden gegenüberliegenden Seiten - wie in Fig. 2 für eine Seite der Baugruppe eingetragen - auf ein zulässiges Maß gleich eingestellt wird. Liegt dieses Maß innerhalb der durch den Fokus des Laserstrahls vorgegebenen Abmessung von etwa 0,3 mm bis 0,6 mm, wird der zweite Teil 2 beim Positionier- und Spannvorgang als "Gutteil" ausgewertet. Würde hingegen nur auf einer Seite der Fügespalt 27a eingestellt, wäre dieser unzulässig breit, der zweite Teil 2 beim Positionier- und Spannvorgang als "Schlechtteil" ausgewertet, sodass ein Fügen, insbesondere Laserschweißen, nicht mit einer entsprechenden Qualitätsgüte erfolgen könnte. In der Praxis hat sich gezeigt, dass die Spannwerkzeuge 201a, 201b, 255a, 255b der Spanneinheiten 194a, 194b, 195a, 195b synchron aufeinander zugestellt werden sollen, wenn mit höheren Fertigungstoleranzen des(r) Teile(s) 1, 2 gerechnet werden muss. Auf diese Weise können nun auch Teile 1, 2 minderwertigerer Qualität verwendet werden, ohne Einbuße der Gesamtgenauigkeit an der Baugruppe 122, 147.

Erst nachdem auch der zweite Teil 2 als "Gutteil" ausgewertet und freigegeben wurde, werden die beiden Teile 1, 2 miteinander gefügt. Dies hat den Vorteil, dass ausschließlich Teile 1, 2 miteinander gefügt werden, die den Qualitätsmerkmalen entsprechen, insbesondere die Maßhaltigkeit einhalten, und eine Baugruppe 122 geschafften wird, die höchsten Anforderungen an die Fertigungsgenauigkeit gerecht wird.

Dabei ist von Vorteil, wenn das Fügen der Teile 1, 2 mittels Laser- oder Plasmaschweißen erfolgt, da einerseits ein guter Kompromiss zwischen flexibler Fertigung und andererseits hoher Fertigungsgenauigkeit getroffen werden kann. Der beim Laser- oder Plasmaschweißen wärmebedingte Verzug infolge Schweißspannung ist nahezu vernachlässigbar gering und die hohen Anforderungen an die Maßhaltigkeit können eingehalten werden. Von Vorteil ist aber auch, wenn das Fügen durch Kleben erfolgt, wodurch die Maßgenauigkeit in noch engeren Toleranzgrenzen eingehalten werden kann.

Nachdem die Teile 1, 2 miteinander gefügt wurden, wird diese gefügte Baugruppe 122 wiederum auf einen Teiletransportträger 48 abgesetzt und mittels diesen aus der Fügestation 43 abtransportiert und gegebenenfalls einer weiteren Fügestation 128 zugeführt.

Andererseits wird das Spannwerkzeug 201 b in seiner Spannbewegung angehalten und der Teil 1 aus dem aktuellen Arbeitsprozess als Schlechtteil ausgewertet, sofern der Istwert des zurückgelegten Verfahr- und Spannweges vom aus der Zwischen- in die Spannposition verstellten Spannwerkzeuges 201b und/oder der Istwert für die Spannkraft auf den Teil 1 außerhalb des vorgegebenen Toleranzfensters liegt(en), wie dies in den Fig. 21 und Fig. 22 dargestellt ist. Gemäß Fig. 21 ist erkennbar, dass der Teil 1 nicht der geforderten Maßhaltigkeit entspricht und das Mindestmaß unterschreitet, daher zu kurz ist. Demnach müsste das Spannwerkzeuges 20 1 b bis weit über die Obergrenze 318 des Verfahr- und Spannweges verfahren, um den Sollwert für die Spannkraft auf den Teil 1 zu erreichen.

Da zweckmäßig in Abhängigkeit vom Kraftanstieg die Verfahrgeschwindigkeit des Spannwerkzeuges 20 1 b geregelt, insbesondere nur mit zunehmenden Kraftanstieg die Verfahrgeschwindigkeit des Spannwerkzeuges 20 1 b zunehmend verringert wird, ergibt sich der Vorteil, dass die Verfahrgeschwindigkeit des Spannwerkzeuges 201b über einen weiten Bereich des Verfahr- und Spannweges nur um einen geringen Wert in Bezug auf das Geschwindigkeitsmaximum reduziert wird. Die Spannkraft ist über einen weiten Bereich des Verfahr- und Spannweges annähernd konstant, weshalb auch die Verfahrgeschwindigkeit des Spannwerkzeuges 20 1 b über diesen Bereich annähernd konstant gehalten wird. Erst nachdem durch die Regelung festgestellt wird, dass der Sollwert des Verfahr- und Spannweges und/oder der Spannkraft außerhalb des Toleranzfensters liegen wird, wird das Spannwerkzeug 201b geregelt verzögert und angehalten.

Ist hingegen der Teil 1 zu lang, gemäß der Darstellung in Fig. 22, daher entspricht er nicht der geforderten Maßhaltigkeit und wird das Höchstmaß überschritten, erreicht die Spannkraft noch vor dem Erreichen der Untergrenze 317 für den Verfahr- und Spannweges ihren Sollwert. Da die Spannkraft nun übermäßig stark ansteigt, wird gleichzeitig die geregelte Verfahrgeschwindigkeit des Spannwerkzeuges 201b stark reduziert.

Nachdem der Teil 1 den Qualitätsanforderungen nicht entspricht und von der Steuereinrichtung 36 als "Schlechtteil" verifiziert wurde, wird der Spannvorgang beendet und dieser Teil 1 aus dem aktuellen Arbeitsprozess ausgeschleust. Dazu wird vorerst das Spannwerkzeug 201b entgegen der Spannbewegung aus der Spann- in die Zwischen- oder Ausgangsposition zurückgestellt. Mit abnehmender Spannkraft wird die Verfahrgeschwindigkeit des Spannwerkzeuges 201b zunehmend bis auf das Geschwindigkeitsmaximum erhöht. Da sämtliche Bewegungen des Spannwerkzeuges 201b mit optimierten Verfahrgeschwindigkeiten von statten gehen, wird die Fügestation 43, 128 nur für eine kurze Zeitdauer blockiert.

Wesentlich ist, dass für jedes der zwischen der Zwischen- und Spannposition verfahrenden Spannwerkzeuge 201b, 269b ein Soll-Istwert-Vergleich der Verfahr- und Spannwege sowie Spannkräfte in der Auswerteeinheit 38 (siehe Fig. 3) durchgeführt wird und anhand dessen die Verifizierung zwischen "Gutteil" und "Schlechtteil" erfolgt.

Abschließend sei auch noch darauf hingewiesen, dass aus dem Soll-Istwert-Vergleich der Spannkraft und/oder des Verfahr- und/oder Spannweges auch die Abmessung, insbesondere die Länge jedes Teiles ausgewertet werden kann.

Genauso gut kann alternativ zum eine Gewindespindel und Spindelmutter aufweisenden Linearantrieb der Spanneinheiten, Zustellachsen oder des Antriebssystems für die Schweißvorrichtung auch ein Linearmotor, insbesondere Asynchron- und Synchron-Linearmotor eingesetzt werden. Linearmotoren erlauben die direkte Erzeugung linearer Bewegung ohne Getriebe. Sie bestehen aus einem stromdurchflossenen Primärteil (vergleichbar mit dem Stator eines Rotationsmotors) und einem Reaktionsteil, dem Sekundärteil (vergleichbar mit dem Rotor eines Rotationsmotors). Zweckmäßig ist der Primärteil ortsfest angeordnet und beispielsweise an der Tragkonstruktion der Fügestation befestigt, während der Sekundärteil an dem im Wesentlichen spielfrei geführt verstellbaren Schlitten der Antriebseinheiten angeordnet ist. Für den berührungsfreien Antrieb des Schlittens bietet sich beispielsweise ein Langstator-Synchronmotor an. Dabei wird die Antriebsleistung dem im Verstellweg befindlichen Primärteil zugeführt, während der Schlitten nur den Erregerteil enthält. Der Erregerteil ist so angeordnet, dass der Schlitten von den Magnetfeldkräften getragen wird. Nach dieser Ausführung wird der Strom des stromdurchflossenen Primärteiles erfasst und daraus in der Auswerteeinheit 38 der Istwert des Verfahr- und/oder Spannweges und/oder der Spannkraft ermittelt.

Der Ordnung halber sei abschließend darauf hingewiesen, dass zum besseren Verständnis des Fertigungssystems, der Spannsysteme und Baugruppen dieses bzw. deren Bestandteile teilweise unmaßstäblich und/oder vergrößert und/oder verkleinert dargestellt wurden.

### Bezugszeichenaufstellung

- 1: Teil
- 2: Teil
- 3a,b: Teil
- 5: Basis

- 6: Schenkel
- 7: Positionieröffnung
- 8: Auflagefortsatz
- 9: Auflagefläche
- 10: Anlagefläche

- 11: Positionieröffnung
- 12: Anlagefläche
- 15: Tragplatte

- 16: Hülse
- 17a,b: Fügestelle
- 18a,b,c: Fügestelle
- 19a,b: Fügestelle

- 21: Fügenaht
- 22: Anlagefläche
- 23: Anlagefläche
- 24a,b: Fügestoß
- 25: Anlagefläche

- 26a,b,c: Fügestoß
- 27a,b: Fügespalte

- 31: Fertigungssystem
- 32: Fertigungsanlage
- 33: Fertigungsanlage
- 34: Energiequelle

- 36: Steuereinrichtung
- 37: Energiequelle
- 38: Auswerteeinheit
- 39: Vergleichsmodul
- 40: Auswertemodul

- 41: Verbindungsleitung
- 42: Transportsystem
- 43: Fügestation
- 44: Übernahmebereich
- 45: Weitergabebereich

- 46: Transporteinrichtung
- 47a,b: Führungsbahn
- 48: Teiletransportträger
- 48': Teiletransportträger
- 49: Teilespeicher
- 50: Teilespeicher

- 51: Aufnahme
- 52: Transportkette
- 54: Umlenkstation
- 55: Gehäuseteil

- 56: Stirnplatte
- 57: Kupplungsvorrichtung
- 58: Stützvorrichtung
- 59: Aufstandsfläche
- 60: Symmetrieebene

- 61: Befestigungsvorrichtung
- 62: Seitenwand
- 63: Höhenführungsbahn
- 64: Seitenführungsbahn
- 65: Pfeil

- 66: Stützrolle
- 67: Druckrolle
- 68: Seitenfläche
- 69: Seitenfläche
- 70: Laufrolle

- 71: Kettenbolzen
- 72: Kupplungsfortsatz
- 73: Kupplungsaufnahme
- 74: Montageplatte
- 75: Stützsäule

- 76: Trägerplatte
- 77a,b: Aufnahmebügel
- 78: Führungssteg
- 79: Basis
- 80: Positioniermittel

- 81: Seitenführungsfläche
- 82a,b: Auflagefläche
- 83: Zufördereinrichtung
- 84: Zufördereinrichtung
- 85: Grundrahmen

- 86: Pfeil
- 87: Hilfsteiletransportträger
- 90: Führungsbahn

- 91: Zugmittel
- 92: Antriebsmotor
- 93: Fahrgestell
- 94: Laufrad
- 95: Aufnahme

- 96a,b: Aufnahmebügel
- 97: Führungssteg
- 98: Basis
- 99: Positioniermittel
- 100: Seitenführungsflächen

- 101a,b: Auflagefläche
- 102: Anhaltevorrichtung
- 103a,b: Anschlagelement
- 104: Übergabeposition
- 104': Übergabeposition
- 105: Handhabungssystem

- 106: Übernahmeposition
- 106': Übernahmeposition
- 107: Handhabungssystem
- 110: Halteposition

- 111: Spannsystem
- 112a,b: Zustellachse
- 114: Spanneinheit
- 115: Spanneinheit

- 116: Spanneinheit
- 119: Schweißvorrichtung

- 121: Strahlschweißkopf
- 122: Baugruppe
- 123: Handhabungssystem
- 124: Schlechtteilebox
- 125: Endposition

- 126: zweiter Übernahmebereich
- 127: zweites Transportsystem
- 128: zweite Fügestation
- 129: zweiter Weitergabebereich
- 130: zweite Transporteinrichtung

- 131a,b: Aufnahme
- 132: Vorrichtung
- 133: Vorrichtung
- 134: Behälter
- 135: Teilespeicher

- 136: Übergabeposition
- 136': Übergabeposition
- 137: Handhabungssystem
- 138: Übernahmeposition
- 138': Übernahmeposition
- 139: Handhabungssystem
- 140: Pfeil

- 142: Halteposition
- 143: Spannsystem
- 144: Spanneinheit
- 145: Schweißvorrichtung

- 146a,b: Strahlschweißvorrichtung
- 147: Baugruppe
- 148: Handhabungssystem
- 149: Schlechtteilebox
- 150: Endposition

- 151: Abfördervorrichtung
- 152: Steher
- 153: Portal
- 154: Portal
- 155: Konsole

- 156: Antriebssystem
- 157: Montageplatte
- 158: Tragprofil
- 159: Stützkonsole
- 160: Tragprofil

- 161: Trägerplatte
- 162: Aussparung
- 163: Anschlussschnittstelle
- 164: Absaugrohr

- 170a,b: Linearantrieb

- 171a,b: Elektromotor
- 172: Linearantrieb
- 173: Elektromotor
- 174: Linearantrieb
- 175: Elektromotor

- 176: Befestigungsvorrichtung
- 177: Schwenkachse
- 178: Schwenkachse
- 180a,b: Antriebseinheit

- 181a,b: Antriebseinheit
- 182a,b: Antriebseinheit
- 184a,b: Linearantrieb
- 185a,b: Linearantrieb

- 186a,b: Linearantrieb
- 187: Rüstplattform
- 188a,b: Elektromotor
- 189a,b: Elektromotor
- 190a,b: Elektromotor

- 191a,b: Schlitten
- 192a,b: Schlitten
- 193a,b: Schlitten
- 194a,b: Spanneinrichtung
- 195a,b: Spanneinrichtung

- 196a,b: Linearantrieb
- 197a,b: Elektromotor
- 198a,b: Schlitten
- 200a,b: Höhenpositioniervorrichtung

- 201a,b: Spannwerkzeug
- 202a,b: Tragrahmen
- 203a,b: Anpressvorrichtung
- 204a,b: Widerlager
- 205a,b: Montageplatte

- 206a,b: Tragwand
- 207a,b: Tragwand
- 208a,b: Tragwand
- 209a,b: Montageplatte
- 210a,b: Tragplatte

- 211a,b: Kragarm
- 212a,b: Spannbacke
- 213a,b: Auflagerelement
- 214a,b: Hebevorrichtung
- 215a,b: Auflaufschräge

- 216a,b: Auflagefläche
- 217a,b: Anschlagfläche
- 218a,b: Kante
- 219: Transportstellung

- 219': Transportstellung
- 220a,b: Hebevorrichtung

- 221a,b: Schieberelement
- 222a,b: Führungsorgan
- 223a,b: Führungsbahn
- 224a,b: Stellantrieb
- 225a,b: Schlitten

- 226a,b: Übertragungselement
- 227a,b: Anschlagelement
- 228a,b: Stellvorrichtung
- 229a,b: Stellvorrichtung
- 230a,b: Anpresselement

- 231a,b: Anpresselement
- 232a,b: Gehäuseteil
- 233a,b: Seitenwand
- 234a,b: Boden
- 235a,b: Deckel

- 236a,b: Führungsfläche
- 237a,b: Horizontalschieber
- 238a,b: Horizontalschieber
- 239a,b: Führungsfläche
- 240a,b: Führungsfläche

- 241a,b: Vertikalschieber
- 242: Kulissenanordnung
- 242': Kulissenanordnung
- 243: Kulissenelement
- 243': Kulissenelement
- 244: Kulissenbahn
- 244': Kulissenbahn
- 245: Durchtrittsöffnung
- 245': Durchtrittsöffnung

- 246a,b: Koppelelement
- 247a,b: Antriebsmotor
- 248a,b: Vertikalschieber
- 249a,b: Koppelelement
- 250a,b: Montagewinkel

- 251a,b: Antriebsmotor
- 252a,b: Spannbacke
- 254a,b: Tragrahmen
- 255a,b: Spannwerkzeug

- 256a,b: Montageplatte
- 257a,b: Tragwand
- 258a,b: Tragwand
- 259a,b: Tragplatte
- 260a,b: Spanneinrichtung

- 261 a,b: Tragrahmen
- 262a,b: Spannwerkzeug
- 263: Befestigungsplatte
- 264a,b: Montageplatte
- 265a,b: Tragwand

- 266: Weite
- 267: Länge
- 268: Weite
- 269a,b: Anschlagfläche
- 270: Bereitstellungsposition
- 270': Bereitstellungsposition

- 271: Spannkraft
- 272: Spannposition
- 273: Spannkraft
- 274: Spannposition

- 277a,b: Anschlagfläche
- 278: Spannkraft
- 280a,b: Spanneinrichtung

- 281a,b: Antriebseinheit
- 282a,b: Spannwerkzeug
- 283a,b: Tragrahmen
- 284a,b: Elektromotor
- 285a,b: Linearantrieb

- 286: Rüstplattform
- 287a,b: Schlitten
- 288a,b: Höhenpositioniervorrichtung
- 289a,b: Stellvorrichtung
- 290a,b: Montageplatte

- 291a,b: Seitenwand
- 292a,b: Tragwand
- 293a,b: Hebevorrichtung
- 294: Transportstellung
- 294': Transportstellung
- 295a,b: Auflageelement

- 296a,b: Auflaufschräge
- 297a,b: Auflagefläche
- 298: Spannsegment
- 299a,b: Stellantrieb
- 300a,b: Anschlagfläche

- 301: Anpressvorrichtung
- 302: Bereitstellungsposition
- 302': Bereitstellungsposition
- 304a,b,c: Anpresselement

- 305: Weite
- 306: Länge
- 307: Spannkraft
- 308: Spannposition

- 312: Spannposition
- 313: Spannposition
- 315: Untergrenze

- 316: Obergrenze
- 317: Untergrenze
- 318: Obergrenze
- 320: Spannkraftverlauf

- 321: Geschwindigkeitsprofil
- 322: Reibkraft
- 323: Doppelpfeil

## Patentansprüche

1. Verfahren zum Herstellen einer Verbindung zwischen Teilen (1, 2) in einer Fügestation (43) einer Fertigungsanlage (32), bei dem der erste Teil (1) in eine Bereitstellungsposition (270; 270") zwischen zwei zusammenwirkende Spannwerkzeuge (201a, 201b) einer ersten Spanneinheit (114) verbracht und danach mittels wenigstens einem aus einer den ersten Teil (1) freigebenden Ausgangsposition (AP) in eine den ersten Teil (1) spannende Spannposition (SP), durch einen elektronisch geregelten Linearantrieb (184a, 184b) verstellbaren Spannwerkzeug (201 a, 201 b) der ersten Spanneinheit (114) gespannt wird, und der zweite Teil (2) in eine Bereitstellungsposition (270'; 270") zwischen zwei zusammenwirkende Spannwerkzeuge (255a, 255b) einer zweiten Spanneinheit (115) verbracht und danach mittels wenigstens einem aus einer den zweiten Teil (2) freigebenden Ausgangsposition (AP) in eine den zweiten Teil (2) spannende Spannposition (SP), durch einen elektronisch geregelten Linearantrieb (184a, 184b) verstellbaren Spannwerkzeug (255a, 255b) der zweiten Spanneinheit (115) gespannt wird und darauffolgend die Teile (1, 2) an einer zwischen diesen ausgebildeten Fügestelle (17a bis 19b) zumindest in Teilabschnitten miteinander gefügt werden, **dadurch gekennzeichnet, dass** der zwischen der Ausgangs- und Spannposition (AP, SP) zurückgelegte Verfahr- und Spannweg des verstellbaren Spannwerkzeuges (201a, 201b, 255a, 255b) jeder Spanneinheit (114, 115) und/oder die Spannkraft des bewegbaren Spannwerkzeuges (201a, 201b, 255a, 255b) auf den entsprechenden Teil (1, 2) jeder Spanneinheit (114, 115) als Istwert vorzugsweise fortlaufend erfasst und einer elektronischen Auswerteeinheit (38) übermittelt wird, sodann in dieser für jede Spanneinheit (114, 115) ein Soll-Istwert-Vergleich der Spannkraft auf den entsprechenden Teil (1, 2) und/oder vom Verfahr- und Spannweg des verstellbaren Spannwerkzeuges (201a, 201b, 255a, 255b) vorzugsweise laufend durchgeführt wird und dass die Teile (1, 2) miteinander gefügt werden, sofern in der Spannposition eines jeden Teiles (1, 2) der Istwert der Spannkraft auf den entsprechenden Teil (1, 2) vom Spannwerkzeug (201a, 201b, 255a, 255b) jeder Spanneinheit (114, 115) und/oder der Istwert für den Verfahr- und Spannweg vom Spannwerkzeug (201 a, 201b, 255a, 255b) jeder Spanneinheit (114, 115) dem Sollwert der Spannkraft auf den entsprechenden Teil (1, 2) und/oder des Verfahr- und Spannweges jeder Spanneinheit (114, 115) entspricht.

2. Verfahren nach Anspruch 1, **dadurch gekennzeichnet, dass** der Sollwert für die Spannkraft des verstellbaren Spannwerkzeuges (201a, 201b, 255a, 255b) auf den entsprechenden Teil (1, 2) durch ein Toleranzfeld mit einer Untergrenze (315) und einer Obergrenze (316) und der Sollwert für den zurückzulegenden Verfahr- und Spannweg des Spannwerkzeuges (201a, 201b, 255a, 255b) durch ein Toleranzfeld mit einer Untergrenze (317) und einer Obergrenze (318) für jede Spanneinheit (114, 115) begrenzt vorgegeben wird und dass das verstellbare Spannwerkzeug (201a, 201b, 255a, 255b) in seiner Spannbewegung angehalten und der Teil (1, 2) als Gutteil ausgewertet wird, sofern der Istwert für die Spannkraft auf den Teil (1, 2) und der Istwert für den Verfahr- und Spannweg innerhalb der vorgegebenen Toleranzgrenzen liegt, und das Spannwerkzeug (201a, 201b, 255a, 255b) in seiner Spannbewegung angehalten und der Teil (1, 2) als Schlechtteil ausgewertet wird, sofern der Istwert für die Spannkraft auf den Teil (1, 2) und/oder der Istwert für den Verfahr- und Spannweg außerhalb der vorgegebenen Toleranzgrenzen liegt.

3. Verfahren nach Anspruch 2, **dadurch gekennzeichnet, dass** die Teile (1, 2) miteinander gefügt werden, sofern in der Spannposition eines jeden Teiles (1, 2) der Istwert der Spannkraft auf den entsprechenden Teil (1, 2) vom Spannwerkzeug (201a, 201b, 255a) jeder Spanneinheit (114, 115) und der Istwert für den Verfahr- und Spannweg vom Spannwerkzeug (201a, 201b, 255a, 255b) jeder Spanneinheit (114, 115) innerhalb der vorgegebenen Toleranzgrenzen für den Sollwert der Spannkraft auf den entsprechenden Teil (1, 2) und des Verfahr- und Spannweges jeder Spanneinheit (114, 115) liegen.

4. Verfahren nach Anspruch 2, **dadurch gekennzeichnet, dass** die Untergrenze (315, 317) und/oder Obergrenze (316, 318) der Spannkraft und/oder des Verfahr- und/oder Spannweges vor der Inbetriebnahme der Fügestation (43; 128) empirisch ermittelt und eingestellt werden.

5. Verfahren nach Anspruch 2, **dadurch gekennzeichnet, dass** die Untergrenze (315, 317) und/oder Obergrenze (316, 318) der Spannkraft und/oder des Verfahr- und/oder Spannweges anhand von in zumindest einem vorangegangenen Spann- und/oder Fügevorgang elektronisch erfassten Daten betreffend Spannkraft und/oder Verfahr- und/oder Spannweges und/oder Qualitätsgüte der Fügeverbindung, beispielsweise der Schweißnaht, verändert und selbsttätig eingestellt werden.

6. Verfahren nach Anspruch 2, **dadurch gekennzeichnet, dass** die Untergrenze (315, 317) und/oder Obergrenze (316, 318) der Spannkraft und/oder des Verfahr- und/oder Spannweges anhand von an zumindest einer gefügten Baugruppe (122, 147) ermittelten Abweichungen eines Qualitätsmerkmals, insbesondere der Maßhaltigkeit, der gefügten Baugruppen (122, 147) korrigiert werden.

7. Verfahren nach Anspruch 2, **dadurch gekennzeichnet, dass** von der Auswerteeinheit (38) aus dem ausgeübten Drehmoment bzw. den Motorstrom eines Elektromotors, insbesondere Schrittschalt- oder Servomotor, vom Linearantrieb (184a, 184b; 285a, 285b) der Istwert der Spannkraft ermittelt und ausgewertet wird.

8. Verfahren nach Anspruch 2, **dadurch gekennzeichnet, dass** während der Verfahr- und/oder Spannbewegung des(r) verstellbaren Spannwerkzeuge(s) von der Auswerteeinheit (38) aus dem ausgeübten Drehmoment bzw. den Motorstrom eines Elektromotors vom Linearantrieb (184a, 184b; 285a, 285b) die auftretende Reibkraft (322) ermittelt, ausgewertet und anhand deren die Untergrenze (315, 317) und Obergrenze (316, 318) der Spannkraft korrigiert wird.

9. Verfahren nach Anspruch 1, **dadurch gekennzeichnet, dass** der Teil (1 bis 3b; 340 bis 342) mittels dem zwischen einer den Teil (1, 2) freigebenden Ausgangsposition (AP) und einer den Teil (1, 2) spannenden Spannposition (SP), durch einen elektronisch geregelten Linearantrieb (184a, 184b; 285a, 285b) verstellbaren Spannwerkzeug (201a, 201b, 255a, 255b) gegen ein ortsfest angeordnetes, weiteres Spannwerkzeug (201a, 201b, 255a, 255b) gespannt wird.

10. Verfahren nach Anspruch 1, **dadurch gekennzeichnet, dass** vorerst beide Spannwerkzeuge (201a, 201b, 255a, 255b) aus der Ausgangsposition (AP) in eine Zwischenposition (ZP) und von dieser zumindest eines der beiden Spannwerkzeuge (201a, 201b, 255a, 255b) in die Spannposition (SP) verfahren werden, wobei das eine Spannwerkzeug (201a, 201b, 255a, 255b) während der Zustellbewegung des anderen Spannwerkzeug (201a, 201b, 255a, 255b) in der Zwischenposition (ZP) verharrt, sodass der Teil (1, 2) mittels dem verstellbaren Spannwerkzeug (201a, 201b, 255a, 255b) gegen das in der Zwischenposition (ZP) verharrende Spannwerkzeug (201a, 201b, 255a, 255b) gespannt wird.

11. Verfahren nach Anspruch 1, **dadurch gekennzeichnet, dass** vorerst beide Spannwerkzeuge (201a, 201b, 255a, 255b) aus der den Teil (1 bis 3b; 340 bis 342) freigebenden Ausgangsposition (AP) in eine Zwischenposition (ZP) und von dieser beide Spannwerkzeuge (201a, 201b, 255a, 255b) gleichsinnig und synchron zueinander verstellt werden und der Teil (1 bis 3b; 340 bis 342) zwischen den Spannwerkzeugen (201a, 201b, 255a, 255b) und gegenüber die Fügestation (43; 128) zentrisch gespannt wird.

12. Verfahren nach Anspruch 10 oder 11, **dadurch gekennzeichnet, dass** die Zwischenposition (ZP) zwischen der Ausgangs- und Spannposition (AP, SP) des (der) Spannwerkzeuge(s) definiert und in dieser der Teil (1, 2) ergriffen wird und dass das (die) Spannwerkzeug(e) aus der Ausgangsposition (AP) bis knapp vor die Zwischenposition (ZP) im Eilgang beschleunigt und bis hin zur Zwischenposition (ZP) verzögert, sodann von der Zwischenposition (ZP) beginnend mit gegenüber dem Eilgang reduzierter Verfahrgeschwindigkeit verfahren wird (werden) bis eine Anschlagfläche des(r) Spannwerkzeuge(s) gegen den Teil (1, 2) anliegt(en), worauf die Verfahrgeschwindigkeit des (der) in die Spannposition (SP) verfahrenden Spannwerkzeuge(s) in Abhängigkeit von der Änderung der Spannkraft geregelt wird.

13. Verfahren nach Anspruch 10 oder 11, **dadurch gekennzeichnet, dass** die Verfahrgeschwindigkeit des (der) Spannwerkzeuge(s) von der Zwischenposition (ZP) zur Spannposition (SP) in Abhängigkeit von der Änderung der Spannkraft während dem Spannvorgang eingestellt wird.

14. Verfahren nach einem der Ansprüche 12 oder 13, **dadurch gekennzeichnet, dass** das (die) Spannwerkzeug(e) in der Zwischenposition (ZP) kurzzeitig angehalten werden.

15. Verfahren nach Anspruch 1, **dadurch gekennzeichnet, dass** die beiden Teile (1, 2) während deren Spannvorgänge mittels zumindest einem der Spannwerkzeuge (201a, 201b, 255a, 255b) der ersten und zweiten Spanneinheit (114, 115) jeweils in eine erste Raumrichtung und über eine Höhenpositioniervorrichtung (200a, 200b; 288a, 288b) in eine zweite Raumrichtung zueinander positioniert sowie in eine Bereitstellungsposition zwischen zwei zusammenwirkende Spannwerkzeuge (262a, 262b) einer dritten Spanneinheit (116) verbracht werden, worauf die zwischen den zusammenwirkenden Spannwerkzeugen (262a, 262b) der dritten Spanneinheit (116) befindlichen Teile (1, 2) mittels wenigstens einem aus einer die Teile (1, 2) freigebenden Ausgangsposition (AP) in eine die Teile (1, 2) spannenden Spannposition (SP), durch einen elektronisch geregelten Linearantrieb (186a, 186b) verstellbaren Spannwerkzeug (262a, 262b) der dritten Spanneinheit (116) mit einer Spannkraft gegeneinander angepresst werden, sodass die Teile (1, 2) während dem Spannvorgang des Spannwerkzeuges (262a, 262b) der dritten Spanneinheit (116) in eine dritte Raumrichtung zueinander positioniert werden und dass nach dem Positionieren der Teile (1, 2) in die drei Raumrichtungen, diese in Position gehalten und miteinander gefügt werden.

## Claims

1. Method of producing a connection between parts (1, 2) in a joining station (43) of a production plant (32), whereby the first part (1) is moved into a ready position (270; 270") between two co-operating clamping tools (201a, 201b) of a first clamping unit (114), after which at least one clamping tool (201a, 201b) of the first clamping unit (114) which can be displaced from an initial position (AP) releasing the first part (1) into a clamping position (SP) clamping the first part (1) by an electronically controlled linear drive (184a, 184b) is clamped, and the second part (2) is moved into a ready position (270'; 270") between two co-operating clamping tools (255a, 255b) of a second clamping unit (115), and then at least one clamping tool (255a, 255b) of the second clamping unit (115) which can be displaced from an initial position (AP) releasing the second part (2) into a clamping position (SP) clamping the second part (2) by means of an electronically controlled linear drive (184a, 184b) is clamped, and the parts (1, 2) are then joined to one another in at least part-portions along a joining point (17a to 19b) disposed between them, **characterised in that** the displacement and clamping path of the displaceable clamping tool (201a, 201b, 255a, 255b) of each clamping unit (114, 115) travelled between the initial and clamping positions (AP, SP) and/or the clamping force of the displaceable clamping tool (201a, 201b, 255a, 255b) on the corresponding part (1, 2) of each clamping unit (114, 115) is detected, preferably continuously, as an actual value and transmitted to an electronic evaluation unit (38) so that a desired/actual value comparison of the clamping force on the corresponding part (1, 2) and/or of the displacement and clamping path of the displaceable clamping tool (201a, 201b, 255a, 255b) is run in it for each clamping unit (114, 115), preferably on a continuous basis, and **in that** the parts (1, 2) are joined to one another if the actual value of the clamping force applied to the corresponding part (1, 2) by the clamping tool (201a, 201b, 255a, 255b) of each clamping unit (114, 115) and/or the actual value for the displacement and clamping path of the clamping tool (201a, 201b, 255a, 255b) of each clamping unit (114, 115) corresponds to the desired value of the clamping force on the corresponding part (1, 2) and/or the displacement and clamping path of each clamping unit (114, 115) when each part (1, 2) is in the clamping position.

2. Method as claimed in claim 1, **characterised in that** the desired value for the clamping force of the displaceable clamping tool (201a, 201b, 255a, 255b) on the corresponding part (1, 2) is predefined within limits by a tolerance field with a lower limit (315) and an upper limit (316) and the desired value for the displacement and clamping path to be travelled by the clamping tool (201a, 201b, 255a, 255b) is predefined within limits by a tolerance field with a lower limit (317) and an upper limit (318) for every clamping unit (114, 115) and **in that** the displaceable clamping tool (201 a, 201b, 255a, 255b) is halted during its clamping movement and the part (1, 2) is evaluated as being a good part if the actual value for the clamping force on the part (1, 2) and the actual value for the displacement and clamping path lie within the predefined tolerance limits, and the clamping tool (201a, 201b, 255a, 255b) is halted during its clamping movement and the part (1, 2) is evaluated as being a bad part if the actual value for the clamping force on the part (1, 2) and/or the actual value for the displacement and clamping path lie outside the predefined tolerance limits.

3. Method as claimed in claim 2, **characterised in that** the parts (1,2) are joined to one another if, when each part (1, 2) is in the clamping position, the actual value of the clamping force applied by the clamping tool (201a, 201b, 255a, 255b) of each clamping unit (114, 115) to the corresponding part (1, 2) and the actual value for the displacement and clamping path of the clamping tool (201a, 201b, 255a, 255b) of each clamping unit (114, 115) lie within the predefined tolerance limits for the desired value of the clamping force on the corresponding part (1, 2) and the displacement and clamping path of each clamping unit (114, 115).

4. Method as claimed in claim 2, **characterised in that** the lower limit (315, 317) and/or upper limit (316, 318) of the clamping force and/or of the displacement and/or clamping path are empirically determined and set before the joining station (43; 128) is switched on.

5. Method as claimed in claim 2, **characterised in that** the lower limit (315, 317) and/or upper limit (316, 318) of the clamping force and/or of the displacement and/or clamping path are amended and automatically set on the basis of data relating to the clamping force and/or displacement and/or clamping path and/or quality of the join, for example the weld seam, electronically detected during at least one previous clamping and/or joining operation.

6. Method as claimed in claim 2, **characterised in that** the lower limit (315, 317) and/or upper limit (316, 318) of the clamping force and/or the displacement and/or clamping path are corrected on the basis of variances from a quality characteristic, in particular the accuracy to gauge, of joined units (122, 147) detected in respect of at least one joined unit (122, 147).

7. Method as claimed in claim 2, **characterised in that** the evaluation unit (38) determines and evaluates the actual value of the clamping force on the basis of the expended torque or motor current of an electric motor of the linear drive (184a, 184b; 285a, 285b), in particular a stepper motor or servo motor.

8. Method as claimed in claim 2, **characterised in that**, during the displacement and/or clamping movement of the displaceable tool(s), the evaluation unit (38) determines and evaluates the frictional force (322) induced by the expended torque or motor current of an electric motor of the linear drive (184a, 184b; 285a, 285b) and corrects the lower limit (315, 317) and upper limit (316, 318) of the clamping force on this basis.

9. Method as claimed in claim 1, **characterised in that** the part (1 to 3b; 340 to 342) is clamped against another, stationary clamping tool (201a, 201b, 255a, 255b) by means of the clamping tool (201a, 201b, 255a, 255b) which can be displaced between an initial position (AP) releasing the part (1, 2) and a clamping position (SP) clamping the part (1,2) by an electronically controlled linear drive (184a, 184b; 285a, 285b).

10. Method as claimed in claim 1, **characterised in that** the two clamping tools (201a, 201 b, 255a, 255b) are firstly moved out of the initial position (AP) into an intermediate position (ZP) and from it, at least one of the two clamping tools (201a, 201b, 255a, 255b) is moved into the clamping position (SP), and one clamping tool (201 a, 20 1 b, 255a, 255b) remains in the intermediate position (ZP) during the positioning movement of the other clamping tool (201a, 201b, 255a, 255b) so that the part (1, 2) is clamped against the clamping tool (201 a, 201b, 255a, 255b) remaining in the intermediate position (ZP) by means of the displaceable clamping tool (201a, 201b, 255a, 255b).

11. Method as claimed in claim 1, **characterised in that** the two clamping tools (201a, 201b, 255a, 255b) are firstly moved out of the initial position (AP) releasing the part (1 to 3b; 340 to 342) into an intermediate position (ZP) and from it, the two clamping tools (201a, 201b, 255a, 255b) are moved in the same direction and synchronously with one another, and the part (1 to 3b; 340 to 342) is clamped between the clamping tools (201a, 201b, 255a, 255b) and centrally with respect to the joining station (43; 128).

12. Method as claimed in claim 10 or 11, **characterised in that** the intermediate position (ZP) between the initial and clamping positions (AP, SP) of the clamping tool(s) is defined and in it, the part (1, 2) is gripped, and the clamping tool(s) is or are accelerated in a rapid traverse from the initial position (AP) to just short of the intermediate position (ZP) and decelerated as far as the intermediate position (ZP), and is or are then moved from the intermediate position (ZP) at a displacement speed lower than that of the rapid traverse until a stop surface of the clamping tool(s) lies against the part (1, 2), after which the displacement speed of the clamping tool(s) as they are moved into the clamping position is regulated as a function of the change in clamping force.

13. Method as claimed in claim 10 or 11, **characterised in that** the displacement speed of the clamping tool(s) from the intermediate position (ZP) to the clamping position (SP) is adjusted as a function of the change in clamping force during the clamping operation.

14. Method as claimed in one of claims 12 or 13, **characterised in that** the clamping tool(s) is or are briefly halted in the intermediate position (ZP).

15. Method as claimed in claim 1, **characterised in that**, during their clamping operations, the two parts (1, 2) are positioned with respect to one another in a first spatial direction by means of at least one of the clamping tools (201a, 201b, 255a, 255b) of the first and second clamping unit (114, 115) respectively and in a second spatial direction by means of a vertical positioning device (200a, 200b; 288a, 288b), and are moved into a ready position between two co-operating tools (262a, 262b) of a third clamping unit (116), after which the parts (1, 2) disposed between the co-operating clamping tools (262a, 262b) of the third clamping unit (116) are pressed against one another with a clamping force by means of at least one clamping tool (262a, 262b) of the third clamping unit (116) which can be displaced from an initial position (AP) releasing the parts (1, 2) into a clamping position (SP) clamping the parts (1, 2) by an electronically regulated linear drive (186a, 186b) so that the parts (1, 2) are positioned in a third spatial direction with respect to one another during the clamping operation of the clamping tool (262a, 262b) and, having been positioned in the three spatial directions, the parts (1, 2) are held in this position and joined to one another.

## Revendications

1. Procédé de fabrication d'une liaison entre des parties (1, 2) dans une station d'assemblage (43) d'une installation de production (32), dans lequel la première partie (1) est amenée dans une position de mise à disposition (270; 270") entre deux outils de serrage coopérants (201a, 201b) d'une première unité de serrage (114) et est serrée ensuite au moyen d'au moins un outil de serrage (201a, 201b) de la première unité de serrage (114) déplaçable d'une position de départ (AP) libérant la première partie (1) en une position de serrage (SP) serrant la première partie (1), par un entraînement linéaire à réglage électronique (184a, 184b), et la deuxième partie (2) est amenée dans une position de mise à disposition (270'; 270") entre deux outils de serrage coopérants (255a, 255b) d'une deuxième unité de serrage (115) et est serrée ensuite au moyen d'au moins un outil de serrage (255a, 255b) de la deuxième unité de serrage (115) déplaçable d'une position de départ (AP) libérant la deuxième partie (2) en une position de serrage (SP) serrant la deuxième partie (2), par un entraînement linéaire à réglage électronique (184a, 184b), et ensuite les parties (1, 2), à un emplacement d'assemblage (17a à 19b) réalisé entre celles-ci, sont assemblées au moins dans des sections partielles l'une avec l'autre, **caractérisé en ce que** le chemin de déplacement et de serrage parcouru entre la position de départ et de serrage (AP, SP) de l'outil de serrage déplaçable (201a, 201b, 255a, 255b) de chaque unité de serrage (114, 115) et/ou la force de serrage de l'outil de serrage déplaçable (201a, 201b, 255a, 255b) sur la partie correspondante (1, 2) de chaque unité de serrage (114, 115) est détecté de préférence continuellement comme valeur réelle et est transmise à une unité d'évaluation électronique (38), ensuite, dans celle-ci, pour chaque unité de serrage (114, 115), une comparaison de valeurs de consigne-réelle de la force de serrage sur la partie correspondante (1, 2) et/ou du chemin de déplacement et de serrage de l'outil de serrage déplaçable (201 a, 201b, 250a, 255b) est exécutée de préférence continuellement, et **en ce que** les parties (1, 2) sont assemblées dans la mesure où en position de serrage de chacune des parties (1, 2), la valeur réelle de la force de serrage sur la partie correspondante (1, 2) de l'outil de serrage (201a, 201b, 255a, 255b) de chaque unité de serrage (114, 115) et/ou la valeur réelle pour le chemin de déplacement et de serrage de l'outil de serrage (201a, 201b, 255a, 255b) de chaque unité de serrage (114, 115) correspond à la valeur de consigne de la force de serrage sur la partie correspondante (1, 2) et/ou du chemin de déplacement et de serrage de chaque unité de serrage (114, 115).

2. Procédé selon la revendication 1, **caractérisé en ce que** la valeur de consigne pour la force de serrage de l'outil de serrage déplaçable (201a, 201b, 255a, 255b) sur la partie correspondante (1, 2) est prédéfinie d'une manière limitée par un champ de tolérance avec une limite inférieure (315) et une limite supérieure (316) et la valeur de consigne pour le chemin de déplacement et de serrage à parcourir de l'outil de serrage (201a, 201b, 255a, 255b) par un champ de tolérance avec une limite inférieure (317) et une limite supérieure (318) pour chaque unité de serrage (114, 115), et **en ce que** l'outil de serrage déplaçable (201a, 201b, 255a, 255b) est arrêté dans son mouvement de serrage, et la partie (1, 2) est évaluée comme partie acceptée dans la mesure où la valeur réelle pour la force de serrage sur la partie (1, 2) et la valeur réelle pour le chemin de déplacement et de serrage se situe à l'intérieur des limites de tolérance prédéfinies, et que l'outil de serrage (201a, 201 b, 255a, 255b) est arrêté dans son mouvement de serrage, et la partie (1, 2) est évaluée comme partie défectueuse dans la mesure où la valeur réelle pour la force de serrage sur la partie (1, 2) et/ou la valeur réelle pour le chemin de déplacement et de serrage se situe à l'extérieur des limites de tolérance prédéfinies.

3. Procédé selon la revendication 2, **caractérisé en ce que** les parties (1, 2) sont assemblées dans la mesure où en position de serrage de chacune des parties (1, 2), la valeur réelle de la force de serrage sur la partie correspondante (1, 2) de l'outil de serrage (201a, 201b, 255a, 255b) de chaque unité de serrage (114, 115) et la valeur réelle pour le chemin de déplacement et de serrage de l'outil de serrage (201a, 201b, 255a, 255b) de chaque unité de serrage (114, 115) se situent à l'intérieur des limites de tolérance prédéfinies pour la valeur de consigne de la force de serrage sur la partie correspondante (1, 2) et du chemin de déplacement et de serrage de chaque unité de serrage (114, 115).

4. Procédé selon la revendication 2, **caractérisé en ce que** la limite inférieure (315, 317) et/ou la limite supérieure (316, 318) de la force de serrage et/ou du chemin de déplacement et/ou de serrage sont déterminées de manière empirique et réglées avant la mise en service de la station d'assemblage (43; 128).

5. Procédé selon la revendication 2, **caractérisé en ce que** la limite inférieure (315, 317) et/ou la limite supérieure (316, 318) de la force de serrage et/ou du chemin de déplacement et/ou de serrage sont modifiées et réglées automatiquement à l'aide de données détectées électroniquement dans au moins une opération de serrage et/ou d'assemblage précédentes, concernant la force de serrage et/ou le chemin de déplacement et/ou de serrage et/ou la qualité de l'assemblage, par exemple du cordon de soudure.

6. Procédé selon la revendication 2, **caractérisé en ce que** la limite inférieure (315, 317) et/ou la limite supérieure (316, 318) de la force de serrage et/ou du chemin de déplacement et/ou de serrage sont corrigées à l'aide d'écarts d'une caractéristique de qualité déterminés à au moins un groupe de construction assemblé (122, 147), en particulier le respect des dimensions prescrites, des groupes de construction assemblés (122, 147).

7. Procédé selon la revendication 2, **caractérisé en ce que** par l'unité d'évaluation (38), à partir du couple de rotation exercé respectivement le courant d'un moteur électrique, en particulier d'un moteur pas-à-pas ou d'un d'un servo-moteur, la valeur réelle de la force de serrage est déterminée et évaluée par l'entraînement linéaire (184a, 184b; 285, 285b).

8. Procédé selon la revendication 2, **caractérisé en ce que** pendant le mouvement de déplacement et/ou de serrage du ou des outils de serrage déplaçables, par l'unité d'évaluation (38), à partir du couple de rotation exercé respectivement le courant d'un moteur électrique, est déterminée, évaluée par l'entraînement linéaire (184a, 184b; 285a, 285b) la force de frottement produite (322), et à l'aide de celle-ci, la limite inférieure (315, 317) et la limite supérieure (316, 318) de la force de serrage est corrigée.

9. Procédé selon la revendication 1, **caractérisé en ce que** la partie (1 à 3b; 340 à 342) est serrée au moyen de l'outil de serrage (201a, 201b, 255a, 255g) déplaçable entre une portion de départ (AP) libérant la partie (1, 2) et une position de serrage (SP) serrant la partie (1, 2), par un entraînement linéaire à réglage électronique (184a, 184b; 285a, 285b) contre un autre outil de serrage (201a, 201b, 255a, 255b) disposé fixe.

10. Procédé selon la revendication 1, **caractérisé en ce que** tout d'abord les deux outils de serrage (201a, 201b, 255a, 255b) sont déplacés de la position de départ (AP) en une position intermédiaire (ZP) et de celle-ci au moins un des deux outils de serrage (201, 201b, 255a, 255b) dans la position de serrage (SP), où un outil de serrage (201a, 201b, 255a, 255b), pendant le mouvement de rapprochement de l'autre outil de serrage (201a, 201b, 255a, 255b) reste dans la position intermédiaire (ZP) de sorte que la partie (1, 2) est serrée au moyen de l'outil de serrage déplaçable (201a, 201b, 255a, 255b) contre l'outil de serrage (201a, 201b, 255a, 255b) restant dans la position intermédiaire (ZP).

11. Procédé selon la revendication 1, **caractérisé en ce que** tout d'abord les deux outils de serrage (201a, 201b, 255a, 255b) sont déplacés de la position de départ (AP) libérant la partie (1 à 3b; 340 à 342) en une position intermédiaire (ZP), et de celle-ci les deux outils de serrage (201a, 201b, 255a, 255b) dans le même sens et d'une manière synchronisée, et la partie (1 à 3b; 340 à 342) est serrée d'une manière centrée entre les outils de serrage (201a, 201b; 255a, 255b) et par rapport à la station d'assemblage (43; 128).

12. Procédé selon la revendication 10 ou 11, **caractérisé en ce que** la position intermédiaire (ZP) entre la position de départ et de serrage (AP), (SP) du ou des outils de serrage est définie, et dans celle-ci la partie (1, 2) est saisie, et **en ce que** le ou les outils de serrage sont accélérés en marche rapide de la position de départ (AP) jusqu'à peu avant la position intermédiaire (ZP) et sont retardés jusqu'à la position intermédiaire (ZP), sont ensuite déplacés de la position intermédiaire (ZP) en commençant par une vitesse de déplacement réduite par rapport à la marche rapide jusqu'à ce qu'une face de butée du ou des outils de serrage s'applique à la partie (1, 2), à la suite de quoi la vitesse de déplacement du ou des autres outils de serrage amenés en position de serrage (SP) est réglée en fonction de la modification de la force de serrage.

13. Procédé selon la revendication 10 ou 11, **caractérisé en ce que** la vitesse de déplacement du ou des outils de serrage de la position intermédiaire (ZP) à la position de serrage (SP) est réglée en fonction de la modification de la force de serrage pendant l'opération de serrage.

14. Procédé selon l'une des revendications 12 ou 13, **caractérisé en ce que** le ou les outils de serrage sont arrêtés brièvement dans la position intermédiaire (ZP).

15. Procédé selon la revendication 1, **caractérisé en ce que** les deux parties (1, 2) pendant leurs opérations de serrage, sont positionnées l'une relativement à l'autre par au moins un des outils de serrage (201a, 201b, 255a, 255b) de la première et deuxième unité de serrage (114, 115) respectivement dans une première direction spatiale et par un dispositif de positionnement en hauteur (200a, 200b; 288a, 288b) en une deuxième direction spatiale et sont amenés dans une position de mise à disposition entre deux outils de serrage coopérants (262a, 262b) d'une troisième unité de serrage (116), à la suite de quoi les parties (1, 2) se trouvant entre les outils de serrage coopérants (262a, 262b) de la troisième unité de serrage (116) sont pressées l'une contre l'autre par au moins un outil de serrage (262a, 262b) déplaçable d'une position de départ (AP) libérant les parties (1, 2) en une position de serrage (SP) serrant les parties (1, 2), par un entraînement linéaire réglé électroniquement (186a, 186b), de la troisième unité de serrage (116) avec une force de serrage de sorte que les parties (1, 2), pendant l'opération de serrage de l'outil de serrage (262a, 262b) de la troisième unité de serrage (116) sont positionnées dans une troisième direction spatiale l'une relativement à l'autre, et **en ce qu'**après le positionnement des parties (1, 2) dans les trois directions spatiales, celles-ci sont maintenues en position et sont assemblées.
